# EUROPÄISCHE PATENTANMELDUNG

(11) **EP 3 725 284 A1**
(43) Veröffentlichungstag der Anmeldung: **21.10.2020**
(21) Anmeldenummer: 20174260.8
(22) Anmeldetag: 13.09.2017
(51) Int. Cl.: A61H 19/00, A61H 9/00, A61H 23/00

(54) **STIFTFÖRMIGE STIMULATIONSVORRICHTUNG**

(30) Priorität: 05.10.2016 DE 102016118911
(62) Teilanmeldung aus: 17190856.9
(71) Anmelder: Novoluto GmbH, 10249 Berlin (DE)
(72) Erfinder: LENKE, Michael, 94526 Metten (DE)
(74) Vertreter: Samson & Partner Patentanwälte mbB

(57) **Zusammenfassung**

Die Erfindung betrifft eine Stimulationsvorrichtung (1) für die Klitoris (12), aufweisend das Folgende: ein Gehäuse (8), welches im Wesentlichen stiftförmig ausgebildet ist; eine Druckfelderzeugungseinrichtung (2) mit einer Antriebseinheit (6), die in einem Hohlraum (10) ein Druckfeld aus sich zeitlich abwechselnden Unter- und Überdrücken erzeugt, und eine Steuereinrichtung (7), welche die Antriebseinheit (6) ansteuert; wobei das Gehäuse (8) eine Längsachse (80) aufweist, die sich von einem vorderen Ende (90) des Gehäuses (8) bis zu einem hinteren Ende (91) des Gehäuses (8) erstreckt, und wobei in dem vorderen Ende (90) des Gehäuses (8) eine Öffnung (42) zum Aufsetzen über die Klitoris (12) vorgesehen ist, und wobei der Hohlraum (10) im Inneren des Gehäuses (8) angeordnet ist und mit der Öffnung (42) des Gehäuses (8) verbunden ist.

## Beschreibung

Die vorliegende Erfindung betrifft eine stiftförmige Stimulationsvorrichtung für erogene Zonen, insbesondere für die Klitoris, Systeme mit einer Stimulationsvorrichtung, sowie Verfahren zur sexuellen Stimulation.

Die erogenen Zonen des menschlichen Körpers können mit einer Vielzahl von Hilfsmitteln (sexuell) stimuliert werden. So werden beispielsweise Vibratoren verwendet, um mittels direkter Berührung einen Reiz auf einen bestimmten Hautbereich auszuüben. Diese Form der Stimulation kann jedoch zu Irritationen oder Hautreizungen führen. Auch kann ein direkter Kontakt der Intimzone mit derartigen Hilfsmitteln aus individuellen Gründen, beispielsweise der Hygiene oder wegen persönlicher Vorbehalte, nicht gewünscht sein.

Insbesondere die direkte Stimulation der Klitoris, beispielsweise mit einem Auflegevibrator, ist problembehaftet. So ist bei der Frau die Klitoris üblicherweise die empfindlichste erogene Zone. Die gesamte Klitoris ist stark mit Nervenendungen ausgestattet, wodurch diese besonders berührungsempfindlich und empfänglich für sexuelle Reize ist. Hier ist insbesondere die Klitoriseichel, in der sich die Nervenstränge der beiden Schenkel treffen, hervorzuheben. So kommt es einerseits bei häufiger Anwendung eines Auflegevibrators zur direkten Stimulation zu Gewöhnungseffekten bzw. zur Konditionierung der stimulierten erogenen Zone, während andererseits die erstmaligen Anwendungen eines derartigen Gerätes eine gewisse Einübung bzw. Eingewöhnung erfordern.

Weiter haben im Jahre 2006 durchgeführte medizinische Studien die weibliche Klitoris als maßgeblichen Ausgangspunkt des weiblichen Klimax bestimmt und erstmals die unterschiedlichen Empfindungsqualitäten von klitoralem (und vaginalem) Orgasmus neurologisch nachgewiesen, wie die Zeitschrift "Spiegel" in seiner Ausgabe aus 06/2006 auf den Seiten 136 bis 138 in dem Artikel für Frauen "Schmerz und Glückseligkeit" erläutert. So gilt nach der jüngeren medizinischen Forschung die Stimulation der Klitoris, und nicht der Vagina, als Ausgangspunkt der sexuellen Erregung der Frau und damit als Schlüssel zum weiblichen "sexuellen Vergnügen".

Dabei ist weiter die Empfindlichkeit der menschlichen erogenen Zonen, beispielsweise der Klitoris, der inneren und äußeren Labia oder der Brustwarzen, individuell sehr unterschiedlich. Die Person kann so empfindlich sein, dass eine direkte Stimulierung erst nach längerem Vorspiel, und auch dann nur sehr zart, oder gar nicht in Betracht kommt. Weiter kann sich die Empfindlichkeit der entsprechenden Zone von Situation zu Situation oder sogar während eines Sexualakts stark verändern.

Aus vorgenannten Gründen sind verschiedene indirekte Stimulationsformen als Alternative zur direkten Stimulation gängige Praxis.

Zur indirekten Stimulation von erogenen Zonen und insbesondere der Klitoris werden herkömmliche Vakuumvorrichtungen verwendet, um die erogenen Zonen der betreffenden Person ohne direkte Berührung des zu stimulierenden Hauptbereichs zu reizen. So sind beispielsweise Vakuumpumpen für die weiblichen primären oder sekundären Geschlechtsorgane bekannt, welche üblicherweise eine Saugglocke zum Aufsetzen und eine Handpumpe aufweisen. Der mit dieser Art von Vorrichtung beispielsweise auf die Klitoris ausgeübte Unterdruck erzeugt einen negativen Druck in der Klitoris selbst, welcher üblicherweise niedriger ist als der systolische Blutdruck. Dieser Druckunterschied führt zu einer Erweiterung der Klitoris und/oder stimuliert den Blutfluss in dem betroffenen Bereich. Diese klitorale vaskulare Blutwallung dient sowohl der Lustförderung durch Steigerung der Empfindlichkeit als auch der optischen und haptischen Manipulation. Auch führt die bessere Durchblutung zu einem erhöhten Austreten von Scheidenfeuchtigkeit, die die Stimulation angenehmer gestaltet. Jedoch ist die manuelle Betätigung der Handpumpe oft lästig oder störend. Zudem kann es auch bei dieser Gerätekategorie durch die langfristigere bzw. ununterbrochene Anwendung von Unterdruck zu Gewöhnungseffekten kommen, die die Wirksamkeit der Vorrichtung auf Dauer einschränken. Zudem reicht eine reine Erhöhung des Blutflusses in der Klitoris oftmals nicht aus, um zum Klimax zu gelangen; somit werden Vakuumpumpen oftmals nur als Vorspiel eingesetzt, um den Klimax mit einer nachfolgenden direkten (Druck-) Massage der erogenen Zone zu erreichen.

Anstelle der manuell betriebenen Vakuumpumpe werden vermehrt auch elektrisch angetriebene Vakuumpumpen verwendet. Als Beispiel hierfür offenbart die WO 2006 / 05 82 91 A2 eine Vorrichtung zur sexuellen Therapie, wobei die Anordnung aus einer röhrenförmigen Saugkammer für die Klitoris, einer elektrischen Vakuumquelle (Vakuumpumpe) und mehreren Luftflussöffnungen besteht. Durch den Betrieb der Vakuumpumpe wird in der Kammer ein andauernder Luftfluss bzw. Luftaustausch im Bereich der Klitoris erzeugt. Dabei wird nachteilhaft die durch den Unterdruck verstärkt auftretende Scheidenfeuchtigkeit abgesaugt, weshalb ein Trocknungseffekt der stimulierten Hautpartien eintritt. Ebenso führt die abgesaugte feuchte Luft zu einer Verschmutzung der strömungstechnisch nachfolgenden Vakuumanordnung, beispielsweise der Vakuumpumpe. So können derartige Anordnungen mit Vakuumpumpen in ihrer Hygiene problematisch sein, da Vakuumpumpe und die zugehörigen Ventile bzw. lufttechnischen Bauteile oftmals Toträume bzw. tote Winkel aufweisen und/oder schwer zu reinigen sind. Weiter dient die Vorrichtung der Therapie der Blutgefäße der Klitoris, und nicht der Stimulation bis zum sexuellen Höhepunkt.

Die US 6 099 463 A offenbart eine Vorrichtung zur Stimulation der Klitoris mit einer röhrenförmigen Saugkammer, einer Vakuumquelle bzw. einer Vakuumpumpe und mehreren Ventilen, mit denen die Größe des Vakuums geregelt wird. Das Vakuum kann hierbei auch in zyklischer Form angewandt werden, um eine Stimulationswirkung zu erzielen, wobei auch bei dieser Vorrichtung aufgrund der Anwendung eines andauernden Vakuums Gewöhnungseffekte zu erwarten sind. Auch hier bestehen die vorstehend erläuterten Nachteile der Hygiene und der Austrocknung der zu stimulierenden Hautpartie. Ebenso ist die drucktechnische Anordnung mit mehreren Ventilen, Vakuumpumpe, etc., relativ komplex.

Die US 6 464 653 B1 offenbart therapeutische Vorrichtungen und Verfahren, welche eine klitorale Blutwallung mit Hilfe eines mit einer Vakuumpumpe erzeugten Vakuums erzeugen, um die Behandlung von Störungen der Klitoris, beispielsweise von Inkontinenz, zu unterstützen. Mit Hilfe eines Steuerventils bzw. Modulators, das mit dem Finger entsprechend abgedeckt werden kann, wird die Höhe des Vakuums in der Saugkammer manuell eingestellt oder variiert. Dies erfordert die Aufmerksamkeit des Benutzers und kann unter Umständen störend oder ablenkend sein. Auch weist diese relativ komplexe Vorrichtung mit weiteren Ventilen die vorstehend erläuterten Nachteile der Hygiene und der Austrocknung auf, wobei die Vorrichtung zudem langfristigen Therapiezwecken und nicht der kurzfristigen sexuellen Stimulation dient.

Die WO 2008 / 02 80 76 A2 offenbart eine therapeutische Vorrichtung für Frauen, welche vornehmlich der Behandlung sexueller Störungen dient. Dabei beinhaltet die Vorrichtung eine Kombination aus indirekter Stimulation mit Hilfe einer Vakuumkammer und direkter Stimulation mit Hilfe mechanischer Vibratoren und Oszillatoren. Diese Vorrichtung wird in der Art eines Pistolengriffs oder eines klassischen Telefonhörers gehalten und handgehabt.

Bei dieser therapeutischen Vorrichtung dient der Unterdruck der Erhöhung des Blutflusses in der Klitoris, während die eigentliche Stimulation bzw. Massage des Hautbereichs mit Hilfe direkter mechanischer Vibrationen/Oszillationen erfolgt. So ist eine Saugglocke zum Aufsetzen auf den zu stimulierenden Hautbereich intern über eine mechanische Verbindung mit einem Motor verbunden. Die Saugglocke wird durch den Motor nach Aktivierung der Vorrichtung erweitert, wobei sich das Volumen der Saugglocke vergrößert. Das resultierende Volumen der Saugglocke und damit die Stärke des Vakuums kann mit Hilfe von Steuerungselementen an der Vorrichtung eingestellt werden. Die durch den Ansaugvorgang in der Vorrichtung verdrängte Luft wird über ein Rohr wieder nach außen abgegeben. Bei dieser Vorrichtung hat das Vakuum nur eine unterstützende Funktion, während die eigentliche Stimulation in direkter Weise erfolgt, was die vorstehend erläuterten Nachteile einer direkten Stimulation nach sich zieht.

Die US 2013 / 001 276 9 A1 offenbart eine Vorrichtung, bei der ein pulsierender Überdruck zur Stimulation als Luftdruckmassage verwendet wird. So erzeugt eine Pumpe bzw. ein Kompressor einen pulsierenden Überdruck, welcher mit Hilfe einer Düse auf die zu stimulierende erogene Zone gerichtet wird. Bei dieser Vorrichtung trocknet die betroffene Hautpartie nachteilhaft stark ab bzw. aus. Ebenso besteht üblicherweise ein Temperaturunterschied zwischen der Temperatur der zugeführten Luft und der Temperatur der zu stimulierenden Hautpartie, was unter Umständen als störend empfunden werden kann. Auch treten bei dieser Vorrichtung die vorstehend erläuterten Probleme der Hygiene auf, wobei in diesem Falle eventuell in der Vorrichtung befindliche Erreger oder Keime oder sonstige Verschmutzungen zudem noch direkt zu dem Intimbereich des Benutzers transportiert werden.

Die US 1 898 652 A offenbart weiter einen "Pulsator", welcher mit einem Luftstrahl arbeitet, um Hautpartien zu massieren.

Die EP 0 365 230 A2 offenbart eine Saugvorrichtung mit einer Saugpumpe, einem Saugventil, und einem Auslassventil.

Die WO 2004/004610 A1 offenbart einen tragbaren Penis-Aneurysma-Verbesserer.

Die US 3 910 262 offenbart eine therapeutische Vorrichtung zum Erzeugen von männlichen und weiblichen Orgasmen.

Die US 2 112 646 offenbart eine Vorrichtung zur Behandlung von Krankheiten von Genitalien.

Die DE 14 63 673 U offenbart eine Massagevorrichtung.

Es haben die vorstehend genannten Vorrichtungen des Stands der Technik den Nachteil gemein, dass die Komplexität der Unterdruck bzw. Überdruck erzeugenden Anordnungen hoch und diese Vorrichtungen hygienische Probleme aufweisen können.

Weiter haben die Vorrichtungen des Stands der Technik den weiteren Nachteil gemein, dass bei länger andauernden bzw. bei kontinuierlichen oder häufig wiederkehrenden Anwendungen von Unterdrücken Gewöhnungseffekte auftreten.

Ein weiterer Nachteil bei einigen der vorstehend beschriebenen Vakuumvorrichtungen besteht darin, dass erstens der Unterdruck mittels eines Regelventils oder einer Vakuumpumpe begrenzt sein muss, und zweitens der Unterdruck mittels einer manuellen Öffnung eines Freigabeventils abgebaut werden sollte, bevor die Saugglocke von der Haut abgelöst wird. Sollte eines der Ventile einen technischen Defekt aufweisen und/oder der Benutzer das Gerät falsch bedienen, so besteht unter Umständen Verletzungsgefahr.

Die DE 10 2013 110 501 A1 offenbart eine Stimulationsvorrichtung, welche sich der vorstehend genannten Probleme annimmt, und die nachstehend im Detail erläutert wird. Der nachstehend erläuterte Stand der Technik der gleichen Anmelderin kann mit seinen Merkmalen mit den Ausführungsformen und Aspekten der vorliegenden Erfindung beliebig kombiniert werden.

Die Figuren 1 bis 3 zeigen die Stimulationsvorrichtung der DE 10 2013 110 501 A1, welche als Handgerät ausgeführt ist. Bei dieser Vorrichtung der DE 10 2013 110 501 A1 wird ein Druckfeld aus Unter- und Überdrücken in einer Kammer (als zweite Kammer 4a bezeichnet) erzeugt, welches insbesondere zur Stimulation der Klitoris geeignet ist.

Im Detail wird bezugnehmend auf Fig. 1 eine Vorderansicht einer ersten Ausführungsform der Stimulationsvorrichtung 100 der DE 10 2013 110 501 A1 erläutert, wobei in Fig. 2 eine perspektivische Ansicht und in Fig. 3 ein Querschnitt der Stimulationsvorrichtung 1 einer ersten Ausführungsform der DE 10 2013 110 501 A1 gezeigt ist.

Diese der Stimulationsvorrichtung la ist ein, vorzugsweise tragbares, Elektro- oder Kleingerät, welches ein Gehäuse 8a, eine Druckfelderzeugungseinrichtung 2, Bedienelemente 71a, eine Anzeige 72a, einen An-/Aus- Schalter 74a, eine Buchse 75a, eine optionale Batterie 76a und eine optionale Beleuchtung 9a aufweist.

Das Gehäuse 8a ist vorzugsweise derart ausgeführt, dass man es mit einer Hand halten kann und es keine scharfen bzw. spitzen Kanten aufweist. Weiter kann das Gehäuse 8a aus einem Kunststoff, beispielsweise Polycarbonat (PC) oder AcrylnitrilButadien-Styrol (ABS), bestehen. Zudem können die Griffbereiche oder auch das gesamte Gehäuse mit einem haptisch vorteilhaften Silikon ergänzt bzw. ausgestaltet sein. Das Gehäuse 8a ist vorzugsweise zumindest wasserabweisend oder spritzwasserfest ausgestaltet, beispielsweise Schutzklasse IP 24.

Ein derartiges an die Form eines Quaders mit Fortsatz oder an die Form eines klassischen Telefonhörers (beispielsweise ein Hörer eines W48 Bakelit Telefonapparates) erinnerndes Gehäuse 8a kann mit der Hand auch ebenso wie ein Telefonhörer gehalten werden. Dabei wird das Gehäuse mit der Hand zumindest weitgehend umschlossen, was eine nicht ergonomische Handhaltung darstellt. Daraus resultiert bei derartigen herkömmlichen Gehäusen die Anforderung, dass diese so ausgestaltet sein müssen, dass diese ein ausreichend großes Ausmaß aufweisen, um ein Umgreifen mit der Hand zu ermöglichen.

Beispielsweise beträgt der Außenumfang (etwa mittig und in Umfangsrichtung gemessen) bei dem Gehäuse 8a des Stands der Technik mehr als 14 cm, um das Umgreifen mit der Hand und damit das Halten der Vorrichtung über der zu stimulierenden erogenen Zone zu ermöglichen. In Folge wird das Gehäuse 8a als sperrig empfunden.

Aus der Größe des Gehäuses resultieren nachteilhaft ein erhöhter Materialaufwand, ein erhöhtes Gewicht und auch erhöhte Werkzeugkosten, beispielsweise für ein Spritzgusswerkzeug für größere Plastikteile.

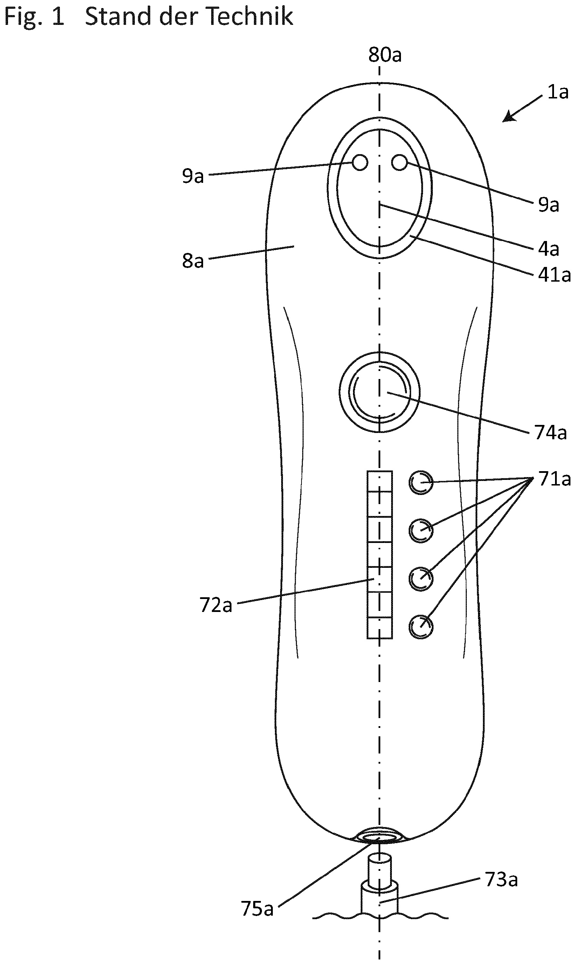

Die Bedienelemente 71a, welche in den Figuren 1 bis 3 gezeigt sind, dienen der Einstellung der Betriebsart des Gerätes, d.h. der Einstellung des Modulationsmusters des Druckfeldes. Die Bedienelemente 71a können beispielsweise als zumindest ein Drucktaster, als zumindest ein Drehschalter, oder als zumindest ein berührungsempfindlicher Schalter ausgeführt sein. Weiter können die Bedienelemente 71a ein optisches Feedback zur Betätigung, beispielsweise mittels in den Schalter integrierter Leuchtdioden (LED), abgeben.

Eine optionale Anzeige 72a dient der Information des Benutzers über den Gerätezustand und/oder den Einstellzustand. Die Anzeige 72a kann beispielsweise aus einer Mehrzahl von Leuchtdioden oder als LCD-Anzeige ausgestaltet sein. Die angezeigten Informationen können beispielsweise der Ladezustand einer optionalen Batterie oder die aktuelle Einstellung des Modulationsmusters sein.

Der An-/Aus- Schalter 74a dient der Aktivierung und Deaktivierung der Stimulationsvorrichtung 1a. Dieser An-/Aus- Schalter 74a kann beispielsweise ein Drucktaster, welcher die Stimulationsvorrichtung 1a bei längerem Drücken ein- bzw. ausschaltet, oder ein einrastender Schiebeschalter sein.

Eine Buchse 75a dient der externen Stromversorgung der Stimulationsvorrichtung 1 über einen externen Stecker 73a, welcher beispielsweise an einen externen Netzadapter angeschlossen ist. Um die Spritzwasserfestigkeit der Stimulationsvorrichtung 1 sicherzustellen, kann vorzugsweise anstelle der Buchse ein magnetisch-induktiver Übertrager vorgesehen sein, welcher eine Leistungsübertragung in die Stimulationsvorrichtung 1 ohne einen elektrisch leitenden Kontakt ermöglicht. Vorzugsweise weist die Stimulationsvorrichtung 1a zudem eine Batterie, beispielsweise einen Nickel-MetallHydrid-Akku (NiMH), für einen kabellosen Betrieb auf. Alternativ kann auch ein (längeres) Stromversorgungskabel aus der Stimulationsvorrichtung herausgeführt sein.

Die Druckfelderzeugungseinrichtung 2a einer Ausführungsform der DE 10 2013 110 501 A1 weist eine erste Kammer 3a im Inneren der Stimulationsvorrichtung 1, eine zweite Kammer 4a zum Aufsetzen auf ein zu stimulierendes Körperteil 11a, und ein Verbindungselement 5a auf, welches die erste Kammer 3a mit der zweiten Kammer 4a verbindet.

Eine Antriebseinheit 6a, beispielsweise ein Elektromotor, treibt über eine Achse 61a und mittels eines Exzenters 62a (oder zusätzlich mittels einer Pleuelstange) die erste Kammer 3a derart an, dass das Volumen der ersten Kammer 3 entsprechend der Drehung der Achse 61a der Antriebseinheit 6a verändert wird.

Eine Steuereinrichtung 7a steuert die Antriebseinheit 6, die Bedienelemente 71a und die Anzeige 72a an. Dabei wird die Steuereinrichtung 7a und die Antriebseinheit 6a von der internen Batterie 76a und/oder der externen Leistungsversorgung 73a mit Leistung versorgt.

Eine optionale Beleuchtung 9a ist an oder in dem Gehäuse 8a vorgesehen. Dabei dient die Beleuchtung 9a vorzugsweise der Beleuchtung des Inneren der zweiten Kammer 4a. Die Beleuchtung 9a kann entweder durch den Benutzer zuschaltbar sein oder bei Aktivierung der Stimulationsvorrichtung 1a automatisch aktiviert sein. Weiter kann die Beleuchtung 9a aus energiesparenden Leuchtdioden ausgebildet sein. Die Beleuchtung kann beispielsweise als Orientierungshilfe für den Benutzer der Stimulationsvorrichtung 1a im Dunkeln oder als zusätzliche optische Stimulation dienen.

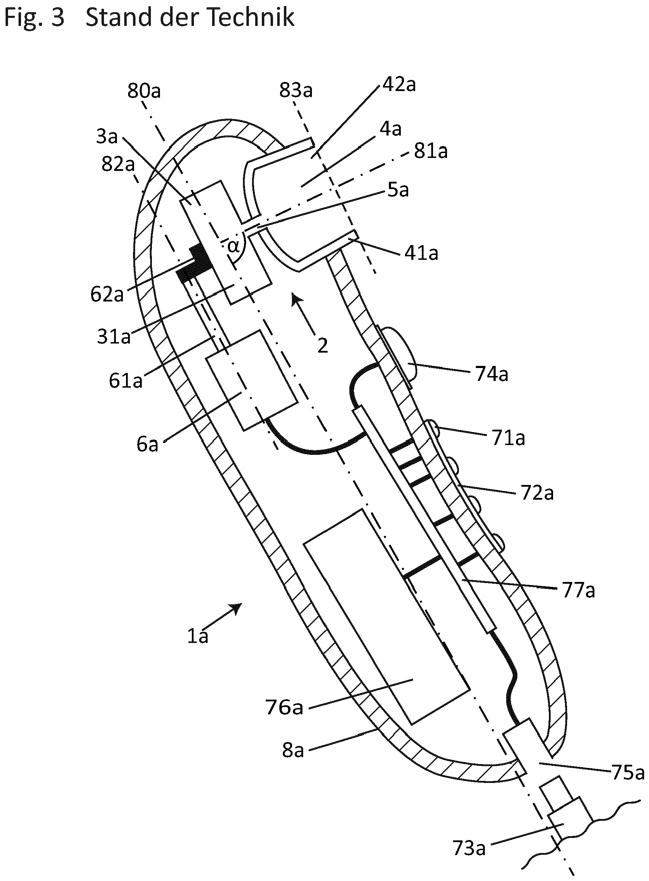

Bezugnehmend auf Fig. 3 sind zur Verdeutlichung der Geometrie des Gehäuses 8a die Längsachse 80a des Gehäuses 8a (welche sich von dem oberen Ende des Gehäuses zu dem unteren Ende des Gehäuses 8 erstreckt), die Ausrichtungsachse 81a der Vorzugsrichtung der Medienströmung bei Betrieb der Antriebseinheit 6a, die Achse bzw. Antriebswelle der Motorachse 82a, und die Öffnungsebene 83a der Öffnung 42a der zweiten Kammer 4a eingezeichnet.

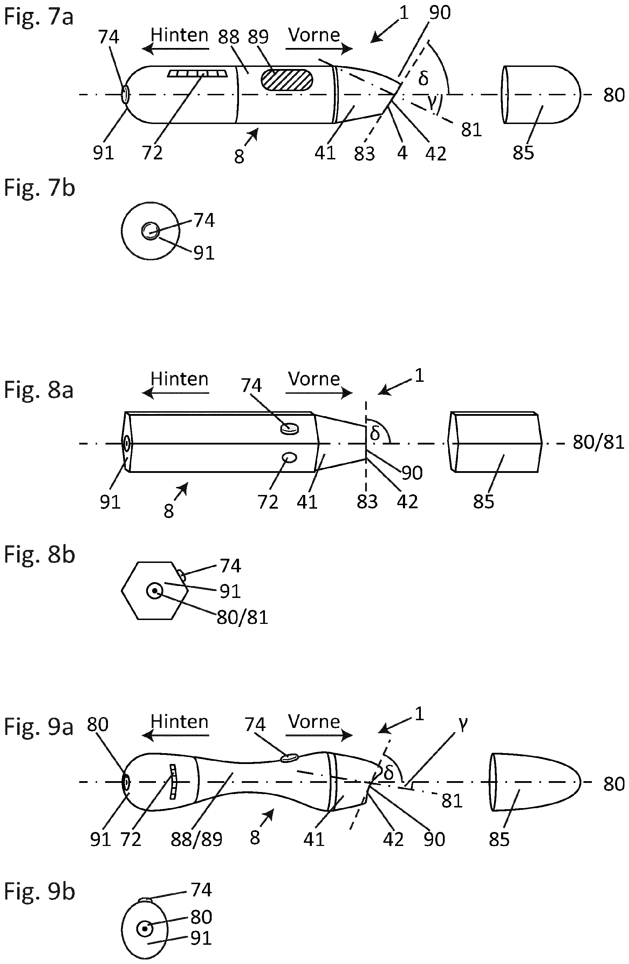

Der Schnittwinkel α zwischen Längsachse 80a und Ausrichtungsachse 81a beträgt etwa 90 Grad. Deshalb wird diese Art der Anordnung im Folgenden als L-Anordnung bezeichnet. Die Öffnungsebene 83a ist annähernd parallel zur Längsachse 80a des Gehäuses 8 angeordnet. Dazu wird angemerkt, dass in den Figuren 1 bis 6 die Vorderseite der Stimulationsvorrichtung 1a aufgrund dieser L-Anordnung eine andere Seite bezeichnet, als bei der erfindungsgemäßen Stimulationsvorrichtung 1 (vgl. beispielsweise Fig. 7 bis 17).

Bei der bestimmungsgemäßen Verwendung der Stimulationsvorrichtung 1a der DE 10 2013 110 501 A1 zur Stimulation der Klitoris muss nun die Benutzerin des Gerätes die Öffnung 42a recht passgenau über die Klitoriseichel stülpen und den Rand der Öffnung 42a auf die die Klitoriseichel umgebende Haut mit einem gewünschten Grad an Dichtigkeit auflegen (womit beispielsweise auch ein Spalt zwischen der betreffenden Hautpartie und dem Rand der Öffnung verbleiben kann).

Dabei entsteht aufgrund der Anatomie der Nutzerin und der vorstehend erläuterten L-Anordnung eine Halteposition der Hand, die nach Erkenntnissen der Erfinder regelmäßig als nicht ergonomisch und als unkomfortabel empfunden wird.

Auch die genaue Positionierung der Öffnung der Stimulationsvorrichtung der DE 10 2013 110 501 A1 über der (annähernd punktförmigen) Klitoriseichel stellt bei den herkömmlichen Vorrichtungen einen problembehafteten Vorgang für die Nutzerinnen dar, da die Stimulationswirkung von der "passgenauen" Positionierung der Öffnung stark abhängig ist. So tasten sich die Nutzerinnen regelmäßig an die optimale Position heran, womit ein erheblicher manueller Aufwand verbunden ist, was als störend empfunden wird.

Insbesondere wird die Nutzerin regelmäßig den Anpressdruck der Stimulationsvorrichtung 1a auf die die Klitoriseichel umgebende Haut (welche recht empfindlich ist) beispielsweise je nach Erregungszustand genau dosieren wollen, wobei das Gewicht der Stimulationsvorrichtung 1a feinfühlig durch die Greifhand abgefedert werden muss.

Zudem muss die Stimulationsvorrichtung 1a auch über der annähernd punktförmigen Klitoriseichel balanciert werden, was aufgrund des Masseschwerpunkts der Stimulationsvorrichtung 1a, welcher zur Klitoriseichel in Längsrichtung des Gehäuses 8a seitlich versetzt angeordnet ist, schwierig ist. So muss die Nutzerin nicht nur das Gesamtgewicht, sondern auch das Kippmoment des Gehäuses 8a zu kompensieren. Auch dies wird als störend bzw. nicht ergonomisch empfunden.

Zudem wird die Stimulationsvorrichtung 1a als zu schwer und zu groß empfunden.

So ist das Gehäuse bezogen auf die bevorzugte Anwendung vergleichsweise sperrig bzw. groß, da die Stimulationsvorrichtung 1a zwischen oder auf den Schamlippen der Frau in einer platzbeengten Umgebung eingesetzt wird. Beispielsweise ist es der Nutzerin regelmäßig ein Bedürfnis, beide Beine bei Verwendung der Stimulationsvorrichtung auszustrecken, was die Zugänglichkeit der Klitoriseichel noch diffiziler ausgestaltet, da die Schenkel annähernd parallel liegen.

Dabei können auch geringfügige Berührungen des sperrigen Gehäuses 8a mit dem weiblichen Körper, beispielweise mit den Schenkeln, als störend empfunden werden.

Hinzu tritt der Umstand, dass unter Umständen auch eine weitere Person das Gerät halten möchte, um die Nutzerin zu stimulieren. Aufgrund der Form des Gehäuses 8a und der Anatomie der Nutzerin führt dies zu einer umständlichen Halteposition auch für die weitere Person.

Weiter erfährt das Gehäuse 8a Vibrationen bzw. Schwingungen, die aufgrund der Bewegung des Exzenters durch den Elektromotor erzeugt werden. Diese Schwingungen weisen eine Vorzugsrichtung auf, die senkrecht zur Achse 82a und parallel zur Ausrichtungsachse 81a liegt. Damit schwingt bzw. vibriert die Wand 41a der zweiten Kammer 4a, die mit ihrer Vorderkante auf der die Klitoriseichel umgebende Haut aufliegt, in Richtung des Körpers der Nutzerin mit dem Gehäuse mit, wobei diese zusätzlichen Vibrationen bzw. Schwingungen regelmäßig unerwünscht sind.

Weiter wird die Vorrichtung 8a im Betrieb regelmäßig als zu laut empfunden.

Die vorstehend erläuterten Probleme mangelnder Ergonomie können auch bei der Vakuumvorrichtung der US 2009 / 0118573 vorhanden sein, da diese ein Gehäuse aufweist, welches in der Art eines Pistolengriffs gehalten wird. So steht auch hier die Längsachse der Vorrichtung senkrecht zur Achse der Benutzung. Ebenso werden hier in Richtung der zu behandelnden Hautpartie störende Schwingungen bzw. Vibrationen erzeugt.

Die US 5,377,701 A offenbart ebenso eine Vakuumvorrichtung mit einem Gehäuse. das pistolengriffartig gehalten wird.

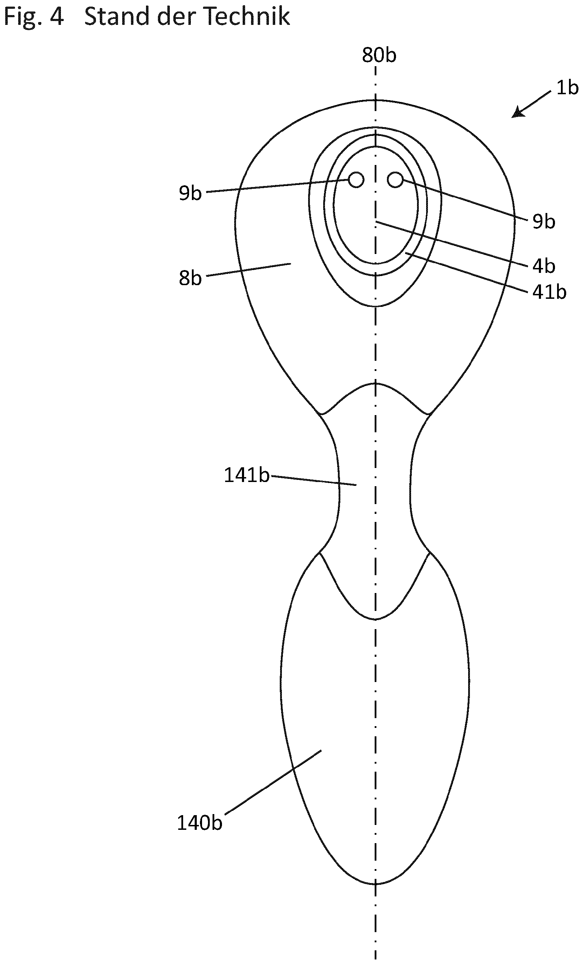

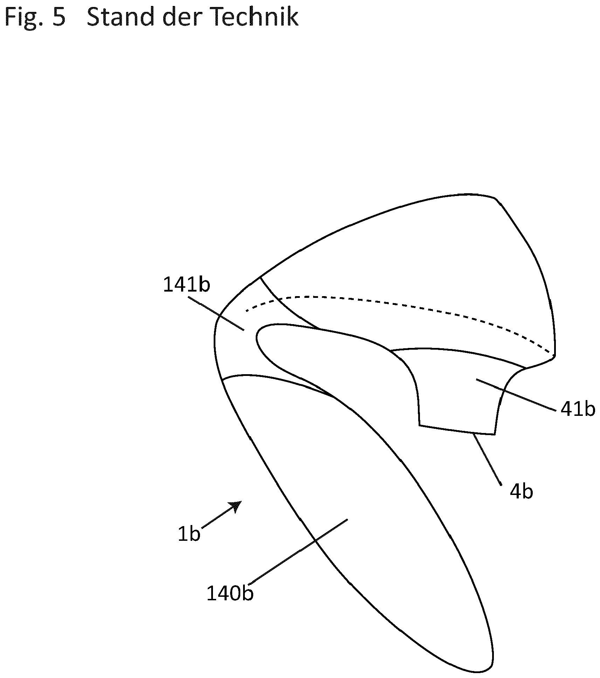

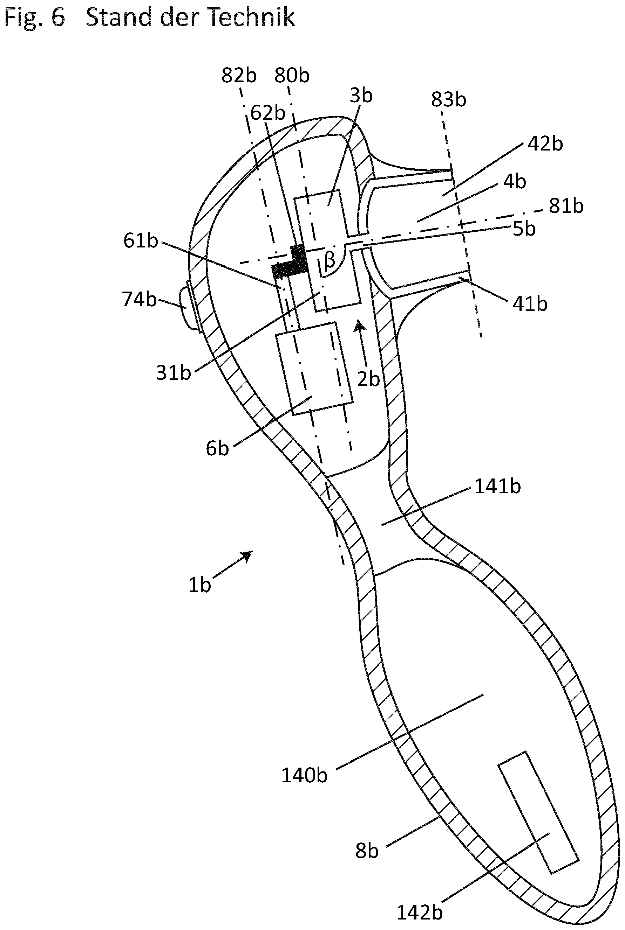

Bezugnehmend auf die Figuren 4, 5 und 6 wird nachstehend eine Ausführungsform der DE 20 2015 105 689 U1 erläutert werden. In Fig. 4 wird eine Vorderansicht der ersten Ausführungsform der Stimulationsvorrichtung 1b mit einem Fortsatz 140b in gerader Position gezeigt, wobei weiter in Fig. 5 eine Seitenansicht der Stimulationsvorrichtung 1 mit dem Fortsatz 140b in abgewinkelter Position und in Fig. 6 ein Querschnitt der Stimulationsvorrichtung 1b der ersten Ausführungsform der DE 20 2015 105 689 U1 gezeigt ist.

Die erste Ausführungsform der Stimulationsvorrichtung 1b ist ein, vorzugsweise tragbares, Elektro- oder Kleingerät, welches ein Gehäuse 8b, eine Druckfelderzeugungseinrichtung 2b, einen optionalen An-/Aus- Schalter 74b und eine optionale Beleuchtung 9b aufweist.

Das Gehäuse 8b ist vorzugsweise derart ausgeführt, dass man es mit einer Hand halten kann und es keine scharfen bzw. spitzen Kanten aufweist. Weiter kann das Gehäuse 8b aus einem Kunststoff, beispielsweise Polycarbonat (PC) oder AcrylnitrilButadien-Styrol (ABS), bestehen. Zudem können die Griffbereiche oder auch das gesamte Gehäuse mit einem haptisch vorteilhaften Silikon ergänzt sein oder aus diesem bestehen. Das Gehäuse 8b ist vorzugsweise zumindest wasserabweisend oder spritzwasserfest ausgestaltet, beispielsweise Schutzklasse IP 24. Die gestrichelte Linie der Fig. 5 gibt weiter eine optionale Seitenkante des Gehäuses 8b an.

Der optionale An-/Aus- Schalter 74b dient der Aktivierung und Deaktivierung der Stimulationsvorrichtung 1b. Dieser An-/Aus- Schalter 74b kann beispielsweise ein Drucktaster, welcher die Stimulationsvorrichtung 1b bei längerem Drücken ein- bzw. ausschaltet, oder ein einrastender Schiebeschalter sei. Alternativ kann die Stimulationsvorrichtung 1b per Fernsteuerung an- und abschaltbar sein.

Die Druckfelderzeugungseinrichtung 2b einer ersten Ausführungsform weist eine erste Kammer 3b im Inneren der Stimulationsvorrichtung 1b, eine zweite Kammer 4b zum Aufsetzen auf ein zu stimulierendes Körperteil 11b, und ein Verbindungselement 5b auf, welche die erste Kammer 3b mit der zweiten Kammer 4b verbindet.

Eine Antriebseinheit 6b, beispielsweise ein Elektromotor, treibt über eine Achse 61b und mittels eines Exzenters 62b (oder alternativ mittels einer Pleuelstange) die erste Kammer 3b derart an, dass das Volumen der ersten Kammer 3b entsprechend der Drehung der Achse 61b der Antriebseinheit 6b verändert wird.

So ist auch hier, wie bei der DE 10 2013 110 501 A1, die Ausrichtungsachse 81b der Öffnung 42b der zweiten Kammer 4b rechtwinklig zur Längsachse 80b des Gehäuses 8b angeordnet. Der Schnittwinkel β zwischen Längsachse 80b und Ausrichtungsachse 81b beträgt hier etwa 90 Grad, und stellt eine L-Anordnung dar. Die Öffnungsebene 83b ist annähernd parallel zur Längsachse 80b des Gehäuses 8b angeordnet.

Damit weist auch das Gehäuse 8b die gleichen Nachteile auf, welche vorstehend in Bezug auf das Gehäuse 8a der DE 10 2013 110 501 A1 näher beschrieben wurden.

Eine Steuereinrichtung 7b steuert die Antriebseinheit 6b, optionale Bedienelemente 71b und zumindest eine optionale Anzeige 72b an. Dabei werden die Steuereinrichtung 7b und die Antriebseinheit 6b beispielsweise von der internen Batterie 76b und/oder der externen Leistungsversorgung 73b mit Leistung versorgt.

Die Stimulationsvorrichtung 1 der DE 20 2015 105 689 U1, in den Fig. 4 bis 6 dargestellt, weist weiter zumindest einen Fortsatz 140b auf. Dieser Fortsatz 140b, welcher vorzugsweise ein Bestandteil des Gehäuses 8b ist, ist optional relativ zu dem Gehäuseteil beweglich bzw. abwinkelbar, in dem die Druckfelderzeugungseinrichtung 2 untergebracht ist. Dabei kann der Fortsatz mittels eines Gelenks 141b abgewinkelt oder auch verdreht werden. Das Gelenk 141b kann beispielsweise als plastisch verformbares Plastikteil, als Stellgelenk oder als Scharnier ausgestaltet sein. Fig. 5 zeigt ein Beispiel einer abgewinkelten Stellung des Fortsatzes 140b relativ zu dem Abschnitt des Gehäuses 8b der Stimulationsvorrichtung 1, in dem die Druckfelderzeugungseinrichtung 2b untergebracht ist. Alternativ kann der Fortsatz auch starr bzw. unbeweglich ausgestaltet sein.

Der Fortsatz 140b ist vorzugsweise ein Stimulationsmittel zum Einführen in den menschlichen Körper, beispielsweise in die Vagina oder auch andere Körperöffnungen. Dabei ist der Fortsatz 140b beispielsweise wie ein gebräuchlicher Dildo geformt. Alternativ kann der Fortsatz derart ausgebildet sein, dass dieser an die menschliche Anatomie einer anderen Körperöffnung angepasst ist, beispielsweise an den Mund. Zudem kann der Fortsatz 140b derart ausgebildet sein, dass man diesen auch als Handgriff verwenden kann, um die Stimulationsvorrichtung 1b zu halten. Jedoch ist ein Halten der Vorrichtung 1b an dem Fortsatz hinter einem Gelenk unpraktisch, da das Gelenk eine Dosierung der entsprechenden Kräfte erschwert.

Auch wenn also die Stimulationsvorrichtung 1b, wie in Fig. 5 gezeigt, mit einem Fortsatz 140b in abgewinkelter Form gehalten werden sollte, weist die Stimulationsvorrichtung 1b eine pistolengriffartige Haltestellung auf, die umständlich und ebenso nachteilhaft ist, wie vorstehend näher erläutert.

Zudem kann der Fortsatz 140b optional eine Vibrationsvorrichtung 142b aufweisen, die zuschaltbar und/oder steuerbar sein kann. Die Vibrationsvorrichtung 142b versetzt den Fortsatz in mechanische Schwingungen, welche den direkten Stimulationseffekt des Fortsatzes 140b unterstützen.

Optional ist der Fortsatz 140b an dem Abschnitt des Gehäuses 8, welcher die Druckfelderzeugungseinrichtung 2b aufnimmt, derart angebracht, dass das (Gesamt-) Gehäuse 8 der Stimulationsvorrichtung 1b einheitlich ausgestaltet ist. Somit erweckt das Gehäuse 8 den Eindruck, dass dieses einstückig bzw. einteilig ist, beispielsweise mittels flexibler und/oder nahtloser Verbindungselemente des Gehäuses 8. Alternativ kann das Gehäuse 8b incl. Fortsatz 140b einen Silikonüberzug aufweisen.

In gerader bzw. nicht abgewinkelter Ausrichtung des Fortsatzes 140b, so wie dies in Fig. 4 gezeigt ist, lässt sich die Stimulationsvorrichtung 1b halten oder auch in Körperöffnungen einführen. Wird der Fortsatz 140b, so wie dies in Fig. 5 gezeigt ist, beispielsweise nach dem Einführen, abgewinkelt, kann auf diese Weise die Öffnung 42b auf das zu stimulierende Körperteil 11b geführt werden. In dieser abgewinkelten Position der Stimulationsvorrichtung 1b kann gleichzeitig sowohl eine direkte als eine indirekte Stimulation von zumindest einer erogenen Zone des Körpers stattfinden. Hierbei befindet sich das zu stimulierende Körperteil 11b zwischen Fortsatz 140b und Druckfelderzeugungsvorrichtung 2b. Diese Art des "freihändigen" Haltens der Stimulationsvorrichtung 1b mittels Vagina (und evtl. den beiden Schenkeln, zwischen denen die Stimulationsvorrichtung 1b eingeklemmt werden kann) ist jedoch unter Umständen von der Nutzerin unerwünscht. Es ist also vorzuziehen, die Stimulationsvorrichtung generell mit der Hand, und nicht mit anderen Körperteilen, zu halten.

Weiter kann eine optionale Beleuchtung 9b an oder in dem Gehäuse 8b vorgesehen sein. Dabei dient die Beleuchtung 9b vorzugsweise der Beleuchtung des Inneren der zweiten Kammer 4b. Die Beleuchtung 9b kann entweder durch den Benutzer zuschaltbar sein oder bei Aktivierung der Stimulationsvorrichtung 1b automatisch aktiviert sein. Weiter kann die Beleuchtung 9b aus energiesparenden Leuchtdioden ausgebildet sein. Die Beleuchtung kann beispielsweise als Orientierungshilfe für den Benutzer der Stimulationsvorrichtung 1b im Dunkeln oder als zusätzliche optische Stimulation dienen.

Die Stimulationsvorrichtungen der DE 10 2013 110 501 A1 und der DE 20 2015 105 689 U1 haben zudem den Nachteil gemein, dass aufgrund des vorstehend beschriebenen grundsätzlichen Aufbaus recht viel Totraum beziehungsweise unbenütztes Volumen im Inneren der jeweiligen Gehäuse 8a und 8b vorhanden ist. Somit sind diese Vorrichtungen vergleichsweise voluminös und entsprechend groß ausgeführt. Die Gehäusegröße führt weiter zu einem erhöhten Materialaufwand für das Gehäuse.

Damit besteht bei den Stimulationsvorrichtungen der DE 10 2013 110 501 A1 und der DE 20 2015 105 689 U1 ein Verbesserungspotential bezüglich der Ergonomie dieser Vorrichtungen.

Weiter wurde von der Anmelderin ein Gerät (mit Produktbezeichnung: "Womanizer W 500 Pro) entwickelt, welches nicht hantelförmig, sondern eher flächig und computermausförmig (d.h., die Gehäuseform erinnert stark an die Form einer Computermaus) ausgestaltet ist. Diese Stimulationsvorrichtung weist jedoch aufgrund der geometrischen Übereinstimmungen mit der Stimulationsvorrichtung der DE 10 2013 110 501 A1 die gleichen Nachteile auf, die vorstehend erläutert wurden. Insbesondere weist dieses Produkt auch eine L-Anordnung auf.

Die vorstehend erläuterten ergonomischen Nachteile weisen auch diejenigen Vorrichtungen auf, welche nach Art des Pistolengriffs (und/oder mit einem abgewinkelten Gehäuse und einhergehender L-Anordnung) geformt oder ausgestaltet sind.

So ist es in Anbetracht der vorstehend erläuterten Probleme die der Erfindung zugrunde liegende Aufgabe, eine optimierte Stimulationsvorrichtung anzugeben, welche ergonomischer ist.

Die Ergonomie der Stimulationsvorrichtung betrifft beispielsweise die Aspekte des Gewichts, der Lautstärke, der Halteposition der Hand, der Kompaktheit, der Handhabbarkeit, des Komforts bei der Benutzung, der Gebrauchstauglichkeit und der Transportierbarkeit der erfindungsgemäßen Stimulationsvorrichtung.

Die der Erfindung zugrunde liegende Aufgabe wird durch die Stimulationsvorrichtung gemäß Anspruch 1 gelöst. Vorteilhafte Weiterentwicklungen und Ausführungsformen sind Gegenstand der weiteren nebengeordneten und abhängigen Ansprüche.

Erfindungsgemäß ist eine Stimulationsvorrichtung für erogene Zonen, insbesondere für die Klitoris, vorgesehen, aufweisend ein Gehäuse, welches im Wesentlichen (stab- oder) stiftförmig ausgebildet ist, eine Druckfelderzeugungseinrichtung mit einer Antriebseinheit, die in einem Hohlraum ein Druckfeld aus sich zeitlich abwechselnden Unter- und Überdrücken erzeugt, eine Steuereinrichtung, welche die Antriebseinheit ansteuert; wobei das Gehäuse eine Längsachse aufweist, die sich von einem vorderen Ende des Gehäuses bis zu einem hinteren Ende des Gehäuses erstreckt, und in dem vorderen Ende des Gehäuses eine Öffnung zum Aufsetzen über die Klitoris vorgesehen ist, und wobei der Hohlraum im Inneren des Gehäuses angeordnet ist und mit der Öffnung des Gehäuses verbunden ist.

Die Längsachse des Gehäuses der erfindungsgemäßen Stimulationsvorrichtung ist eine gedachte Achse, die sich von einem vorderen Ende des länglichen Gehäuses bis zu einem (axial zu diesem vorderen Ende beabstandeten) hinteren Ende des länglichen Gehäuses erstreckt. Vorzugsweise verläuft die Längsachse parallel zur Länge des Gehäuses.

Regelmäßig, aber nicht ausschließlich, kann die Längsachse eine in Längsrichtung zur längsten Ausdehnung der Stimulationsvorrichtung verlaufende Achse sein.

Es entspricht die Längsachse beispielsweise der Richtung der größten Gesamtausdehnung des Gehäuses.

Vorzugsweise ist die Längsachse ebenso eine Längsmittelachse, welche sich in etwa mittig durch die Stimulationsvorrichtung erstreckt.

Weiter ist die Längsachse vorzugsweise auch im Wesentlichen eine Symmetrieachse der Stimulationsvorrichtung oder des Gehäuses. So ist das Gehäuse in seiner Grundform beispielsweise weitgehend zylindrisch ausgestaltet. Unberücksichtigt bleiben bei der Betrachtung der Symmetrie Schalter, Buchsen oder ähnliche Kleinigkeiten.

Zudem ist ein Gehäuse beispielsweise dann länglich oder langgestreckt ausgestaltet, wenn dessen Länge mindestens das dreifache (3) oder auch das n-fache der Breite und/oder Höhe beträgt. Vorzugsweise weist der Faktor n den Wert vier (4), fünf (5), sechs (6) oder sieben (7) auf. Je größer der Faktor n ist, umso länglicher oder langgestreckter ist das Gehäuse ausgeformt.

Alternativ kann das Gehäuse der erfindungsgemäßen Stimulationsvorrichtung also langgestreckt ausgebildet (ausgeformt) bezeichnet werden, wenn es in einem gedachten Zylinder aufgenommen werden kann, dessen Durchmesser beispielsweise um den Faktor, 3, vorzugsweise 4, 5, 6 oder 7, kleiner ist, als dessen Länge.

Das vordere Ende des Gehäuses ist das Ende des Gehäuses, welches bei Anwendung der Stimulationsvorrichtung benachbart zur oder über der erogenen Zone angeordnet ist, d.h., dies ist bei der erfindungsgemäßen Stimulationsvorrichtung das "aktive" Ende mit der Öffnung zur Stimulation.

Das rückwärtige bzw. hintere Ende des Gehäuses ist das Ende des Gehäuses, welches in Längsrichtung entgegengesetzt zum vorderen Ende angeordnet ist. Dieses hintere Ende ist beispielsweise das "passive" Ende des Gehäuses, d.h., in der Regel ein einfacher Gehäuseabschluss. An dem hinteren Ende können Bedienelemente angeordnet sein.

Erfindungsgemäß weist eine Druckfelderzeugungseinrichtung der Stimulationsvorrichtung einen Hohlraum mit einer Öffnung zum Aufsetzen auf ein Körperteil bzw. auf die erogene Zone, vorzugsweise über die Klitoris, auf.

So wird der Hohlraum beispielsweise über die Klitoriseichel übergestülpt, so dass die Klitoriseichel in den Hohlraum aufgenommen ist. Dieses Aufsetzen kann dichtend erfolgen, oder aber auch nur teilweise bzw. weitgehend dichtend, wenn beispielsweise ein Spalt zwischen der Wand der Öffnung und der Haut der erogenen Zone offen bleibt.

Vorzugsweise weist das vordere Ende des Gehäuses einen Aufsatzbereich zum Aufsetzen der Stimulationsvorrichtung auf die erogene Zone auf. Der Aufsatzbereich ist durch eine Auflagefläche gekennzeichnet, die bei Anwendung der Stimulationsvorrichtung mit der Haut in Berührung kommt.

Der erfindungsgemäße Hohlraum definiert ein Volumen im Inneren des Gehäuses für ein Medium, beispielsweise Luft. Dieser Hohlraum wird beispielsweise durch flexible und/oder starre Wände von dem Rest des Inneren des Gehäuses getrennt.

Weiter ist der Hohlraum mit der Öffnung des Gehäuses verbunden. So weist der Hohlraum die Öffnung (des Gehäuses) zum Aufsetzen über die zu stimulierende erogene Zone auf.

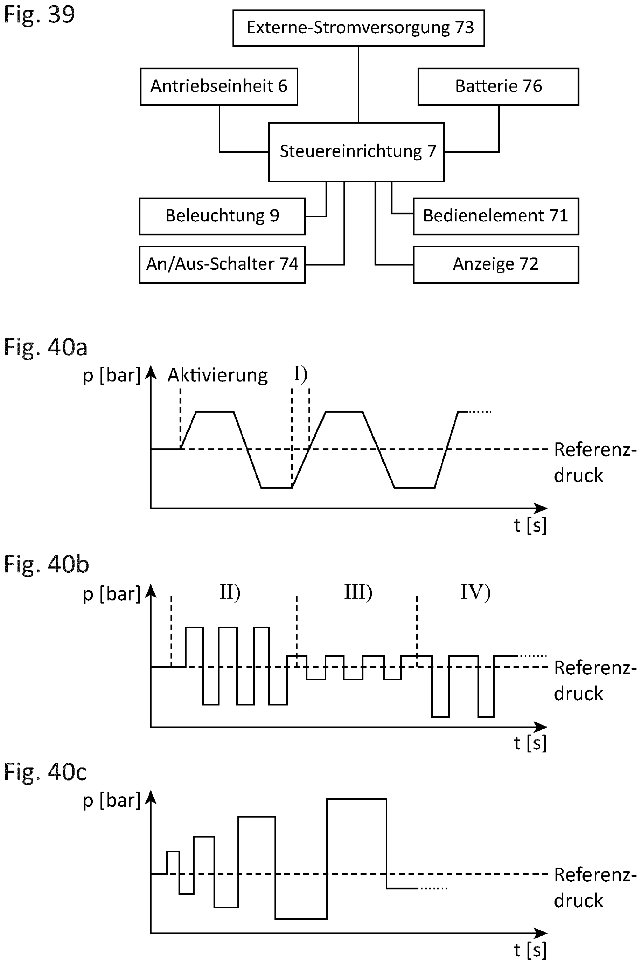

In diesem Hohlraum wird das erfindungsgemäße Druckfeld ausgebildet, welches zeitlich abwechselnd Unter- und Überdrücke in Bezug auf einen Referenzdruck aufweist, wobei dies später (beispielsweise in Bezug auf die Figuren 40 a) bis c)) näher erläutert werden wird.

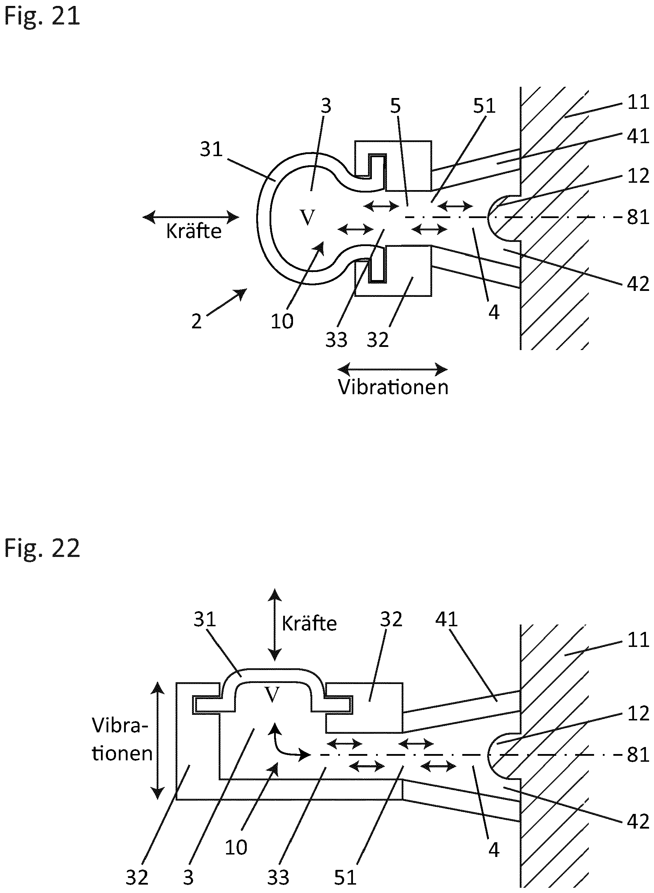

Bei der Erzeugung des Druckfelds weist der Hohlraum ein erfindungsgemäßes Strömungssystem auf, welches zeitlich abwechselnde, regelmäßig einander entgegengesetzte gerichtete, Strömungen aufweist. Dies wird später beispielsweise mit den Figuren 21 und 22 näher erläutert werden.

Der erfindungsgemäße Hohlraum kann beispielsweise zumindest eine erste Kammer und zumindest ein zweite Kammer und zumindest ein Verbindungselement, welches die erste Kammer mit der zweiten Kammer verbindet, aufweisen. Dabei bezeichnet der Begriff "erste Kammer" funktionell den Teil des Hohlraums, an dem die Antriebseinrichtung auf den Hohlraum einwirken kann, beispielsweise durch Volumenänderung. Der Begriff "zweite Kammer" bezeichnet funktionell den Teil des Hohlraums, welcher die Öffnung zum Aufsetzen über die erogene Zone aufweist, und in welchem das erfindungsgemäße Druckfeld auf die erogene Zone wirken kann. Die erfindungsgemäßen Kammern sind also nicht jeweils strukturell vollständig getrennte Räume bzw. Abteilungen des Hohlraums, sondern nur funktionale Abschnitte eines Hohlraums. So kann das Verbindungselement auch nur eine geringfügige Verjüngung bzw. Einengung in Form einer einzelnen Durchlassöffnung zwischen den beiden Kammern darstellen.

Durch die erfindungsgemäße Ausbildung von strömungstechnisch über zumindest ein Verbindungselement kommunizierenden Kammern kann durch Änderung des Volumens der ersten Kammer in einfacher Weise ein Druckfeld in der zweiten Kammer erzeugt werden, das zeitweise auf den zu stimulierenden Hautbereich gerichtet ist.

Ein Druckfeld im Sinne der Erfindung ist ein zeitlich veränderliches Feld von Mediendrücken, welches zeitweise Überdrücke und zeitweise Unterdrücke aufweist, wobei ein Unterdruck ein Mediendruck ist, der unter dem Referenzdruck liegt, und ein Überdruck ein Mediendruck ist, der über dem Referenzdruck liegt. Im Ergebnis bewegt sich das Medium im erfindungsgemäßen Hohlraum alternierend hin- und her, womit das Druckfeld erzeugt wird.

Das Medium ist üblicherweise gasförmig, vorzugsweise Luft, kann jedoch beispielsweise alternativ oder additiv ein flüssiges Medium, beispielsweise Wasser oder handelsübliches Gleitmittel, sein. Beispielsweise kann das Gleitmittel vor Benutzung der Stimulationsvorrichtung in die erfindungsgemäßen Kammern eingefüllt werden. Auf diese Weise kann die Stimulation des entsprechenden Hautbereichs anstelle mit Luft auch mit einer geeigneten hautfreundlichen Flüssigkeit erfolgen, was je nach individueller Präferenz des Anwenders gewünscht sein kann. Als weiteres Beispiel kann die Stimulationsvorrichtung auch unter Wasser mit Wasser als Medium verwendet werden (beispielsweise in der Badewanne oder im Schwimmbad). Vorzugsweise ist die Stimulationsvorrichtung wasserfest ausgestaltet. Im Falle von Luft als Medium wird in dem erfindungsgemäßen Hohlraum eine Art Luftsäule hin- und her bewegt.

Der Referenzdruck ist üblicherweise der jeweils bei Beginn der Anwendung (d.h. vor dem Aufsetzen der Stimulationsvorrichtung auf den zu stimulierenden Hautbereich) vorliegende Umgebungsdruck in Bezug auf die Stimulationsvorrichtung. Bei der vorzugsweisen Anwendung der Stimulationsvorrichtung mit Luft ist der Referenzdruck der aktuell vorliegende/herrschende Luftdruck bzw. der Normaldruck.

Beispielsweise kann bei der Anwendung der Vorrichtung bei üblichen Standardbedingungen der Referenzdruck ca. 1 bar sein, wobei folglich ein erfindungsgemäßer Unterdruck beispielsweise (absolut gemessen) 0,7 bar bzw. -0,3 bar (relativ gemessen) und ein erfindungsgemäßer Überdruck beispielsweise (absolut gemessen) 1,3 bar bzw. +0,3 bar (relativ gemessen) betragen kann.

Durch das erfindungsgemäße Druckfeld wird der zu stimulierende Hautbereich einerseits in seiner Durchblutung angeregt, während dieser andererseits indirekt angeregt wird. So werden zwei vorteilhafte Effekte kombiniert. Aufgrund der erhöhten Durchblutung ist die erogene Zone der betreffenden Person empfindlicher, während zudem ein kinetischer Effekt erzeugt wird, der der Stimulation der erogenen Zone, beispielsweise der sexuellen Erregung bis zum Klimax, dient. Der Stimulationseffekt wird durch die Einwirkung des Druckfelds auf die Oberfläche des zu stimulierenden Hautbereichs erzeugt. Auf diese Weise wird der durch das Druckfeld geschaffene Stimulationseffekt indirekt, also ohne direkte Berührung der zu stimulierenden Hautpartie durch einen festen Körper, beispielsweise durch einen Vibrator, erzeugt.

Durch die beispielhafte Anwendung des sich erfindungsgemäß zeitlich verändernden Druckfeldes auf die Klitoris wird durch das Druckfeld eine Reizung nachgeahmt, welche beim Sexualverkehr üblicherweise stattfindet. Dabei wird durch die Kohabitationsbewegung ebenfalls ein wechselnder Reiz an der Klitoris erzeugt. So handelt es sich um eine lebensnahe Imitation des natürlichen Kohabitationsaktes, wobei ärztliche Aussagen bestätigen, dass die Anwendung des erfindungsgemäßen Druckfeldes weder zu Gewöhnungseffekten noch zur Suchterzeugung führt. Dies ist insbesondere in der abwechselnden Anwendung von Unter- und Überdrücken (bzw. auch in der nicht kontinuierlichen Anwendung nur einer Art eines Drucks) begründet.

Weiter ist der maximal anwendbare Druck regelmäßig durch die maximale Belastbarkeit des zu stimulierenden Hautbereichs beschränkt. So birgt beispielsweise ein zu hoher Unterdruck besonders bei erogenen Zonen wie der Klitoris das Risiko von schmerzhaften Verletzungen. Ausschließlich mit Unterdrücken arbeitende Stimulationsvorrichtungen sind in ihrer Arbeitsweise üblicherweise auf dieses Maximum beschränkt. Im Gegensatz dazu wird erfindungsgemäß durch die Kombination von Über-und Unterdrücken ein erweiterter Arbeitsbereich des stimulationsauslösenden Druckfeldes bzw. Effektes geschaffen, da der Arbeitsbereich des Drucks nunmehr sowohl im positiven als auch im negativen Bereich bis zum Maximum ohne die Gefahr einer unbeabsichtigten Überschreitung ausgenutzt werden kann.

Durch die Ausrichtung des zumindest einen Verbindungselements entsprechend einer Ausrichtungsachse auf den zu stimulierenden Hautbereich kann das Druckfeld unmittelbar auf den Zielbereich wirken, wobei das Druckfeld beispielsweise maßgeblich durch die Konfiguration des zumindest einen Verbindungselements und der zumindest einen Öffnung von dem Verbindungselement in die zweite Kammer beeinflusst wird, und so je nach Anwendung der Stimulationsvorrichtung einstellbar ist. So kann eine Öffnung des Verbindungselements dem zu stimulierenden Körperteil, vorzugsweise direkt, gegenüber liegen. Damit wird das Druckfeld, das in der zweiten Kammer erzeugt wird, in unmittelbarer Nähe der erogenen Zone, vorzugsweise der Klitoriseichel, erzeugt und ist auf diese ausgerichtet.

Beispielsweise kann das Verbindungselement bei einer Stimulationsvorrichtung, welche für die Klitoris bestimmt ist, eine einzelne Durchgangsöffnung mit Düsenwirkung auf die Klitoriseichel zwischen der ersten und der zweiten Kammer aufweisen. Die einzelne Durchgangsöffnung kann beispielsweise eine einzelne Verengung in dem Hohlraum sein. Weiter kann das Verbindungselement als Düse ausgestaltet sein. Die Düse beschleunigt das Medium bei Erzeugung des Überdrucks des Druckfelds. Vorzugsweise richtet die Düse auch die Medienströmung auf die Klitoris aus, wenn der Überdruck im Hohlraum erzeugt wird. Eine solche Düse kann beispielsweise kegelstumpfförmig oder abgerundet ausgestaltet bzw. ausgeformt sein, so wie das später noch in Bezug auf einige Figuren beschrieben werden wird.

Alternativ kann das Verbindungselement aus mehreren, beispielsweise vier, Durchgangsöffnungen zwischen den Kammern bestehen, wenn ein großflächigerer Hautbereich stimuliert werden soll.

Weiter entsteht nach dem Aufsetzen der halbseitig bzw. teilweise geöffneten Hohlraums (und beispielsweise der zweiten Kammer) auf den zu stimulierenden Hautbereich ein in sich abgeschlossenes System der Medien- bzw. Luftströmung in der Druckfelderzeugungseinrichtung, d.h., das erfindungsgemäße Strömungssystem. So wird das Medium bzw. die Luft maßgeblich in den Kammern bzw. im Hohlraum hin- und her bewegt, während ein Austausch mit Medien bzw. mit Luft von außerhalb des Systems zumindest weitgehend vermieden wird. So ist vorzugsweise die erste Kammer (über bzw. durch das Verbindungselement) ausschließlich mit der zweiten Kammer verbunden. So bestehen keine anderen (strömungstechnischen) Verbindungen der ersten Kammer als diejenigen zur zweiten Kammer; beispielsweise besteht keine direkte Verbindung der ersten Kammer mit der Umgebung des Gerätes über ein Druckventil oder über einen Luftabführkanal.

Beispielsweise wird sich die Temperatur der Luft in dem erfindungsgemäßen Strömungssystem schnell an die Hauttemperatur anpassen, während das störende Zuführen von neuer (beispielsweise kalter) Luft von außerhalb des Systems vermieden wird, so wie dies beim Stand der Technik u.A. bei der Verwendung von Vakuumpumpen oder Gebläsen der Fall sein kann. Zudem werden Abtrockungseffekte vermieden, da in einem geschlossenen System kein oder kaum Abtransport von stimulationsfördemder Flüssigkeit, beispielsweise Körperflüssigkeit, stattfindet.

Weiter weist die erfindungsgemäße Druckfelderzeugungseinrichtung aufgrund des einfachen Aufbaus als ein (zum Rest des Inneren des Gehäuses) abgeschlossener Hohlraum den Vorteil einer erhöhten Hygiene und einer verbesserten Reinigungsfähigkeit auf. Insbesondere vermeidet die vorliegende Erfindung Ventile oder Pumpen/Kompressoren mit potentiellen Toträumen und nicht zu reinigenden Stellen. So ist die erfindungsgemäße Druckfelderzeugungseinrichtung einfach zu reinigen. Beispielsweise kann eine Reinigung der Stimulationsvorrichtung in einfacher Weise durch Einfüllen einer Reinigungsflüssigkeit in die erste Kammer und Aktivieren des Druckfelds erfolgen. Alternativ können der vordere Teil des Hohlraums und beispielsweise die zweite Kammer austauschbar angeordnet sein, was die Reinigung beider Kammern ebenfalls erleichtert.

Weiter kann der erfindungsgemäße Hohlraum, beispielsweise die erfindungsgemäßen Kammern und das Verbindungselement, der Druckfelderzeugungseinrichtung einstückig hergestellt sein, wobei diese beispielsweise aus einem einzelnen Plastikformteil (z.B. Gummi oder Silikon) bestehen. Als weitere Alternative können die erste Kammer, die zweite Kammer und das Verbindungselement zwei- oder dreistückig ausgeführt sein. Vorzugsweise ist jede funktionelle Einheit des Hohlraums ein eigenes Bauteil, was den Aufbau erleichtert. Als weiteres Beispiel können die eine Halterung der ersten Kammer, eine komplementäre flexible Wand der ersten Kammer, die zweite Kammer und das Verbindungselement jeweils ein eigenes Bauteil der Druckfelderzeugungseinrichtung darstellen.

Zudem führt der erfindungsgemäße Aufbau zur Vermeidung komplexer strömungstechnischer Elemente, wie z.B. Ventile, was zu einer Vereinfachung der Herstellung führt. Die erfindungsgemäße Stimulationsvorrichtung weist also keine Ventile auf.

Weiter weist die erfindungsgemäße Stimulationsvorrichtung eine Antriebseinheit auf, welche den Hohlraum derart ansteuert, dass im Bereich der Öffnung des Hohlraums ein Druckfeld erzeugt wird, welches der Stimulation der erogenen Zone dient. Ebenso weist die erfindungsgemäße Stimulationsvorrichtung eine Steuereinrichtung auf, welche die Antriebseinheit ansteuert.

Vorzugsweise wird das Volumen der ersten Kammer derart verändert, dass über das Verbindungselement in der zweiten Kammer das Druckfeld zur Stimulation ausgebildet wird.

Weiter ist das transportierte Volumen durch die maximal mögliche Volumenänderung, welche durch die Antriebseinheit bewirkt werden kann, konstruktiv beschränkt.

Dies hat zur Folge, dass der maximale Über- bzw. Unterdruck, den die Stimulationsvorrichtung in der zweiten Kammer aufbauen kann, aufgrund der Dimensionierung der Komponenten der Druckfelderzeugungseinrichtung und des Antriebs beschränkt ist. Insbesondere kann der maximale Über- bzw. Unterdruck auf ein Maß beschränkt werden, der eine Verletzungsgefahr für die zu stimulierenden Hautbereiche minimiert oder ausschließt. Beispielsweise erübrigt sich damit ein im Stand der Technik übliches Sicherheitsventil oder ein manuelles Eingreifen des Benutzers in den Stimulationsvorgang, beispielsweise ein Öffnen eines Freigabeventils.

Weiter wird die zeitliche Veränderung des Druckfeldes bzw. die Modulation des Druckfeldes durch die Steuereinrichtung weitgehend oder vollständig automatisch gesteuert. So kann in der Steuereinrichtung die Modulation des Druckfeldes, beispielsweise Intensität, zeitlicher Verlauf oder Abfolge, vorgespeichert sein. Vorzugsweise kann die zeitliche Veränderung des Druckfeldes regelmäßige bzw. wiederkehrende (Stimulations-) Muster aufweisen, beispielsweise Impulse mit einem vorgegebenen Takt oder sich regelmäßig abwechselnde Impulsfolgen. Auf diese Weise kann sich die Interaktion des Benutzers mit der Stimulationsvorrichtung erfindungsgemäß auf das An- und das Ausschalten und die Wahl des Stimulationsmusters beschränken, während die Stimulationsvorrichtung das bevorzugte Stimulationsmuster automatisch ausführt. Somit ist erfindungsgemäß die Anwendungskomplexität der Stimulationsvorrichtung im Vergleich zu den herkömmlichen (medizinischen) Vakuum-Stimulationsvorrichtungen niedrig. Alternativ oder zusätzlich kann der Benutzer die Stimulationsmuster der Stimulationsvorrichtung während oder vor dem Betrieb individuell konfigurieren.

Vorzugsweise kann das Modulationsmuster mittels einer Spannungs- oder Stromansteuerung eines Elektromotors durch Einstellen und/oder Variation der Drehzahl des Elektromotors erzeugt und geändert werden. Wenn sich demzufolge die Drehzahl ändert, ändert sich die Hubzahl eines Exzenters, der auf der Welle angebracht ist und auch die Hubzahl der zugehörigen flexiblen Wand.

Vorzugsweise ist die Öffnung des Gehäuses und des Hohlraums derart angeordnet, dass die Längsachse des Gehäuses durch die Öffnung des Hohlraums hindurchtritt. Somit schneidet die gedachte Längsachse des Gehäuses eine gedachte Fläche, die durch das Innere der Öffnung aufgespannt wird bzw. eine Fläche, die von dem vorderen oder äußersten Rand der Öffnung des Gehäuses umschlossen wird. Dieser vordere Rand dient vorzugsweise dem Auflegen auf die Haut. Diese gedachte Fläche kann eben bzw. flach (beispielsweise als eine ebene Kreisfläche oder eine ebene, ovale Fläche) oder gekrümmt (beispielsweise konkav) ausgebildet sein.

Erfindungsgemäß ist also vorgesehen, dass das gattungsgemäße, großvolumige Pistolengehäuse (samt zugehörigem Totvolumen) bzw. dass das herkömmliche großvolumige Gehäuse mit einer L-Anordnung ersetzt wird, durch ein langgestrecktes, kompaktes, vorzugsweise stift- oder stabförmiges, Gehäuse, welches durch die Bedienperson in der Art eines Textmarkers oder Schreibstifts halt- und führbar ist. So ist ähnlich wie bei einem Schreibstift die erfindungsgemäße Öffnung der Stimulationsvorrichtung am "aktiven" Ende vorgesehen.

Damit ist nicht nur eine feinfühligere und entspanntere Haltung der Stimulationsvorrichtung ermöglicht, auch wird für die Nutzerin oder auch für eine dritte Person die räumliche Positionierung der Stimulationsvorrichtung über der erogenen Zone, beispielsweise über der Klitoriseichel, deutlich erleichtert.

Weiter haben die Erfinder erkannt, dass die Stimulationswirkung durch den Aufsetzwinkel und den Anpressdruck stark variiert werden kann. Je nachdem, wie dicht die Öffnung auf die erogene Zone bzw. die zu stimulierende Hautpartie aufgesetzt ist, variieren die Druckverhältnisse im Inneren des Hohlraums deutlich. Beispielsweise haben Messungen der Erfinder ergeben, dass die maximalen Unter- und Überdrücke im Inneren des Hohlraums in dem Fall eines vollständig abdichtenden Aufsetzens der Öffnung mehr als 30 oder 50 mal höher sind, als in dem Fall, wenn die Öffnung etwas undicht, beispielsweise mit einem kleinen Spalt nach außen, aufgesetzt ist. Deshalb kann die Nutzerin die Intensität der Stimulationswirkung durch die Lage des Aufsetzens der Öffnung über die erogene Zone bzw. mittels der Neigung der Stimulationsvorrichtung bestimmen, ohne dass dabei beispielsweise (ablenkende) Einstellungen bezüglich des Modulationsmusters am Gerät über Bedienelemente vorgenommen werden müssen. Beispielsweise ist es regelmäßig der Wunsch der Nutzerin, dass die Intensität der Stimulationswirkung im Verlauf der Anwendung der Stimulationsvorrichtung zunimmt.

Folglich spielt die Handhabbarkeit des Gehäuses und insbesondere die Positionierbarkeit der Öffnung des Hohlraums auch eine wichtige Rolle bei Justierung der Intensität der Stimulationswirkung im Gebrauch. Damit begünstigt die erfindungsgemäße Anordnung mit einer länglichen, stiftförmigen Gehäuseform (und mit der Öffnung des Hohlraums / des Gehäuses am vorderen Ende des Gehäuses) die stimulierende Gesamtwirkung des Druckfeldes im Verlauf der Anwendung, da die Intensität der Stimulation nun deutlich feinfühliger nach dem jeweiligen aktuellen Wunsch der Nutzerin justiert werden kann.

In anderen Worten ist es vorteilhaft, dass der Aufsetzwinkel der Öffnung relativ zu der erogenen Zone bzw. Hautfläche aufgrund der erfindungsgemäßen Gehäusegestaltung in manueller Weise fein eingestellt werden kann, da der Aufsetzwinkel umso genauer bestimmt werden kann, je länger das Gehäuse ist.

Nachdem die Nutzerin die erfindungsgemäße Stimulationsvorrichtung nicht mehr - wie vorstehend erläutert - nach Art eines (beispielsweise Tennisschläger-artigen) Handgriffs hält, sondern stift- oder knaufartig, kann das Gehäuse kleiner ausgestaltet sein.

Es ist also nicht mehr erforderlich, das Gehäuse insbesondere in Umfangsrichtung (und auch in Längsrichtung) so groß auszugestalten, dass ein Umgreifen mit der Hand möglich ist. Das heißt, es muss der Umfang des Gehäuses in Längsrichtung nicht mehr, wie dies bei herkömmlichen telefonhörerartigen Gehäusen mit einer L-Anordnung der Fall ist, groß genug sein, um ein einseitiges bequemes Greifen mit der Hand zu ermöglichen, sondern es kann der Umfang des erfindungsgemäßen Gehäuses deutlich kleiner ausfallen, da beispielsweise ein Führen der erfindungsgemäßen Stimulationsvorrichtung zwischen dem Daumen und dem Zeigefinger ausreichend ist.

Durch die erreichte Verkleinerung des Gehäuses kann zudem Material und damit Gewicht eingespart werden.

Auch fällt den Nutzerinnen das Balancieren der Stimulationsvorrichtung über der erogenen Zone leichter, da ein längliches, kompaktes und leichteres Gehäuse auch in Bezug auf den Masseschwerpunkt des Gehäuses leichter ausgerichtet werden kann, und es kann zudem das Gehäuse in der Hand in der Krümmung zwischen Daumen und Zeigefinger zum Liegen kommen, womit das Gewicht des Gehäuses zumindest teilweise auf der Hand zum Liegen kommen kann.

Alternativ kann das Führen der erfindungsgemäßen Stimulationsvorrichtung auch durch das Halten des länglichen Gehäuses an dessen hinteren Ende erfolgen (d.h., ähnlich dem Halten eines Spazierstocks, welcher einen Knauf aufweist). Auch dies stellt eine komfortable Halteposition für die Hand dar, insbesondere wenn man die anatomischen Gegebenheiten der Nutzerinnen berücksichtigt. Eine solche Handhabung der Stimulationsvorrichtung war bisher bei den L-förmigen Anordnungen des Stands der Technik nicht möglich.

Optional kann hierfür ein Knauf oder eine Verdickung (welche beispielsweise kugelförmig ist) an dem hinteren Ende vorgesehen sein. Auch auf diese Weise ist ein feinfühligeres und entspannteres Führen der Stimulationsvorrichtung ermöglicht.

Dadurch, dass die Öffnung des Hohlraums bzw. des Gehäuses der erfindungsgemäßen Stimulationsvorrichtung am vorderen Ende des Gehäuses angeordnet ist, kann die Stimulationsvorrichtung auch im Gegensatz zu den üblichen L-Anordnungen so geführt werden, dass ein Kontakt von anderweitigen Gehäuseteilen mit der Haut vermieden werden kann.

Weiter kann ein längliches, hohles Gehäuse im Vergleich zu üblichen L-Anordnungen platzsparender ausfallen, da im Vergleich zu herkömmlichen Vorrichtungen weniger Totraum (insbesondere in dem Bereich zwischen der Druckfelderzeugungseinrichtung und der Antriebseinrichtung, die im Stand der Technik in ihrer Erstreckungsrichtung üblicherweise senkrecht aufeinander stehen) vorhanden ist. Auch deshalb kann die erfindungsgemäße Stimulationsvorrichtung kompakter ausgestaltet bzw. ausgeformt sein.

Weiter ist das Gehäuse langgestreckt in Stiftform oder Stabform und so ausgebildet ist, dass es manuell in der Art eines Schreibstifts zum Aufsetzen über die erogene Zone, insbesondere die Klitoris(-eichel) geführt werden kann.

Dies bietet unter anderem den Vorteil, dass die Betätigung der länglichen, beispielsweise stab- oder stiftförmigen, Stimulationsvorrichtung für die Nutzerinnen aus anderweitiger Praxis (beispielsweise vom Schreibstift her) vertraut ist und ergonomisch einfach durchgeführt werden kann.

Gemäß einer Weiterbildung der Erfindung ist eine Stimulationsvorrichtung vorgesehen, wobei die Öffnung eine Öffnungsebene definiert, die mit der Längsachse des Gehäuses einen Winkel größer etwa 30 Grad (alternativ größer 45 Grad), vorzugsweise zwischen etwa 35 Grad und etwa 65 Grad (alternativ: 40 bis 50 Grad), insbesondere zwischen etwa 55 Grad und etwa 65 Grad, oder größer etwa 80 Grad, insbesondere etwa 90 Grad, einschließt.

Damit ist die erfindungsgemäße Öffnung beispielsweise in einem spitzen Winkel in Bezug auf die Längsachse der Stimulationsvorrichtung abgeordnet. Diese winklige Anordnung der Öffnung des Hohlraums ist vorteilhaft, da sie der weiblichen Anatomie Rechnung trägt und eine entspanntere bzw. bequemere Handhaltung ermöglicht. Beispielsweise kann insbesondere beim Aufsetzen der Stimulationsvorrichtung über die Klitoris der Haltearm der Nutzerin stärker abgewinkelt sein. Liegt die Nutzerin zudem beispielsweise bei Benutzung der erfindungsgemäßen Stimulationsvorrichtung in horizontaler Position, so kann die Stimulationsvorrichtung steiler bzw. vertikaler gehalten werden, was das Balancieren der Stimulationsvorrichtung über der Klitoris vereinfacht, da u.A. das Kippmoment geringer ist.

Alternativ ist die Öffnungsebene senkrecht oder etwa senkrecht zu der Längsachse ausgebildet, was für die Manipulierbarkeit der Vorrichtung ebenso vorteilhaft ist. Die Bezeichnung "etwa" bezüglich der Winkelangaben bezeichnet in dieser Offenbarung generell eine Winkelungenauigkeit von ± 1 Grad des Winkels.

Gemäß einer Weiterbildung der Erfindung ist die Öffnung des Gehäuses derart angeordnet, dass die Längsachse des Gehäuses durch die Öffnung des Gehäuses (hin-) durchtritt.

Ein nach vorstehendem geometrischen Grundsatz ausgestaltetes Gehäuse ist noch feinfühliger und intuitiver handzuhaben. So befindet sich das "aktive" Ende, welches zur Stimulation dient, in der Längsachse des Gehäuses, womit der "Dreh- und Angelpunkt" der Benutzung für den Nutzer einfacher zu erfassen ist. Ebenso vereinfacht sich der Gehäuseaufbau, da das Gehäuse nun beispielsweise (längs-) achsensymmetrisch ausgestaltet sein kann, weshalb die Herstellung kostengünstiger wird.

Gemäß einer Weiterbildung der Erfindung ist eine Stimulationsvorrichtung vorgesehen, wobei der Hohlraum durch die Antriebseinheit derart ansteuerbar bzw. mit Kräften beaufschlagbar ist, dass in dem Hohlraum ein vorzugsweise in Richtung der Längsachse des Gehäuses wirkendes Druckfeld erzeugt wird, das über die Öffnung des Hohlraums auf die erogene Zone zu deren Stimulation ausgerichtet ist. So ist das Druckfeld an der Längsachse der Stimulationsvorrichtung ausgerichtet, weshalb vorteilhaft eine genaue und feinfühlige Positionierung des stimulierenden Druckfeldes erleichtert wird. Insbesondere wird ein "Zielen" auf einen Zielbereich bzw. auf die erogene Zone entlang des länglichen Gehäuses nochmals erleichtert und kann intuitiver erfolgen.

Gemäß einer Weiterbildung der Erfindung kann der Hohlraum mit dem Druckfeld so eingerichtet sein, dass die Längsachse der Stimulationsvorrichtung das Druckfeld schneidet bzw. durchdringt. Ein nach vorstehendem geometrischem Grundsatz ausgestaltetes Gehäuse mit dem Hohlraum ist feinfühliger und intuitiver handzuhaben.

Gemäß einer Weiterbildung der Erfindung ist eine Stimulationsvorrichtung vorgesehen, wobei das Gehäuse in Längsrichtung benachbart zu dem vorderen Ende einen zum Halten der Stimulationsvorrichtung mit einer Hand ausgebildeten mittleren Abschnitt aufweist, der entlang der Längsachse sowie in Umfangsrichtung um die Längsachse, insbesondere nur über einen Umfangsabschnitt, erstreckend ausgebildet und angeordnet ist.

Durch diesen mittleren Abschnitt wird nochmals das Halten der Stimulationsvorrichtung nach Art eines Stift gefördert. Weiter kann der mittlere Abschnitt, damit man ihn besser greifen kann, ein haptisch vorteilhaftes Material, beispielsweise Gummi oder Silikon, aufweisen. Weiter schließt der mittlere Abschnitt direkt bzw. unmittelbar an das vordere Ende an, weshalb die längliche Stimulationsvorrichtung nicht nur an dem vorderen Ende, sondern auch bei dem dahinterliegenden Abschnitt ein haptisch vorteilhaftes Material aufweisen kann. Dies berücksichtigt, dass bei dem mittleren Abschnitt eine erhöhte Wahrscheinlichkeit besteht, dass auch dieser mit weiteren Hautpartien, beispielsweise den Schenkeln oder den Schamlippen, der Nutzerin in Berührung geraten kann. Damit wird die Stimulationsvorrichtung haptisch (und taktil) und ergonomisch vorteilhaft ausgestaltet.

Auch kann der mittleren Abschnitt insbesondere nur über einen Umfangsabschnitt ausgebildet sein, was beispielsweise Material und Beschichtungsaufwand erspart. So kann der mittlere Abschnitt nur für die Auflagefläche der Finger vorgesehen sein.

Gemäß einer Weiterbildung der Erfindung ist eine Stimulationsvorrichtung vorgesehen, wobei sich der mittlere Abschnitt über mindestens 30%, vorzugsweise über mindestens 40%, noch weiter bevorzugt mindestens 50% der Axialerstreckung der Längsachse 80 und optional bis maximal 70% der Axialerstreckung der Längsachse erstreckt.

Versuche der Erfinder haben ergeben, dass eine gewisse Mindestlänge des mittleren Abschnitts erforderlich ist, um ausreichend Fläche für das Greifen mit den Fingern vorzusehen.

Gemäß einer Weiterbildung der Erfindung ist eine Stimulationsvorrichtung vorgesehen, wobei die Stimulationsvorrichtung einen Masseschwerpunkt aufweist, der in Längsrichtung betrachtet näher an dem hinteren Ende als an dem vorderen Ende angeordnet ist.

Bei den vorstehend näher erläuterten Arten des Haltens der Stimulationsvorrichtung mit der Hand nach Art eines Stift oder nach Art eines Knaufs ist es vorteilhaft, wenn der Masseschwerpunkt in Längsrichtung gesehen näher an dem hinteren Ende liegt als an dem vorderen Ende. Damit kann beispielsweise das vordere (leichtere) Ende leichter und feinfühliger bewegt werden, wenn das (schwerere) hintere Ende auf der Handaussenfläche oder in der Handinnenfläche ruht.

Gemäß einer Weiterbildung der Erfindung ist eine Stimulationsvorrichtung vorgesehen, wobei die Längsachse eine annähernde Symmetrieachse des Gehäuses darstellt. Eine solche Symmetrie führt zu fertigungstechnischen Vorteilen, beispielsweise wird eine Teilevielfachverwendung für Gehäuseteile (beispielsweise können Halbschalen verwendet werden) möglich; oder es wird die Konstruktion des Produktes vereinfacht. Zudem weist ein Gehäuse mit einer solchen Symmetrieachse einen Masseschwerpunkt auf, welcher auf oder benachbart zu der Längsachse angeordnet sein kann, was wiederum die Handhabbarkeit und Balancierbarkeit des Gehäuses verbessert.

Gemäß einer Weiterbildung der Erfindung ist eine Stimulationsvorrichtung vorgesehen, wobei der Hohlraum eine Wand aufweist, die aus einem flexiblen Material besteht, und die Wand die Öffnung des Gehäuses ausbildet, und die Wand an dem vorderen Ende auch die Außenwand des Gehäuses ausbildet. Damit bildet diese Wand vorzugsweise die Auflagefläche des Gehäuses auf die Haut aus.

Damit ist nicht nur die direkte (vordere) Kontaktfläche der Wand der Öffnung des Hohlraums mit der betreffenden Hauptpartie aus einem flexiblen (haptisch und taktil vorteilhaften) Material, wie beispielsweise Silikon oder Gummi, ausgestaltet, sondern es ist auch die Außenseite des vorderen Endes des Gehäuses der erfindungsgemäßen Stimulationsvorrichtung entsprechend ausgestaltet. Dies verbessert die taktile Wahrnehmung, die die Nutzerin vom Gehäuse erhält. Beispielsweise werden sich die könnten sich die äußeren Schamlippen an die (Außen-)Wand des vorderen Endes anlegen, wenn die Stimulationsvorrichtung über die Klitoris aufgesetzt ist.

Gemäß einer Weiterbildung der Erfindung ist eine Stimulationsvorrichtung vorgesehen, wobei der Hohlraum eine Ausrichtungsachse aufweist, die durch die Ausrichtung der Strömung(en) des Mediums bei Erzeugung des Druckfelds (oder des Überdrucks) im Bereich der Öffnung definiert ist; und die Ausrichtungsachse die Längsachse in einem Winkel schneidet, welcher kleiner oder gleich 50 Grad, vorzugsweise kleiner oder gleich 35 Grad, ist; oder die Ausrichtungsachse im Wesentlichen parallel zur Längsachse angeordnet ist. Ist beispielsweise der Hohlraum hinter der Öffnung des Gehäuses zylindrisch in die Tiefe des Gehäuses verlaufend ausgestaltet, so können beispielsweise die Strömungen im Wesentlichen entlang der Richtung der Mittelachse dieses Zylinders zeitlich abwechselnd auf die Öffnung zu und von der Öffnung weg gerichtet sein.

So ist die Ausrichtungsachse parallel oder mit einem kleinen (flachen) Winkel in Bezug zur Längsachse der Stimulationsvorrichtung angeordnet. Damit verbessert sich nach Experimenten der Erfinder die Handhabbarkeit, insbesondere die Art der feinfühligen Ausrichtung des stimulationserzeugenden Druckfeldes.

Gemäß einer Weiterbildung der Erfindung ist eine Stimulationsvorrichtung vorgesehen, wobei die Antriebseinheit ein Elektromotor mit einer Antriebswelle bzw. Achse ist; und die Mittelachse der Antriebswelle bzw. Achse des Elektromotors im Wesentlichen parallel zur Ausrichtungsachse, die vorzugsweise auf die zu stimulierende erogene Zone zielt, angeordnet ist. Bevorzugt ist auch die Mittelachse der Antriebswelle des Elektromotors parallel zur Längsachse angeordnet.

Der Elektromotor und der auf der Achse angeordnete Exzenter ist aufgrund der Unwucht dieser Anordnung Quelle von im Wesentlichen senkrecht zur Achse ausgerichteten Schwingungen bzw. Vibrationen. Regelmäßig entspricht die Rotationsachse des Exzenters nicht seiner Hauptträgheitsachse. Folglich vibriert oder schwingt die Achse des Motors und damit der Motor und in Folge auch das Gehäuse im Wesentlichen in einer Richtung, die senkrecht bzw. rechtwinklig zur Mittenachse der Achse des Motors liegt. Bei herkömmlichen L-förmigen Anordnungen befindet sich die zu stimulierende erogene Zone folglich im wesentlichen Ausbreitungsbereich bzw. in Richtung dieser Schwingungen bzw. Vibrationen. Bezugnehmend auf Fig. 3 des Stands der Technik entspricht die wesentliche Ausbreitungsrichtung der Schwingungen bzw. Vibrationen der Achse 81a. Folglich werden diese Schwingungen über die Wand des Hohlraums und über die Kontaktfläche der Wand auf den Körper der Nutzerin übertragen, was die Nutzerin stören kann.

Umgekehrt sind in Achsrichtung der Motorachse die Schwingungen bzw. Vibrationen deutlich schwächer ausgeprägt als senkrecht dazu. Die vorstehende Weiterbildung nützt diese Erkenntnis, wobei die Ausrichtungsachse und damit die erogene Zone in Achsrichtung der Motorachse angeordnet sind. In dieser Richtung sind also die Schwingungen bzw. Vibrationen des Elektromotors mit Exzenter schwächer ausgeprägt, und stören die Nutzerin nicht oder wesentlich weniger.

Vorzugsweise sind die Ausrichtungsachse und die Mittenachse der Achse des Elektromotors koaxial miteinander ausgerichtet, wobei Schwingungen bzw. Vibrationen bei dieser Art der Anordnung am geringsten ausgeprägt sind.

Alternativ können die Ausrichtungsachse und die Mittenachse der Achse des Elektromotors einen Winkel der Achsen zueinander ≤ 30 Grad, vorzugsweise ≤ 15 Grad einschließen, wobei Tests ergeben haben, dass auch schon bei den vorstehenden Winkelbereichen eine spürbare Verringerung der Ausprägung bzw. Stärke der Vibrationen bzw. Schwingungen der Öffnung des Hohlraums / des Gehäuses erfolgt.

Gemäß einer Weiterbildung der Erfindung ist eine Stimulationsvorrichtung vorgesehen, wobei die Druckfelderzeugungseinrichtung eine flexible Wand aufweist, welche durch die Antriebseinrichtung ausgelenkt werden kann; und die Richtung der Auslenkung der flexiblen Wand durch die Antriebseinheit unter einem Winkel, vorzugsweise > 45 Grad ≤ 90 Grad, insbesondere 90 Grad, zur Ausrichtungsachse vorgesehen ist.

Nicht nur der Motor mit dem Exzenter erzeugt unerwünschte Schwingungen bzw. Vibrationen, sondern auch an der flexiblen Wand des Hohlraums werden unerwünschte Schwingungen bzw. Vibrationen erzeugt. Auch diese Vibrationen bzw. Schwingungen weisen eine Ausbreitungsrichtung auf, die in Richtung der Auslenkung der flexiblen Wand erfolgt. Damit kann, analog zu den Überlegungen bezüglich der Vibrationen bzw. Schwingungen des Exzenters, die vorstehende erfindungsgemäße Anordnung die Vibrationen bzw. Schwingungen nochmals verringern.

Gemäß einer Weiterbildung der Erfindung ist eine Stimulationsvorrichtung vorgesehen, wobei die Druckfelderzeugungseinrichtung derart ausgestaltet ist, dass diese zumindest ein Dämpfungselement aufweist.

Dies stellt eine weitere Maßnahme dar, um die Vibrationen bzw. Schwingungen der Stimulationsvorrichtung bzw. der Druckfelderzeugungseinrichtung zu verringern. Ein solches Dämpfungselement ist beispielsweise ein Silikonlager, welches zwischen dem Exzenter und der flexiblen Wand angeordnet ist. Alternativ kann das Dämpfungselement ein Silikon- oder Gummidämpfer sein (welcher vorzugsweise in hohlzylindrischer Form derart ausgebildet ist, dass dies in Schraubverbindungen eingefügt werden können), der zwischen den Befestigungsstellen der Druckfelderzeugungsvorrichtung und den komplementären Aufhängungen des Gehäuses angeordnet ist. Ebenso alternativ kann das Dämpfungselement auch eine Ummantelung des Motors aus einem elastischen Material sein. Beispielsweise kann der Motor in Schaumstoff eingewickelt im Gehäuse befestigt sein.

Gemäß einer Weiterbildung der Erfindung ist eine Stimulationsvorrichtung vorgesehen, wobei das Dämpfungselement mechanisch und/oder strömungstechnisch derart zwischen der Öffnung und dem Elektromotor oder der flexiblen Wand angeordnet ist, dass Vibrationen und/oder Geräusche, die im Inneren des Gehäuses erzeugt werden, in Richtung der Öffnung gedämpft werden.

Bei der vorstehend dargelegten Anordnung ist das Dämpfungselement vorzugsweise ein kissenförmiger oder quaderförmiger Dämpfer aus Silikon oder Gummi, welcher in Längsrichtung zwischen dem Motor (oder der flexiblen Wand) und der Öffnung angeordnet ist. Das Dämpfungselement deckt dabei in Längsrichtung betrachtet vorzugsweise einen Großteil der Querschnittsfläche des Gehäuses ab, um eine effektive Dämpfungswirkung vorzusehen. Dabei werden die mechanischen, d.h., die über die Festkörper übertragenen, Schwingungen bzw. Vibrationen in Längsrichtung des Gehäuses gedämpft. Das Dämpfungselement kann dabei insbesondere benachbart zu dem vorderen Ende des Gehäuses im Gehäuseinnenraum oder beispielsweise zwischen dem vorderen Ende und dem mittleren Abschnitt des Gehäuses eingefügt bzw. angeordnet sein.

Wird das Dämpfungselement alternativ oder zusätzlich als strömungstechnisches Dämpfungselement eingesetzt, so können die akustische Schwingungen im Medium, die in der ersten Kammer erzeugt werden, gedämpft werden (beispielweise schwingt die flexible Wand; zudem entstehen unerwünschte Strömungsgeräusche an Kanten oder Engstellen im Hohlraum). So kann das Dämpfungselement als strömungstechnischer Schalldämpfer eingesetzt werden, wobei das Dämpfungselement einen Kanal aufweist, in dem akustische Schwingungen insbesondere in einem Frequenzbereich von zehn bis einigen hundert Hertz effektiv (beispielsweise um mehr als 6 dB) gedämpft werden.

Gemäß einer Weiterbildung der Erfindung ist eine Stimulationsvorrichtung vorgesehen, wobei das Dämpfungselement einen Kanal aufweist, welcher S-förmig verläuft, und/oder der Kanal an seiner Innenwand mit einem schalldämpfenden Material beschichtet oder ausgekleidet ist.

Beide vorstehend aufgeführten Maßnahmen des S-förmigen Verlaufs und der Beschichtung mit einem schalldämpfenden Material dienen der Verbesserung des schalldämpfenden Effekts des Dämpfungselements. Aufgrund des S-Förmigen Verlaufs kann sich eine Schallwelle aus der ersten Kammer nicht mehr geradlinig und ungedämpft nach außen ausbreiten. So wird die Lautstärke der Stimulationsvorrichtung im Betrieb verringert.

Vorzugsweise weisen beide Öffnungen des S-förmigen Kanals zueinander parallele Öffnungsebenen auf.

Gemäß einer Weiterbildung der Erfindung ist eine Stimulationsvorrichtung vorgesehen, wobei das Dämpfungselement zumindest teilweise aus Silikon, Vinyl oder Gummi besteht. Dies sind Materialien, mit denen die benötigten Bauteile günstig und in verschiedenen Formen herstellbar sind, während diese Materialien zugleich gute (akustische und mechanische) Dämpfungseigenschaften aufweisen.

Gemäß einer Weiterbildung der Erfindung ist eine Stimulationsvorrichtung vorgesehen, wobei das Gehäuse benachbart zu dem vorderen Ende den mittleren Abschnitt aufweist, der zumindest zwei Griffflächen aufweist.

Die zwei Griffflächen können der Nutzerin als Orientierungshilfe, wie die Finger an dem Gehäuse der Stimulationsvorrichtung anzulegen sind. Zudem können diese Griffflächen auch mit einer Gummierung oder einem "Grip" versehen sein, um das Halten der Stimulationsvorrichtung zu verbessern bzw. um ein Abrutschen zu verhindern, wenn die Stimulationsvorrichtung beispielsweise aufgrund von Flüssigkeiten (Gleitgel, etc.) schmierig oder rutschig geworden ist.

Gemäß einer Weiterbildung der Erfindung ist eine Stimulationsvorrichtung vorgesehen, wobei das Gehäuse benachbart zu dem vorderen Ende den mittleren Abschnitt aufweist, der vollständig als Griffabschnitt ausgebildet ist.

Vorzugsweise kann der komplette mittlere Abschnitt also als Griffabschnitt ausgebildet sein, damit die Nutzerin einen hohen Freiheitsgrad darin hat, wie sie die Stimulationsvorrichtung hält. Bevorzugt ist der mittlere Abschnitt deshalb vollständig aus Silikon oder Gummi ausgebildet bzw. besteht aus Silikon oder Gummi, oder aber ist der mittlere Abschnitt beispielsweise vollständig oder in gemusterter Art und Weise mit einem Material beschichtet, das der Nutzerin einen guten Halt für die Hand bietet.

Gemäß einer Weiterbildung der Erfindung ist eine Stimulationsvorrichtung vorgesehen, wobei der mittlere Abschnitt eine Außenkontur aufweist, welche in der Querschnittsrichtung bzw. in der Querschnittsebene des mittleren Abschnitts betrachtet, rund, oval, gleichdick oder regelmäßig n-eckig ausgebildet ist.

Die erfindungsgemäßen Außenkonturen bieten den Vorteil, dass diese relativ leicht herzustellen sind, und haptisch vorteilhaft sind. Insbesondere eine in Längsrichtung des Gehäuses und des mittleren Abschnitts gleichdicke Außenkontur lässt sich mit der Hand gut führen, da sich die Flächen gut in die Anatomie der Hand einfügen. Besonders bevorzugt ist deshalb eine Außenkontur in der Form eines Reuleaux-Dreiecks, wobei die drei äußeren Kanten bzw. Ecken zusätzlich leicht abgerundet sein können. Vorteilhaft wird dabei auch Material eingespart, da ein Zylinder mit gleichem Außenradius mehr Wandfläche aufweist.

Gemäß einer Weiterbildung der Erfindung ist eine Stimulationsvorrichtung vorgesehen, wobei das vordere Ende des Gehäuses aus Silikon oder Gummi besteht, und als Kopf der Stimulationsvorrichtung vorzugsweise auswechselbar ausgestaltet ist.

Ein auswechselbares vorderes Ende hat den Vorteil, dass dieses bei Verschleiß einfach ausgetauscht werden kann, oder auch, dass die Reinigung der Stimulationsvorrichtung nach Gebrauch erleichtert wird.

Gemäß einer Weiterbildung der Erfindung ist eine Stimulationsvorrichtung vorgesehen, wobei das Silikon des vorderen Endes medizinisches Silikon mit einem Druck-Elastizitätsmodul kleiner als 0,1 N/mm², vorzugsweise kleiner 0,05 N/mm², insbesondere kleiner 0,01 N/mm², ist.

Der Kopf der Druckfelderzeugungseinrichtung kann insbesondere aus Silikon, vorzugsweise Silikonkautschuk oder Silikonelastomer, bestehen, welches relativ elastisch bzw. weich sein kann.

Herkömmlicherweise kommen die bei üblichen Stimulationsvorrichtungen für die Klitoris Silikone zum Einsatz, welche ein Elastizitätsmodul (E-Modul) von größer 0,5 N/mm² (bzw. ein Schubmodul/G-Modul von größer 0,2 N/mm²) aufweisen, damit diese dauerhaft stabil bleiben und sich dauerhaft befestigen lassen.

Die Literaturstellen (vgl.: Linder-Ganz E, Shabshin N, Itzchak Y, Gefen A. Assessment of mechanical conditions in sub-dermal tissues during sitting: a combined experimental-MRI and finite element approach; sowie: Zahouani H, Pailler-Mattei C, Sohm B, Vargiolu R, Cenizo V, Debret R. Characterization of the mechanical properties of a dermal equivalent compared with human skin in vivo by indentation and static friction tests. Skin Res Technol 2009;15:68-76; und: Wu JZ, Cutlip RG, Andrew ME, Dong RG. Simultaneous determination of the nonlinear-elastic properties of skin and subcutaneous tissue in unconfined compression tests. Skin Res Technol 2007;13:34-42; und: Jessica L. Sparks, PhD; Nicholas A. Vavalle, MS; Krysten E. Kasting; Benjamin Long, MS; Martin L. Tanaka, PhD; Phillip A. Sanger, PhD; Karen Schnell, MSN; and Teresa A. Conner-Kerr, PhD, Use of Silicone Materials to Simulate Tissue Biomechanics as Related to Deep Tissue Injury, ADVANCES IN SKIN & WOUND CARE & VOL. 28 NO. 2, 2015) geben Werte des Schubmoduls (G-Moduls) der Haut im Bereich von ca. 2,8 - 31,9 kPa (ca. 0,0028 N/mm² - 0,0319 N/mm²) an.

Bei den die Klitoris betreffenden Hautbereichen kann man davon ausgehen, dass diese ein Schubmodul (G-Modul) aufweisen, das eher im niedrigen Bereich zwischen ca. 2,8 kPa und 15 kPa (ca. 0,0028 N/mm² - 0,015 N/mm²) angesiedelt ist.

Aufgrund des vorstehend dargelegten deutlichen Unterschieds der Elastizitätsmodule bzw. der Schubmodule von Silikon zu Haut wird bei üblichen Stimulationsvorrichtungen mit Silikonköpfen die Kante der Öffnung 41 der zweiten Kammer (4a und 4b) von den Nutzerinnen von Stimulationsvorrichtungen für die Klitoris regelmäßig als zu "hart" empfunden.

Es ist taktil vorteilhaft, wenn das Silikonmaterial elastische Eigenschaften aufweist, die den elastischen Eigenschaften der menschlichen Haut und des darunterliegenden Gewebes entsprechen oder zumindest nahekommen. Durch diese Anpassung der elastischen Eigenschaften wird der Silikonkopf als angenehmer bzw. weicher empfunden.

Folglich ist es vorteilhaft, wenn der erfindungsgemäße Silikonkopf aus einem Silikon besteht, welches ein Elastizitätsmodul (E-Modul) von kleiner 0,1 N/mm² aufweist. Analog würde dies einem Schubmodul (G-Modul) von kleiner etwa 0,04 N/mm² entsprechen. Ein noch weicheres bzw. elastischeres Material wird als noch angenehmer empfunden.

Entsprechende weichere Silikonköpfe können mittels eines (beispielsweise mit dem Silikonkopf integral ausgebildeten und verklebten) Trägerstücks oder eines Trägerkörpers dauerhaft an der erfindungsgemäßen Stimulationsvorrichtung befestigt werden. Auch können mit der Stimulationsvorrichtung 1 mehrere Silikonköpfe zum Austausch bei Verschleiß mitgeliefert werden.

Gemäß einer Weiterbildung der Erfindung ist eine Stimulationsvorrichtung vorgesehen, wobei das Silikon des vorderen Endes Additive, insbesondere Stabilisatoren oder Farbstoffe, aufweist.

Vorzugsweise können bei der Herstellung des vorderen Endes aus Silikon zudem Farbpasten hinzugefügt werden, die dem Silikon die Farbe Rot (beispielsweise RAL 3020) oder rotviolett (beispielsweise RAL 4002) verleihen.

Es kann weiter bei der Herstellung des erfindungsgemäßen Silikonkopfs eine platinkatalysierte Additionsvernetzung zum Einsatz kommen. Vorteilhaft ist dabei, dass dabei kein Geruch oder Geschmack des Silikons entsteht, und eine schnelle Vulkanisation und damit kurze Zykluszeiten erreicht werden.

Gemäß einer Weiterbildung der Erfindung ist eine Stimulationsvorrichtung vorgesehen, wobei das Gehäuse vollständig oder teilweise mit einer Schicht aus Silikon, Gummi oder Vinyl ummantelt ist. Damit können auch weitere Teile der Stimulationsvorrichtung haptisch vorteilhaft ausgebildet sein, um weitere Arten der Handhabung bzw. des Haltens mit der Hand zu begünstigen.

Gemäß einer Weiterbildung der Erfindung ist eine Stimulationsvorrichtung vorgesehen, bei der eine becherförmige (oder halbseitig offene) Kappe, welche an dem Gehäuse anbringbar oder aufsteckbar ist, so dass die Kappe zumindest die Öffnung des Hohlraums abdeckt.

Eine solche Kappe verbessert die Transportfähigkeit und die Hygiene der Stimulationsvorrichtung, da die Öffnung des Hohlraums abgedeckt wird. Da die Öffnung des Hohlraums regelmäßig im Intimbereich zu Einsatz kommt, schützt die erfindungsgemäße Kappe die Öffnung und damit auch den Hohlraum vor Verunreinigungen. Ist das vordere Ende der Stimulationsvorrichtung zudem aus (weichem) Silikon ausgestaltet, dann ist dieses Ende empfindlich gegenüber mechanischen Belastungen. So schützt die Kappe das vordere Ende der Stimulationsvorrichtung auch vor mechanischen Beschädigungen.

Die erfindungsgemäße Kappe kann eine Querschnittsform aufweisen, welcher der äußeren Querschnittsform des Gehäuses entspricht. Beispielsweise kann die Querschnittsform der Kappe gleichdick, rund, oval oder regelmäßig n-eckig sein.

Gemäß einer Weiterbildung der Erfindung ist eine Stimulationsvorrichtung vorgesehen, wobei die erfindungsgemäße Kappe derart dimensioniert ist, dass diese auf die Stimulationsvorrichtung bis zu einem Anschlag übergestülpt bzw. aufgesteckt werden kann, so dass das vordere Ende und der mittlere Abschnitt von der Kappe (vorzugsweise vollständig) abgedeckt werden.

Damit können vorteilhaft nicht nur die Öffnung und das vordere Ende der Stimulationsvorrichtung durch die Kappe abgedeckt und geschützt werden, sondern auch die Griffbereiche, welche ebenso aus empfindlichen Silikon bestehen können oder mit Gummi beschichtet sind.

Gemäß einer Weiterbildung der Erfindung ist eine Stimulationsvorrichtung vorgesehen, wobei das Gehäuse derart eingerichtet ist, dass dieses wasserdicht, vorzugsweise IP67, vorgesehen ist; und der Hohlraum der Druckfelderzeugungseinrichtung wasserdicht, vorzugsweise IP67, gegenüber dem Inneren der Stimulationsvorrichtung vorgesehen ist.

So ist insbesondere der Hohlraum gegenüber dem Rest des Inneren der Stimulationsvorrichtung derart abgedichtet, dass dies den (genormten EU-) IP67 Spezifikationen entspricht. Dies ist bei der erfindungsgemäßen Stimulationsvorrichtung deshalb möglich, da der erfindungsgemäße Hohlraum nur eine einzige Öffnung zum Äußeren des Gehäuses aufweist, und umgekehrt keine Öffnung (beispielsweise über ein Ventil) in das (weitere) Gehäuseinnere. Mit einer solchen Abdichtung nach IP67 eröffnen sich weitere Einsatzmöglichkeiten der Stimulationsvorrichtung, beispielsweise im Schwimmbad, wobei aufgrund der relativ hohen IP-Klassifizierung auch die Zuverlässigkeit der Vorrichtung gewährleistet ist. Weiter sind auch eventuell vorhandene Buchsen für die Stromversorgung abzudichten, beispielweise mittels entsprechender Stopfen, die in die Buchsen eingefügt werden können.

Gemäß einer Weiterbildung weist Hohlraum der Druckfelderzeugungseinrichtung zumindest eine erste Kammer und zumindest eine zweite Kammer mit der Öffnung zum Aufsetzen über die erogene Zone und zumindest ein Verbindungselement mit zumindest einer Öffnung in die zweite Kammer auf, wobei das Verbindungselement die erste Kammer mit der zweiten Kammer verbindet; und wobei die Antriebseinheit, das Volumen der ersten Kammer durch Auslenkung der flexiblen Wand derart verändern kann, dass über das Verbindungselement in der zweiten Kammer das Druckfeld erzeugt wird, welches der Stimulation dient.

Gemäß einer Weiterbildung der Erfindung ist ein System mit einer Stimulationsvorrichtung und mit einer Halterung zum Aufbewahren und Laden der Stimulationsvorrichtung vorgesehen, wobei die Ladehalterung eine (induktive) halterungsseitige Ladespule aufweist, und die Stimulationsvorrichtung eine dazu komplementäre stimulationsvorrichtungsseitige Ladespule aufweist, und die Batterie der Stimulationsvorrichtung mittels induktiver Kopplung dieser Ladespulen aufgeladen werden kann, wenn die Stimulationsvorrichtung in oder an der Ladehalterung deponiert ist, wobei die Stimulationsvorrichtung keine Buchse zur Stromversorgung aufweist.

Dies erlaubt ein draht- bzw. kabelloses Aufladen der erfindungsgemäßen Stimulationsvorrichtung. Es werden in diesem Fall auch keine Anschlüsse der Stimulationsvorrichtung benötigt, um diese mit Energie zu versorgen, beispielsweise um deren Batterie aufzuladen. Die Stimulationsvorrichtung ist dann buchsenfrei oder verbinderfrei ausgestaltet.

Gemäß einer Weiterbildung der Erfindung ist ein System mit einer Stimulationsvorrichtung, wie vorstehend erläutert, vorgesehen, wobei die halterungsseitige Ladespule und die stimulationsvorrichtungsseitige Ladespule derart angeordnet sind, dass diese benachbart zueinander angeordnet sind, wenn die Stimulationsvorrichtung in oder an der Ladehalterung deponiert ist.

Gemäß einer Weiterbildung der Erfindung ist die Stimulationsvorrichtung pistolengrifflos eingerichtet.

Gemäß einer Weiterbildung der Erfindung ist die Stimulationsvorrichtung ventillos eingerichtet.

Es wird weiter die Verwendung der Stimulationsvorrichtung zum sexuellen Vergnügen, und nicht zu medizinischen oder therapeutischen Zwecken, vorgeschlagen.

Bei der vorliegenden Erfindung dienen die später näher erläuterten Verfahren zur Stimulation von erogenen Zonen zum sexuellen Vergnügen, mithin dienen die Verfahren nicht medizinischen, beispielsweise therapeutischen, Zwecken.

Gemäß einem weiteren Aspekt der Erfindung wird nach einem weiteren Aspekt der Erfindung die Verwendung der erfindungsgemäßen Stimulationsvorrichtung als Sexspielzeug zur Stimulation der weiblichen Klitoris vorgeschlagen. Wie eingangs erläutert, ist die weibliche Klitoris eine besonders empfindliche erogene Zone der Frau, weshalb die erfindungsgemäße Verwendung einer indirekten Überdruckstimulation in Kombination mit einer Unterdruckstimulation für die Klitoris zur Stimulation bis zum Orgasmus bzw. bis zum sexuellen Höhepunkt besonders vorteilhaft erscheint.

Gemäß einer Weiterbildung ist die Stimulationsvorrichtung, vorzugsweise bei dem vorderen Ende und dem mittleren Abschnitt, einheitlich ausgestaltet. Einheitlich bedeutet hierbei insbesondere, dass die Übergänge zwischen den einzelnen Gehäuseabschnitten spaltfrei ausgestaltet sind. Vorzugsweise sind die Übergänge von dem vorderen Ende zu dem mittleren Abschnitt (und umgekehrt) nahtlos oder spaltfrei, oder zumindest formbeibehaltend, ausgestaltet. Dies verbessert die Hygiene und die Bedienbarkeit der Stimulationsvorrichtung.

Die vorstehend beschriebenen Merkmale und Funktionen der vorliegenden Erfindung sowie weitere Aspekte und Merkmale werden nachfolgend anhand einer detaillierten Beschreibung von bevorzugten Ausführungsformen unter Bezugnahme auf die beigefügten Figuren weiter beschrieben. In den Figuren sind gleiche Merkmale/Elemente und Merkmale/Elemente mit der gleichen Funktion mit den gleichen Bezugszeichen gekennzeichnet.

### KURZE BESCHREIBUNG DER ZEICHNUNGEN

Es zeigt /es zeigen:
- Fig. 1: eine Vorderansicht einer Ausführungsform einer Stimulationsvorrichtung des Stands der Technik;

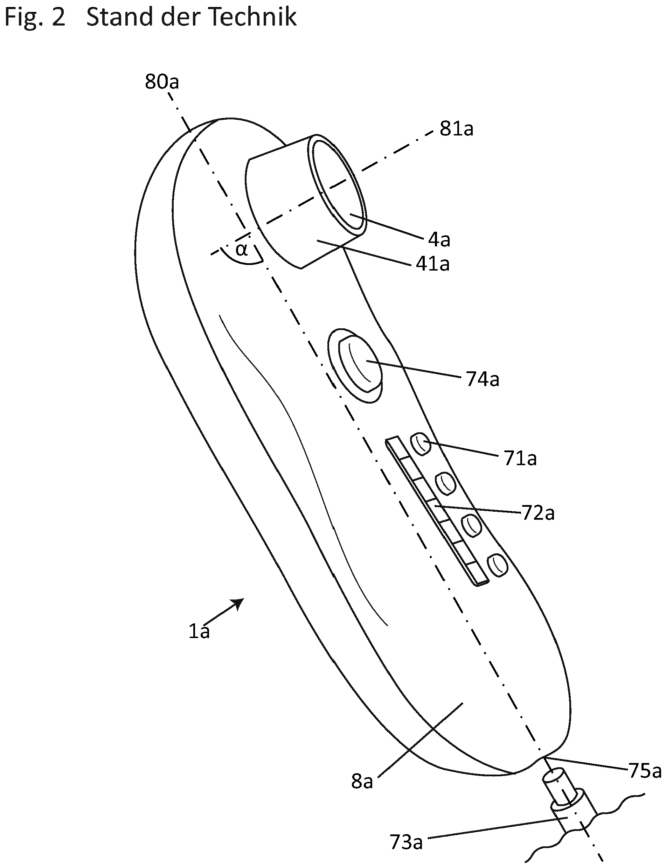

- Fig. 2: eine perspektivische Seitenansicht einer Stimulationsvorrichtung des Stands der Technik;
- Fig. 3: einen Querschnitt durch eine Stimulationsvorrichtung des Stands der Technik;
- Fig. 4: eine Vorderansicht einer Stimulationsvorrichtung des Stands der Technik mit einem Fortsatz in gerader Position;
- Fig. 5: eine Seitenansicht einer Stimulationsvorrichtung des Stands der Technik mit dem Fortsatz in abgewinkelter Position;
- Fig. 6: einen schematischen Querschnitt einer Stimulationsvorrichtung des Stands der Technik;
- Fig. 7a: eine Seitenansicht einer erfindungsgemäßen Stimulationsvorrichtung einer ersten Ausführungsform,
- Fig. 7b: eine Ansicht der erfindungsgemäßen Stimulationsvorrichtung der Fig. 7a von hinten;
- Fig. 8a: eine Seitenansicht einer erfindungsgemäßen Stimulationsvorrichtung einer zweiten Ausführungsform;
- Fig. 8b: eine Ansicht der erfindungsgemäßen Stimulationsvorrichtung der Fig. 8a von hinten;
- Fig. 9a: eine Seitenansicht einer erfindungsgemäßen Stimulationsvorrichtung einer dritten Ausführungsform;
- Fig. 9b: eine Ansicht der erfindungsgemäßen Stimulationsvorrichtung der Fig. 9a von hinten;

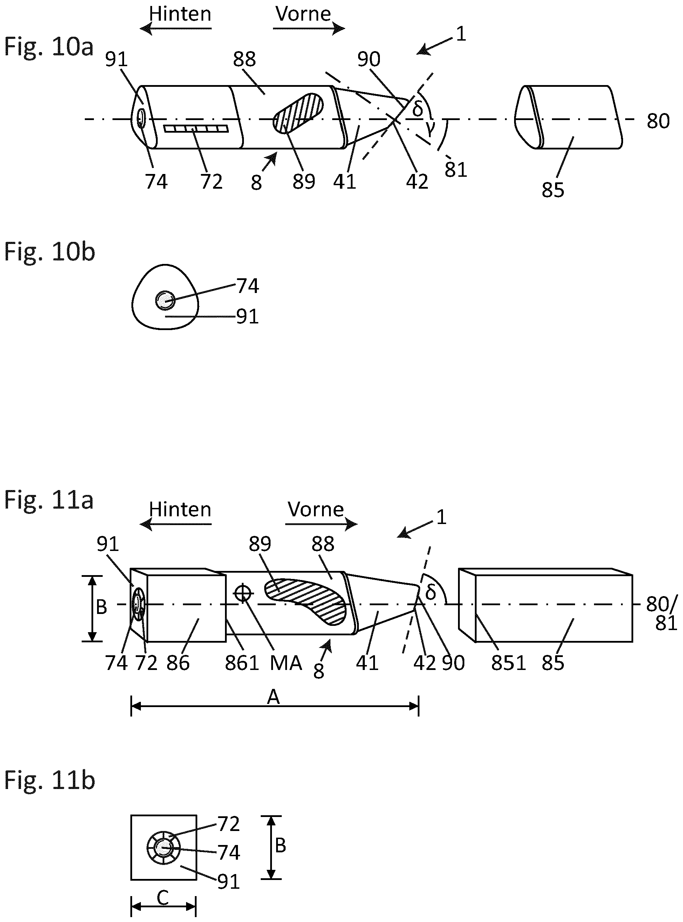

- Fig. 10a: eine Seitenansicht einer erfindungsgemäßen Stimulationsvorrichtung einer vierten Ausführungsform;
- Fig. 10b: eine Ansicht der erfindungsgemäßen Stimulationsvorrichtung der Fig. 10a von hinten;
- Fig. 11a: eine Seitenansicht einer erfindungsgemäßen Stimulationsvorrichtung einer fünften Ausführungsform;
- Fig. 11b: eine Ansicht der erfindungsgemäßen Stimulationsvorrichtung der Fig. 11a von hinten;

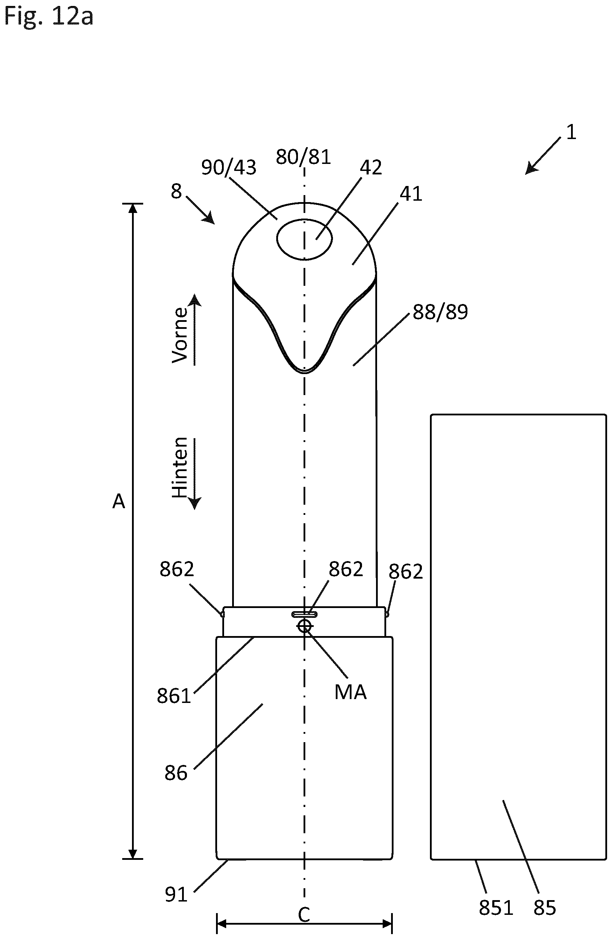

- Fig. 12a: eine Seitenansicht einer erfindungsgemäßen Stimulationsvorrichtung einer sechsten Ausführungsform;

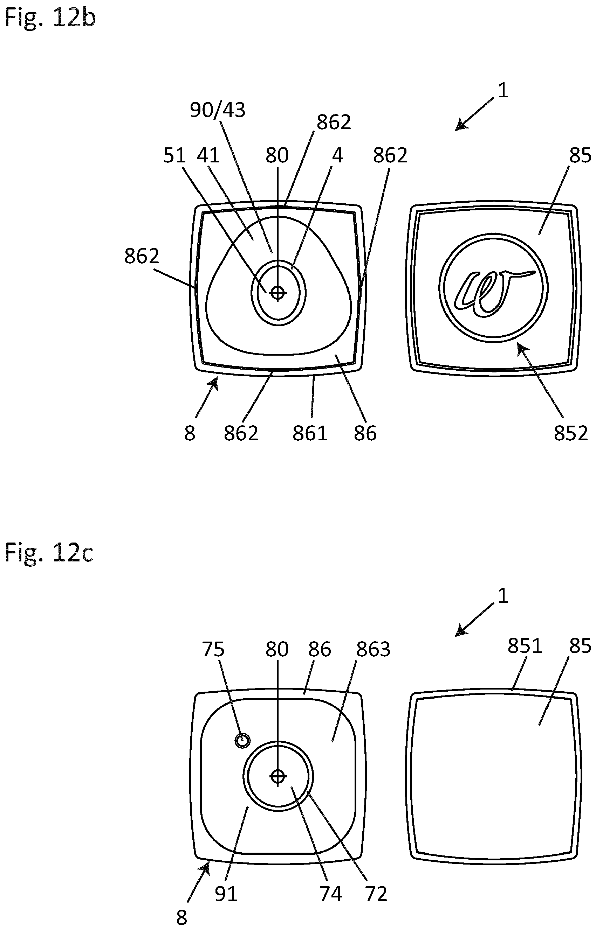

- Fig. 12b: eine Ansicht einer erfindungsgemäßen Stimulationsvorrichtung einer sechsten Ausführungsform von vorne;
- Fig. 12c: eine Ansicht einer erfindungsgemäßen Stimulationsvorrichtung einer sechsten Ausführungsform von hinten;

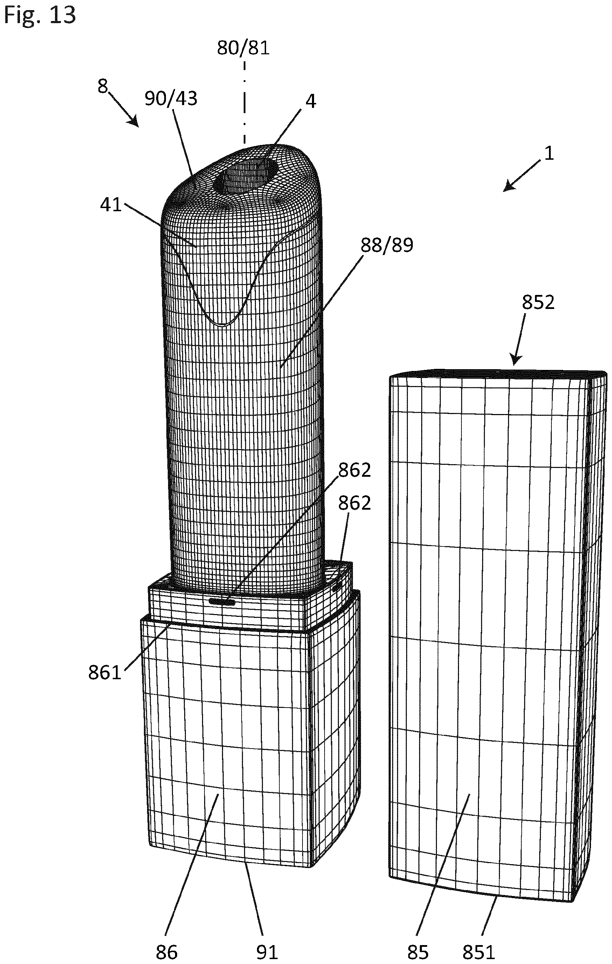

- Fig. 13: eine perspektivische Ansicht eines 3D-Drahtgittermodells der sechsten Ausführungsform der erfindungsgemäßen Stimulationsvorrichtung;

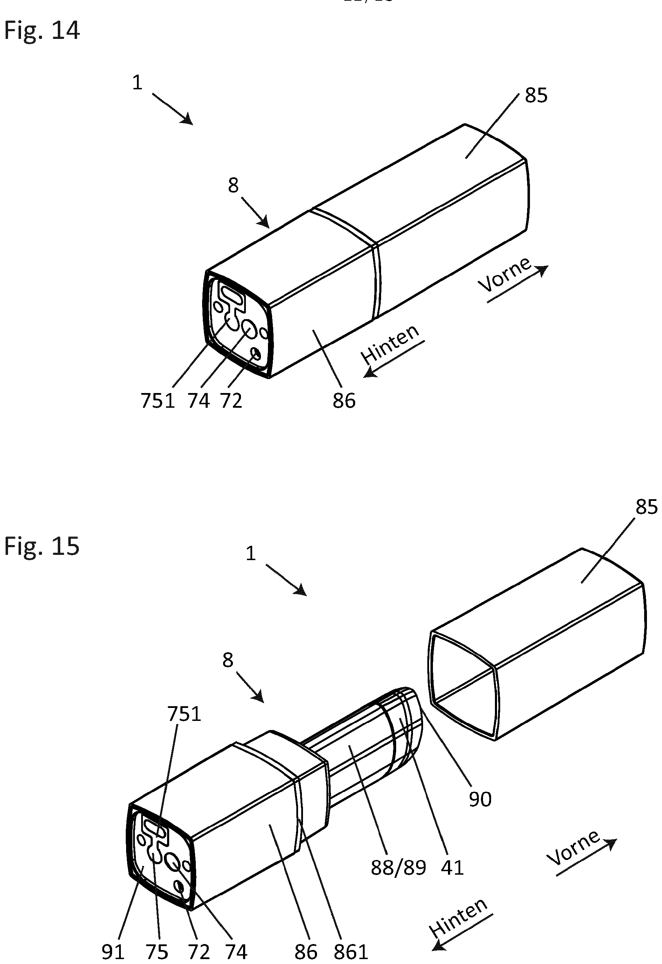

- Fig. 14: eine perspektivische Ansicht einer erfindungsgemäßen Stimulationsvorrichtung einer siebten Ausführungsform mit geschlossener Kappe;
- Fig. 15: eine perspektivische Ansicht einer erfindungsgemäßen Stimulationsvorrichtung einer siebten Ausführungsform mit nach vorne geöffneter Kappe;

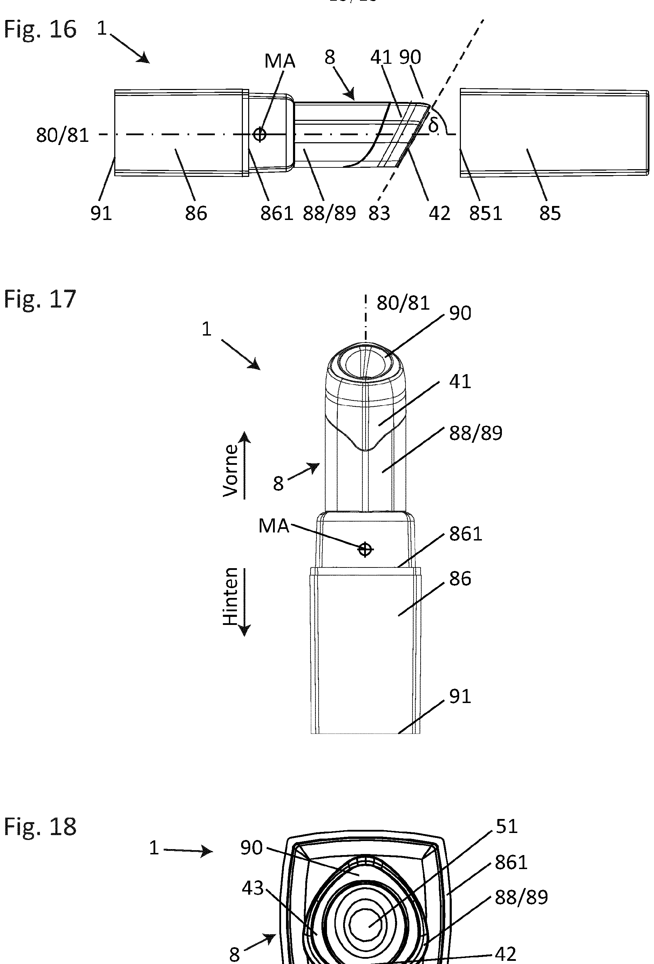

- Fig. 16: eine Seitenansicht einer liegenden erfindungsgemäßen Stimulationsvorrichtung einer siebten Ausführungsform mit geöffneter Kappe;
- Fig. 17: eine Seitenansicht einer stehenden erfindungsgemäßen Stimulationsvorrichtung einer siebten Ausführungsform ohne Kappe;
- Fig. 18: eine Ansicht einer erfindungsgemäßen Stimulationsvorrichtung einer siebten Ausführungsform von vorne;

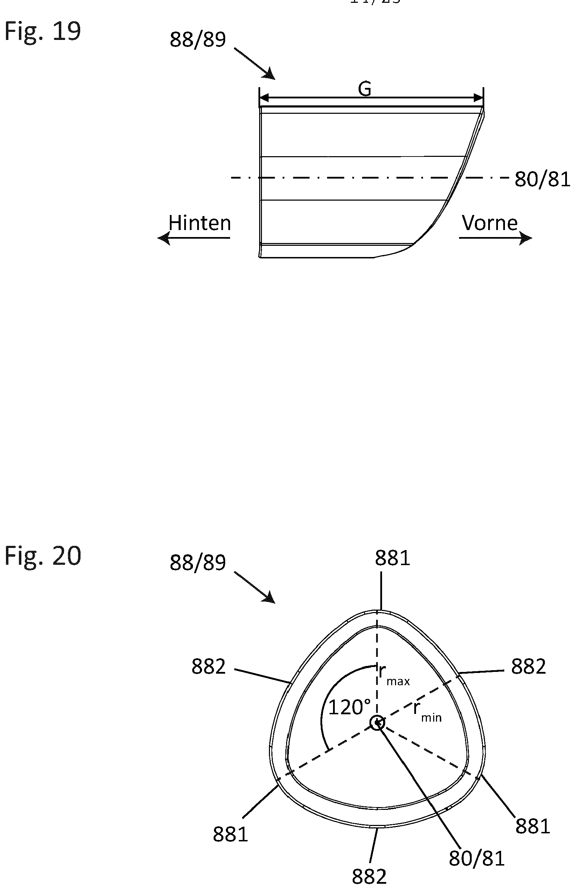

- Fig. 19: eine Seitenansicht eines erfindungsgemäßen Griffstücks der siebten Ausführungsform;
- Fig. 20: eine Schnittansicht eines erfindungsgemäßen Griffstücks der siebten Ausführungsform in Querrichtung des Gehäuses;
- Fig. 21: einen schematischen Querschnitt durch eine Druckfelderzeugungseinrichtung eines Aspekts der vorliegenden Erfindung;
- Fig. 22: einen schematischen Querschnitt durch eine Druckfelderzeugungseinrichtung eines weiteren Aspekts der vorliegenden Erfindung;

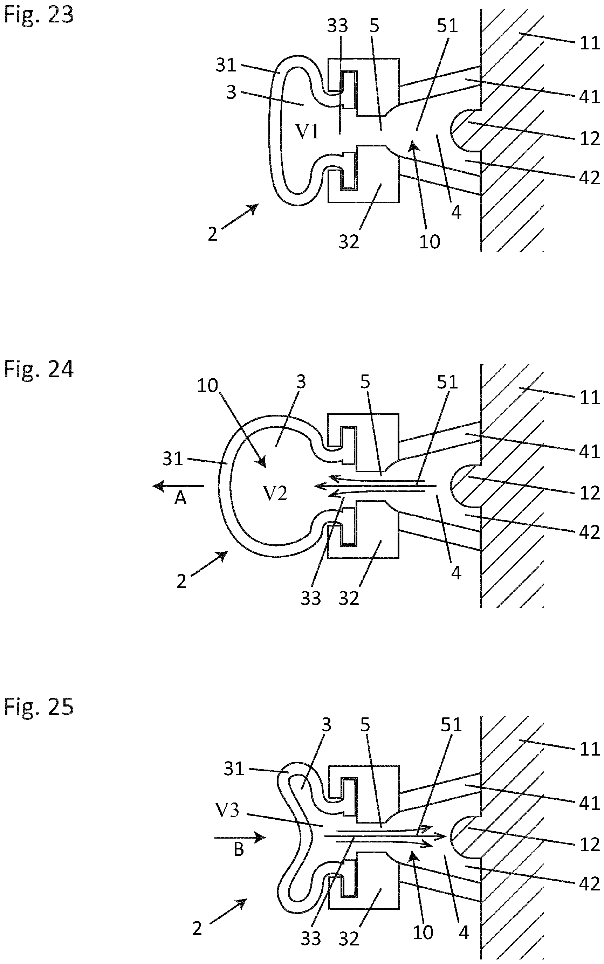

- Fig. 23: einen Querschnitt durch eine Druckfelderzeugungseinrichtung eines weiteren Aspekts der vorliegenden Erfindung im ersten Zustand;
- Fig. 24: einen Querschnitt durch eine Druckfelderzeugungseinrichtung des Aspekts der Fig. 23 der vorliegenden Erfindung im zweiten Zustand;
- Fig. 25: einen Querschnitt durch eine Druckfelderzeugungseinrichtung des Aspekts der Fig. 23 und der Fig. 24 der vorliegenden Erfindung im dritten Zustand;

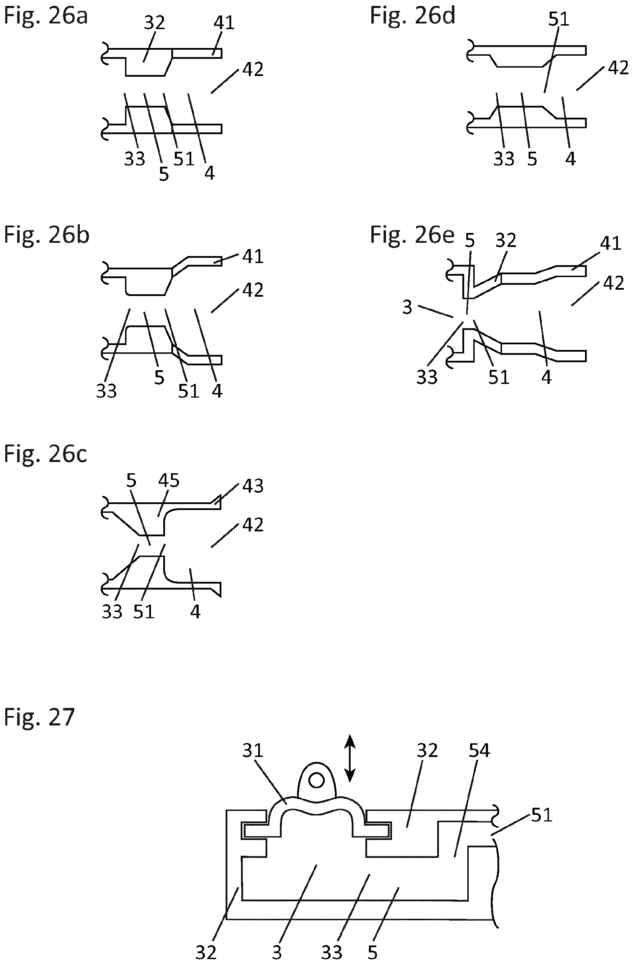

- Figuren 26 a) bis e): schematische Querschnittsansichten durch Abschnitte des erfindungsgemäßen Hohlraums
- Fig. 27: schematische Querschnittsansichten durch Abschnitte des erfindungsgemäßen Hohlraums

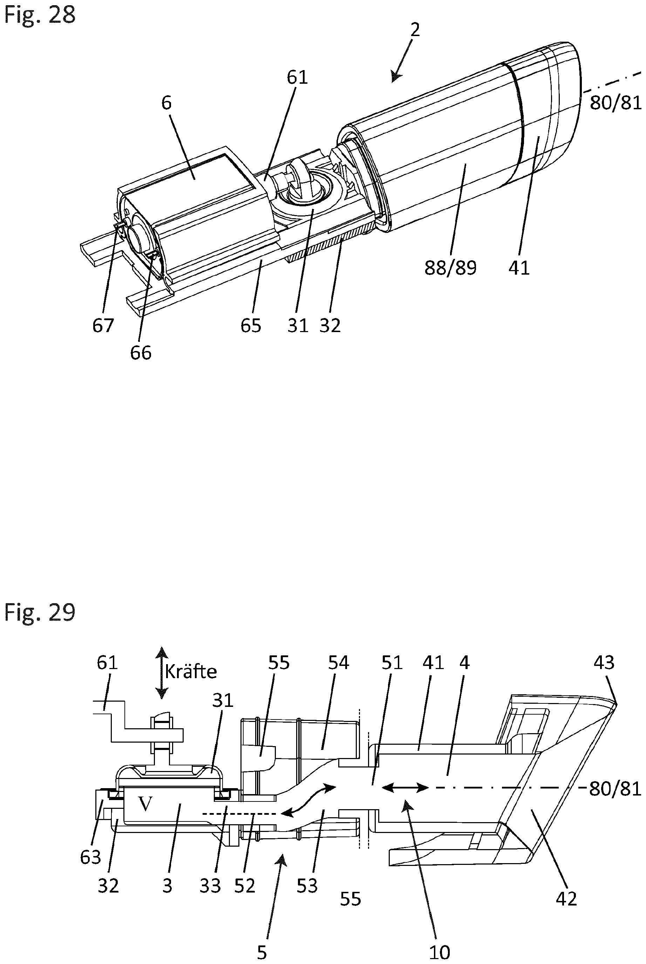

- Fig. 28: eine perspektivische Seitenansicht einer Druckfelderzeugungseinrichtung der Stimulationsvorrichtung der siebten Ausführungsform der vorliegenden Erfindung;
- Fig. 29: eine schematische Schnittansicht durch die erfindungsgemäßen Druckfelderzeugungseinrichtung der Fig. 28;

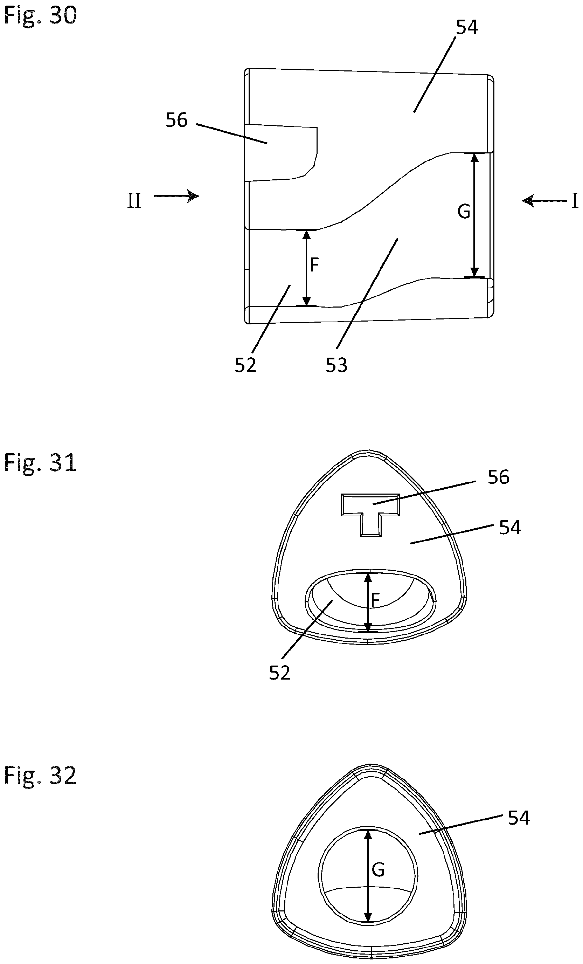

- Fig. 30: eine Schnittansicht in Längsrichtung durch ein Dämpfungselement der Druckfelderzeugungseinrichtung der Fig. 28;
- Fig. 31: eine Ansicht des Dämpfungselements der Druckfelderzeugungseinrichtung der Fig. 28 von hinten;
- Fig. 32: eine Ansicht des Dämpfungselements der Druckfelderzeugungseinrichtung der Fig. 28 von vorne;

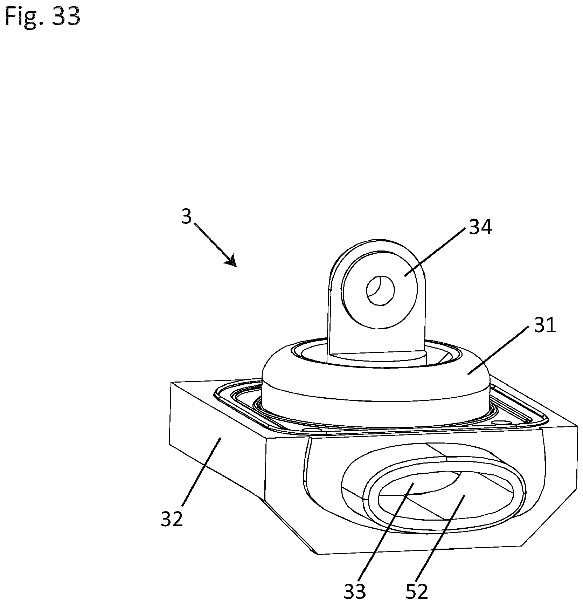

- Fig. 33: eine perspektivische Ansicht eines Abschnitts des Hohlraums bzw. einer ersten Kammer der Druckfelderzeugungseinrichtung der Fig. 28;

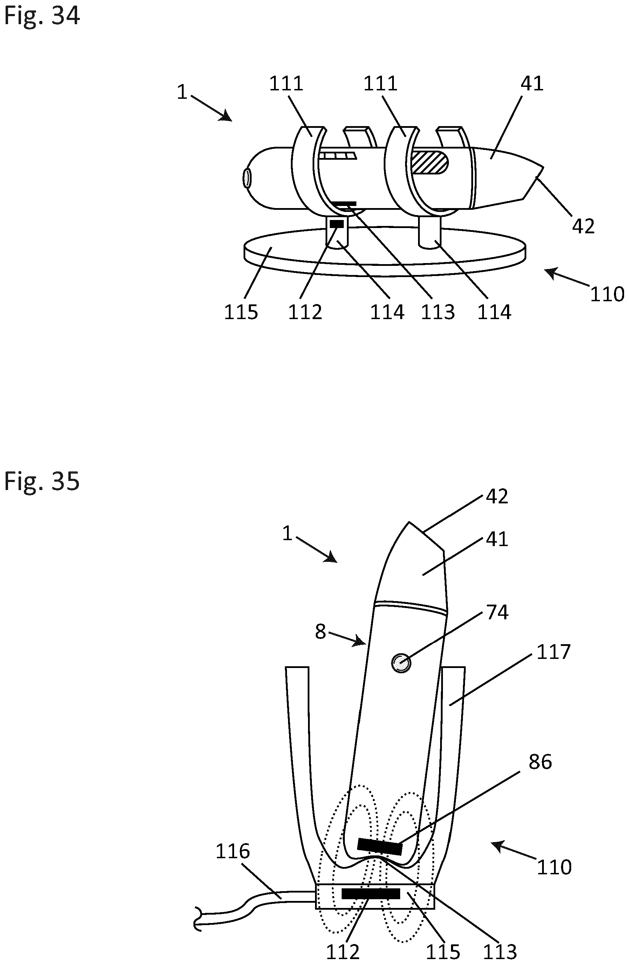

- Fig. 34: eine schematische Ansicht einer erfindungsgemäßen Halterung für eine Stimulationsvorrichtung einer Ausführungsform;
- Fig. 35: eine schematische Schnittansicht einer erfindungsgemäßen becherförmigen Halterung für eine Stimulationsvorrichtung einer Ausführungsform;

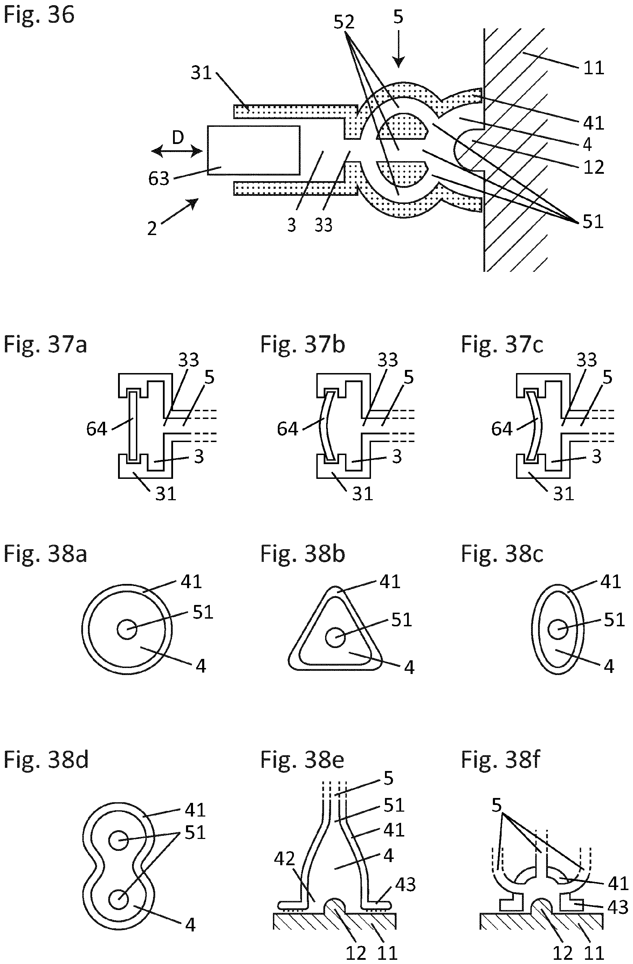

- Fig. 36: einen Querschnitt durch eine Druckfelderzeugungseinrichtung eines weiteren Aspekts der vorliegenden Erfindung;
- Figuren 37 a), b) und c): schematische Querschnitte durch eine Druckfelderzeugungseinrichtung eines weiteren Aspekts der vorliegenden Erfindung;
- Figuren 38 a) bis f): verschiedene Unter- und Seitenansichten weiterer Aspekte einer zweiten Kammer der vorliegenden Erfindung;
- Fig. 39: ein Blockdiagramm eines Aspekts der vorliegenden Erfindung;
- Figuren 40 a) bis c): Diagramme von verschiedenen Mustern der Druckmodulationen der vorliegenden Erfindung.

### BESCHREIBUNG BEVORZUGTER AUSFÜHRUNGSFORMEN UND ASPEKTEN DER ERFINDUNG

Es werden in nachstehendem Abschnitt gleiche oder identische Merkmale, welche schon in Bezug auf eine vorausgehende Ausführungsform oder in Bezug auf einen vorausgehenden Aspekt hierin näher beschrieben wurden, nicht nochmals erläutert, um Wiederholungen zu vermeiden. Gleiche Bezugszeichen bezeichnen im Allgemeinen gleiche oder funktionell übereinstimmende Merkmale.

Bezugnehmend auf die Fig. 7 a) wird eine Seitenansicht einer erfindungsgemäßen Stimulationsvorrichtung 1 einer ersten Ausführungsform und bezugnehmend auf Fig. 7 b) wird eine Ansicht der erfindungsgemäßen Stimulationsvorrichtung 1 der Fig. 7 a) von hinten näher erläutert.

Die Fig. 7 a) und 7 b) zeigen eine längliche und stabförmige Stimulationsvorrichtung 1 mit einem Gehäuse 8 (beispielsweise aus ABS-Kunststoff), und einem vorderen Ende 90, einem hinteren Ende 91, wobei die Stimulationsvorrichtung 1 in ihrem Querschnitt bzw. in der Außenkontur in ihrer Querschnittsebene kreisförmig ausgebildet ist. Im hinteren Ende ist ein An/Aus-Schalter 74 vorgesehen, welcher optional ein Leuchtelement zur Anzeige des Anschaltzustands aufweist. Eine optionale Anzeige 72 kann die aktuelle Einstellung des Modulationsmusters oder der Stärke des stimulierenden Druckfelds wiedergeben. Ein mittlerer Abschnitt 88 ist optional mit Silikon beschichtet, während eine Grifffläche 89 (und eine weitere Grifffläche 89 auf der abgewandten Seite, die nicht näher dargestellt ist) in Form einer länglichen ovale Fläche (beispielsweise als lamesches Oval) die bevorzugte Auflageposition für die Finger angeben und für einen guten Halt der Finger sorgen. Diese Griffflächen 89 können beispielsweise farbig gekennzeichnet sein, oder es kann eine zusätzliche Gummierung auf der Oberfläche des mittleren Abschnitts 88 aufgebracht sein.

Eine zu dem vorderen Ende 90 komplementäre bzw. in der Form passende becherförmige Kappe 85 ist derart ausgebildet, dass diese -ähnlich einer Kappe eines Schreibstifts-auf das vordere Ende 90 aufgesteckt werden kann. Die Kappe 85 verdeckt (und schützt) im aufgesteckten Zustand den vorderen Kopf bzw. die Wand 41 und die Öffnung 42 der Stimulationsvorrichtung 1 und reicht in Längsrichtung bis zum Übergang bzw. der Schnittstelle der Wand 41 am vorderen Ende 90 zu den mittleren Abschnitt 88.

Vorzugsweise ist der Außendurchmesser der Kappe 85 in Querrichtung gleich dem Außendurchmessers des Gehäuses 8 in Querrichtung.

Die Öffnung 42 der Stimulationsvorrichtung 1 ist in dem vorderen Ende 90 angeordnet, wobei die Längsachse 80 durch die Öffnung 42 hindurchtritt. Die Richtungen "Vorne" und "Hinten" sind entsprechend in der Figur mit den Pfeilen angegeben. Das vordere Ende 90 ist das "aktive" Ende, welches zur Stimulation mittels Druckfeld zum Einsatz kommt.

Die Öffnung 42 ist in Bezug auf die Längsachse 80 winklig bzw. angeschrägt ausgebildet, weshalb die Öffnungsebene 83 (die durch die äußeren Ränder der Öffnung definiert wird) von der Längsachse 80 in einem Winkel δ geschnitten wird. Dieser Winkel beträgt vorzugsweise 60 Grad (±5 Grad). Die mit dem Bezugszeichen 81 gekennzeichnete Achse gibt die Ausrichtungsachse 81 des Hohlraums 10 der erfindungsgemäßen Stimulationsvorrichtung 1 an. So sind der Hohlraum 10 und die Öffnung 42 im Bereich der Öffnung 42 strömungstechnisch so ausgestaltet, dass das Druckfeld an der Öffnung 42 des Gehäuses 8 strömungstechnische Vorzugsrichtungen (der hin und her Bewegung des Mediums) entlang der Ausrichtungsachse 81 im nicht aufgesetzten Zustand der Stimulationsvorrichtung 1 aufweist.

Der An/Aus-Schalter 74 kann vorzugsweise im Gehäuse 8 versenkt ausgebildet sein, damit dieser nicht aus dem Gehäuse 8 hervorsteht.

Die Längsachse 80 ist eine gedachte Linie zwischen dem vorderen Ende 90 und dem hinteren Ende 91, welche vorliegend bei der Fig. 7a und der Fig. 7b zugleich die Symmetrieachse für die Grundform des Gehäuses 8 darstellt. Nicht berücksichtigt werden bei diesen Symmetrieüberlegungen beispielsweise Bedienelemente 74, Anzeigen 72 oder Griffflächen 89, die nur geringfügige Anpassungen der Grundform des Gehäuses 8 darstellen.

Die Ausrichtungsachse 81 schneidet die Längsachse 80 vorzugsweise in einem Winkel γ von ca. 30 Grad, während die Öffnungsebene 83 rechtwinklig zur Ausrichtungsachse 81 angeordnet ist.

Damit weist die erfindungsgemäße Stimulationsvorrichtung 1 einen kompakten, länglich-schlanken Aufbau auf. Dies führt zu Gewichtseinsparungen und einer ergonomischen Bedienbarkeit der Vorrichtung 1. Vorzugsweise ist die Stimulationsvorrichtung 1 der Fig. 7 a) und 7 b) wasserfest (IP67) ausgeführt. Deshalb und aufgrund der einfachen Außenform der Stimulationsvorrichtung 1 ist diese leicht zu reinigen.

Bezugnehmend auf die Fig. 8 a) wird eine Seitenansicht einer erfindungsgemäßen Stimulationsvorrichtung einer zweiten Ausführungsform und bezugnehmend auf die Fig. 8b wird eine Ansicht der erfindungsgemäßen Stimulationsvorrichtung der Fig. 8 a) von hinten näher erläutert.

Die zweite Ausführungsform weist ein regelmäßiges, sechseckiges Gehäuse 8 auf, welches ein flaches hinteres Ende 91 aufweist. Damit kann man dieses Gehäuse 8 vorteilhaft gut hinstellen oder auch hinlegen, ohne dass es wegrollt. Die Gehäuseform dient also als Rollstopp. Die Öffnungsebene der Öffnung 42 im vorderen Ende 90 des Gehäuses 8 ist rechtwinklig (vgl. Winkel δ) zur Längsachse 80 angeordnet. Die Ausrichtungsachse 81 fällt bei dieser Ausführungsform mit der Längsachse 80 zusammen. Der An/Aus-Schalter 74 und die Anzeige 72 sind benachbart zum vorderen Ende 80 angeordnet. Die Kappe 85 ist analog ausgebildet, wie bei der ersten Ausführungsform, und passt entsprechend zur Gehäuseform des Gehäuses 8 der zweiten Ausführungsform.

Bezugnehmend auf die Fig. 9 a) wird eine Seitenansicht einer erfindungsgemäßen Stimulationsvorrichtung einer dritten Ausführungsform und bezugnehmend auf Fig. 9 b) wird eine Ansicht der erfindungsgemäßen Stimulationsvorrichtung der Fig. 9 a) von hinten näher erläutert.

Das Gehäuse 8 dieser Ausführungsform ist etwa mittig tailliert ausgestaltet, und verjüngt sich entsprechend zu Mitte hin. Die beiden - in Längsrichtung des Gehäuses 8 betrachtet - Verdickungen bzw. Ausbeulungen links und rechts der mittigen Verjüngung weisen vorzugsweise beide den gleichen Maximalradius in Querrichtung auf. Das Gehäuse 8 weist somit eine Form ähnlich eines Hundeknochens auf.

Die Querschnittsform des Gehäuses 8 ist annähernd oval, und wird vorzugsweise mit dem gleichen Breite/Höhenverhältnis über die gesamte Länge des Gehäuses 8 beibehalten. Dies führt dazu, dass das Gehäuse 8 angenehm in der Hand liegt, und nicht ohne weiteres wegrollt, falls die Stimulationsvorrichtung 1 abgelegt wird.

Der mittlere Abschnitt 88 bildet zugleich über seine gesamte Fläche die Grifffläche 89 aus, wobei diese vorzugsweise eine gummiartige Beschichtung vorsieht. Weiter ist der mittlere Abschnitt 88 über weite Teile des Gehäuses 8 in Längsrichtung ausgebildet. Dies führt in Synergie mit der taillierten Ausgestaltung des Gehäuses 8 zu einer ergonomischen Handhabbarkeit des Gehäuses 8, da das Gehäuse 8 im schlanken Bereich in der Mitte an bzw. auf der Hand zum Liegen kommen, wenn das Gehäuse 8 wie ein Schreibgerät geführt wird. Zudem liegen Daumen und Zeigefinger bei dieser Griffhaltung an der vorderen Verdickung des Gehäuses 8 an, was ergonomischer ist.

Zusätzlich weist die Stimulationsvorrichtung 1 die Verdickung bzw. knaufartige Querschnittsvergrößerung am hinteren Ende 91 auf. Dies führt vorteilhaft dazu, dass die Stimulationsvorrichtung 1 am hinteren Ende 91 eine Art "Knauf" oder "Knopf" aufweist, an dem die Stimulationsvorrichtung 1 bequem in der geschlossenen Hand (beispielsweise in Fausthaltung) gehalten werden kann, was ebenso eine ergonomische Handhaltung darstellt.

Alternativ kann die Verdickung des Gehäuses 8 am hinteren Ende 91 einen größeren Maximalradius in Querrichtung aufweisen, wie die vordere Verdickung.

Die Öffnung 42 des Hohlraums der Stimulationsvorrichtung 1 weist eine leicht konkave Öffnungsebene auf, da der vordere Rand der Öffnung 42 leicht gewellt bzw. wellenförmig im das vorderen Ende 90 des Gehäuses 8 verläuft. In diesem Falle ist auch die sich ergebende Öffnungsebene leicht konkav gekrümmt bzw. gewölbt. Eine solche Krümmung der Öffnungsebene führt dazu, dass die Öffnung 42 angenehmer über die üblicherweise ebenso (leicht) in gewölbte bzw. nicht ebene Hautpartie aufgesetzt werden kann, die die weibliche Klitoriseichel umgibt. So ist die Öffnungsebene 42 in ihrer Form an die Anatomie der Klitoris derart angepasst, dass die Öffnung 42 ohne starken Anpressdruck formschlüssig bzw. passend auf der Hautpartie aufgesetzt werden kann, die die weibliche Klitoriseichel umgibt. Der Schnittwinkel δ der Öffnungsebene 83 mit der Längsachse 80 wird im Schnittpunkt mit der Längsachse 80 bestimmt, und ist der kleinstmögliche Winkel. Als optimaler Winkel δ für den Einsatz einer solch gekrümmten Öffnungsebene 83 zur Anwendung auf die Klitoris 12 wurde experimentell ein Winkelbereich von etwa 65 bis 75 Grad bestimmt.

Die Kappe 85 ist analog zur ersten Ausführungsform ausgebildet, und passt entsprechend zur Gehäuseform des Gehäuses 8 der dritten Ausführungsform.

Der Schnittwinkel γ zwischen der Ausrichtungsachse 81 und der Längsachse 81 ist ein spitzer Winkel. Vorzugsweise beträgt dieser etwa 3 bis 12 Grad, was sich nach Experimenten generell als angenehmer Winkelbereich zur Handhabung für die Nutzerin herausgestellt hat.

Bezugnehmend auf die Fig. 10 a) wird eine Seitenansicht einer erfindungsgemäßen Stimulationsvorrichtung einer vierten Ausführungsform näher erläutert und bezugnehmend auf Fig. 10 b) wird eine Ansicht der erfindungsgemäßen Stimulationsvorrichtung der Fig. 10 a) von hinten näher erläutert.

Fig. 10a zeigt ein im Querschnitt dreieckförmiges Gehäuse, welches langgestreckt ausgebildet ist. Vorzugsweise ist die Außenform zur Material- und Gewichtsersparnis in Querschnittsrichtung gleichdick ausgeführt. Damit kann einerseits ein sehr leichtes und kompaktes Gehäuse realisiert werden, während anderseits ein dreiecksförmiges und gleichdickes Gehäuse gut zur Anatomie des Haltens des Gehäuses 8 mit Daumen und Zeigefinger nach Art eines Schreibgerätes passt, und insofern ergonomisch ist.

Der An/Aus-Schalter ist wiederum versenkt im hinteren Ende 91 des Gehäuses 8 ausgeführt, damit man die Vorrichtung 1 mit dem ebenen hinteren Ende aufrecht beispielsweise auf einen Tisch stellen kann.

Die Griffflächen 89 (eine davon ist nicht näher dargestellt, da diese verdeckt auf der abgewandten Seite des gleichdicken Dreieckes angeordnet ist) sind länglich oval ausgeführt, und derart angeordnet, dass diese die Auflagefläche der Finger auf dem Gehäuse 8 abbilden, wenn das Gehäuse 8 nach Art eines Schreibgeräts geführt wird. Die beiden Griffflächen sind somit asymmetrisch angeordnet. Die in Fig. 10a dargestellte Grifffläche 89 ist für den Daumen eines Linkshänders vorgesehen. Die nicht näher dargestellte Grifffläche würde entsprechend der (gedachten) Lage eines Zeigefingers auf der anderen Seite des Dreiecks länglich oval eher in Richtung der Längsachse 80 des Gehäuses 8 angeordnet sein. So können die Griffflächen in Ihrer flächigen Anordnung grundsätzlich an die Anatomie der Hand und der Finger der Nutzerinnen (besonders vorzugsweise nach der Vorgabe, ob eine Rechtshänderin oder eine Linkshänderin vorliegt) angepasst sein.

Zudem können die Griffflächen 89 auch als muldenförmige Vertiefungen in dem mittleren Abschnitt 89 ausgestaltet sein. Alternativ können die Griffflächen 89 entsprechende Gummierungen aufweisen, um die Greifbarkeit der Vorrichtung zu verbessern.

Die erfindungsgemäße Kappe 85 ist analog zur ersten Ausführungsform ausgebildet, und passt entsprechend zur Gehäuseform des Gehäuses 8 der dritten Ausführungsform und führt die Gehäuseform in Längsrichtung 80 fort.

Bezugnehmend auf die Fig. 11 a) wird eine Seitenansicht einer erfindungsgemäßen Stimulationsvorrichtung einer fünften Ausführungsform und bezugnehmend auf Fig. 11 b) wird eine Ansicht der erfindungsgemäßen Stimulationsvorrichtung der Fig. 11 a) von hinten näher erläutert.

Bei der fünften Ausführungsform ändert sich die Außenkontur des Querschnitts an dem Übergang zwischen dem mittleren Abschnitt 88 auf einen hinteren Abschnitt 86. Der mittlere Abschnitt 88 ist vorzugsweise im Querschnitt dreiecksförmig mit abgerundeten Ecken bzw. Kanten ausgeführt (insbesondere gleichdick; alternativ kann der mittlere Abschnitt 88 dieser Ausführungsform auch rund oder oval ausgestaltet sein). Der hintere Abschnitt 86 ist vorzugsweise quaderförmig bzw. im Querschnitt quadratisch ausgestalten (alternativ kann dieser viereckig oder auch kugelförmig ausgestaltet sein; letzteres führt zur Ausbildung eines kugel- oder knopfförmigen Halteknaufs am hinteren Ende 91 der Stimulationsvorrichtung 1). Dabei sind vorzugsweise im hinteren Abschnitt 86 des Gehäuses 8 diejenigen Teile angeordnet, die schwer sind bzw. ein hohes Gewicht aufweisen, beispielsweise die Batterie. Damit kann der Masseschwerpunkt MA des Gehäuses 8 der Stimulationsvorrichtung weiter nach hinten in Richtung des hinteren Endes 91 gelegt werden, was zu einer besseren Handhabbarkeit führt.

Das Verhältnis von Länge A zur Breite B (welche gleich der Höhe C ist) des Gehäuses ist vorzugsweise ≥ 3,5 (drei Komma fünf), insbesondere ≥ 3,9 (drei Komma neun). Aufgrund dieser länglichen Ausgestaltung ist das Gehäuse 8 besser handzuhaben und ergonomischer.

Die Anzeige 72 ist am hinteren Ende 91 des Gehäuses 8 in Form einer den An/Aus-Schalter umlaufenden LED-Anzeige ausgeführt. Damit assoziiert die Nutzerin die Anzeige des Einschaltzustandes intuitiv mit dem zugehörigen An/Aus-Schalter und umgekehrt.

Somit ist die fünfte Ausführungsform vorzugsweise dadurch gekennzeichnet, dass sich die Außenkontur des Gehäuses 8 vom mittleren Abschnitt 88 zum hinteren Abschnitt 86 ändert. In anderen Worten ist die fünfte Ausführungsform vorzugsweise dadurch gekennzeichnet, dass der mittlere Abschnitt 88 einen andere Außenkontur aufweist, die der hintere Abschnitt 86.

Die Kappe 85 der fünften Ausführungsform ist im Vergleich zu den Kappen 85 der ersten bis vierten Ausführungsform länger ausgestaltet. Wenn die Kappe 85 der fünften Ausführungsform auf das Gehäuse 8 aufgesteckt ist, wird also nicht nur das vordere Ende 90 mit der Wand 42 umfasst, sondern auch der mittlere Abschnitt 88. So schlägt die Kante 851 der Kappe 85 an der Kante 861 des hinteren Abschnitts 86 an, wenn die Kappe 85 auf das Gehäuse 8 aufgesteckt ist. Ist diese Kappe 85 vollständig aufgesteckt, so erweckt die Stimulationsvorrichtung 1 einen einheitlichen, länglich quaderförmigen Eindruck, bei dem man auf Anhieb nicht erkennt, welchen Zweck die enthaltene Vorrichtung 1 aufweist. Insofern kann bei der vorliegenden diskreten, leichten und kompakten Ausgestaltung der Stimulationsvorrichtung 1 die Stimulationsvorrichtung 1 beispielsweise diskret und hygienisch in der Handtasche mitgenommen werden.

Der Winkel δ zwischen der Ebene der Öffnung 42 des Hohlraums und der Längsachse 80 beträgt etwa 80 Grad, vorzugsweise etwa 80 bis 90 Grad, insbesondere etwa 90 Grad.

Die Ausrichtungsachse 81 kann bei der fünften Ausführungsform weiter vorzugsweise mit der Längsachse zusammenfallen, d.h., diese sind vorzugsweise koaxial zueinander angeordnet.

Nachstehend werden bezugnehmend auf die Fig. 12 a) eine Seitenansicht einer erfindungsgemäßen Stimulationsvorrichtung einer sechsten Ausführungsform, bezugnehmend auf Fig. 12 b) eine Ansicht einer erfindungsgemäßen Stimulationsvorrichtung der sechsten Ausführungsform von vorne, und bezugnehmend auf Fig. 12 c) eine Ansicht einer erfindungsgemäßen Stimulationsvorrichtung der sechsten Ausführungsform von hinten, sowie bezugnehmend auf Fig. 13 eine perspektivische Ansicht eines 3D-Drahtgittermodells der sechsten Ausführungsform der erfindungsgemäßen Stimulationsvorrichtung näher erläutert.

Diese sechste Ausführungsform ist im Grundgedanken ähnlich der fünften Ausführungsform, worauf Bezug genommen wird.

Ein längliches Gehäuse 8, welches vorliegend in Fig. 12a stehend dargestellt ist, erstreckt sich entlang einer Längsachse 80 und weist am vorderen Ende 90 die Öffnung 42 einer zweiten Kammer 4 auf. Weiter weist das Gehäuse am vorderen Ende 90 einen (flächigen) Auflagebereich 43 auf, mit dem die Haut in Berührung kommt.

Zur Fixierung der quaderförmigen und hohlen Kappe 85 sind Rastverschlüsse 862 vorgesehen, die einrasten, wenn die Kappe 85 über das vordere Ende 90 und über den mittleren Abschnitt 88 des Gehäuses 8 bis zum gegenseitigen Kontakt der Anschlagkanten 861 und 851 geschoben wird. Die Kappe 85 ist in Fig. 12a nur zur Vereinfachung neben dem Gehäuse 8 dargestellt.

Der Masseschwerpunkt MA der Stimulationsvorrichtung 1 befindet sich im hinteren Abschnitt 86, womit diese besser handhabbar ist. Des Weiteren ist der Masseschwerpunkt vorzugsweise derart eingerichtet, dass er sich auf der Längsachse 80 befindet. Auch dies verbessert die Handhabbarkeit der Stimulationsvorrichtung 1, da seitliche Kippmomente verringert bzw. vermieden werden. Zudem könnte die vorstehend erläuterte Lage des Masseschwerpunkts auch mit zusätzlichen (kleinen) Gewichtselementen im Inneren des Gehäuses 8 austariert bzw. eingestellt werden.

Die Längsachse 80 stellt für die Kappe 85, für den hinteren Abschnitt 86 und für den mittleren Abschnitt 88 eine Symmetrieachse dar.

Das Gehäuse ist beispielsweise etwa 4 cm breit (Bezugszeichen C), und etwa 12 cm lang (Bezugszeichen A). Alternativ ist das Gehäuse beispielsweise etwa 3 cm breit (Bezugszeichen C) und etwa 12,5 cm lang (Bezugszeichen A). So hat sich bei der Entwicklung der Stimulationsvorrichtung gezeigt, dass das resultierende Innenvolumen des Gehäuses bei vorstehender alternativer Dimensionierung des Gehäuses 8 gerade genügend Platz aufweist, um die Komponenten (Motor, Batterie, Steuereinrichtung, etc.) der Stimulationsvorrichtung 1 aufzunehmen.

Bezugnehmend auf Fig. 12 b), die eine Ansicht der Stimulationsvorrichtung 1 (bzw. auf der linken Seite der Fig. 12 b) das Gehäuse 8 und auf der rechten Seite der Fig. 12b die Kappe 85) von vorne zeigt, ist die Außenkontur des mittleren Abschnitts 88 und des Kopfes der Stimulationsvorrichtung 1 mit der Öffnung 42 zu erkennen. Diese sind annähernd gleichdick ausgeführt, was zu den vorstehend beschriebenen entsprechenden Vorteilen führt.

Die Öffnung 51 des Verbindungselements 5 in die zweite Kammer 4 ist oval ausgestaltet. Die zweite Kammer ist entlang der Längsachse 80 so angeordnet, dass die Ausrichtungsachse 81 des erfindungsgemäßen Hohlraums parallel zu (vorzugsweise koaxial mit) der Längsachse 80 des Gehäuses 8 ist. Die zweite Kammer 4 ist mit ihrer zugehörigen Wand 41 aufsteckbar bzw. auswechselbar vorgesehen. Die Öffnung 42 der zweiten Kammer 4 ist oval ausgeführt. Die zweite Kammer 4 verbreitert sich im strömungstechnischen Sinne eines Diffusors von der Öffnung 51 in Richtung der Öffnung 42, um die Ausbildung des erfindungsgemäßen Überdrucks des Druckfeldes zu begünstigen.

In Fig. 12 b) ist weiter auf der rechten Seite eine Draufsicht auf die erfindungsgemäße Kappe 85 abgebildet. Diese weist einen quadratischen Grundquerschnitt auf, welcher leicht ausgebaucht ausgeführt ist. Mittig auf der Endfläche der Kappe ist Platz für ein Logo 852 vorgesehen.

Fig. 12 c) zeigt eine Ansicht von hinten der Stimulationsvorrichtung 1 (bzw. auf der linken Seite eine Hinteransicht des Gehäuses 8 und auf der rechten Seite eine Hinteransicht in die Kappe 85 hinein). Auf der Hinterseite des Gehäuses 8 ist mittig innerhalb einer zurückgesetzten bzw. versenkten Endfläche 863 ein An/Aus-Schalter 74 mit einem zugehörigen Leuchtring 72 als Anzeige vorgesehen. Weiter ist eine Buchse 75 für den Anschluss einer Stromversorgung vorgesehen. Diese Buchse kann mit einem entsprechend dichtenden Stopfen verschlossen werden.

Die perspektivische Ansicht der sechsten Ausführungsform der Fig. 13 stellt insbesondere die leicht angeschrägte, breit ausgeführte Vorderfläche der Wand 41 der Druckfelderzeugungseinrichtung 2 dar. Mit der vorzugsweise verbreiterten Auflagefläche 43 bzw. dem Aufsetzbereich 43 der Wand 41 zum Aufsetzen über die Klitoris wird der Druck flächig verteilt, was bei der Benutzung angenehmer ist. So wird die übliche, relativ scharfe und unbequeme, Kante von Öffnungen von Stimulationsvorrichtungen des Stands der Technik durch die erfindungsgemäße Auflagefläche 43 bzw. den Aufsetzbereich 43 ersetzt, der eine Fläche aufweist, die (annähernd) parallel zur Öffnungsebene 83 angeordnet ist und vollständig um die Öffnung 42 herumläuft.

In Bezug auf die Figuren 14 bis 18 wird eine siebte Ausführungsform der vorliegenden Erfindung näher erläutert werden. Fig. 14 zeigt eine perspektivische Ansicht einer erfindungsgemäßen Stimulationsvorrichtung einer siebten Ausführungsform mit geschlossener Kappe. Fig. 15 zeigt eine perspektivische Ansicht einer erfindungsgemäßen Stimulationsvorrichtung der siebten Ausführungsform mit geöffneter Kappe. Fig. 16 zeigt eine Seitenansicht einer (liegenden) erfindungsgemäßen Stimulationsvorrichtung der siebten Ausführungsform mit geöffneter Kappe. Fig. 17 zeigt eine Seitenansicht einer (stehenden) erfindungsgemäßen Stimulationsvorrichtung einer siebten Ausführungsform ohne Kappe. Fig. 18 zeigt eine Ansicht der erfindungsgemäßen Stimulationsvorrichtung der siebten Ausführungsform von vorne.

Die siebte Ausführungsform ist recht ähnlich der sechsten Ausführungsform vorgesehen. Deshalb werden nachstehend nur die Unterschiede zueinander näher erläutert.

In dem hinteren Ende 19 ist die Buchse 75 für die Stromversorgung mit einem laschen-artigen Steckbuchsenverschluss 751 (vorzugsweise aus Silikon oder Gummi) so eingerichtet, dass der Verschluss 751 die Buchse wasserdicht (IP 67) versiegeln bzw. abdichten kann.

Die Anzeige 72 ist in Form eines transparenten Sichtfensters und einer dahinterliegenden LED realisiert. Der An/Aus-Schalter ist vorzugsweise gleichzeitig das Bedienelement, mit dem man die Modulation des Druckfeldes einstellen kann. So wird die Stimulationsvorrichtung mit jeweils einem langen Drücken an- oder ausgeschaltet, während ein kurzes Drücken die Modulation verändert.

Der mittlere Abschnitt 88 ist annähernd gleichdick und mit Silikon beschichtet ausgeführt. So stellt der gesamte mittlere Abschnitt 88 eine zusammenhängende Grifffläche 89 dar. Die Wand 41 wird nahtlos oder übergangslos durch den mittleren Abschnitt 88 fortgesetzt, wobei der Kopf und der mittlere Abschnitt 88 des Gehäuses 8 im Querschnitt die gleiche Außenkontur aufweisen.

Bezugnehmend auf die Fig. 16 und 17 ist zu erkennen, dass sich der hintere Abschnitt 86 stufenförmig nach vorne verjüngt, insbesondere, damit die Kappe 85 formschlüssig auf das Gehäuse 8 aufgesteckt werden kann. Der Kopf der Stimulationsvorrichtung ist angeschrägt bzw. leicht abgewinkelt ausgeführt, wobei die Öffnungsebene 83 der Öffnung 42 die Längsachse 80 in einem Winkel δ schneidet. Der Winkel δ dieser Ausführungsform beträgt etwa 60 Grad (60 Grad ± 10 Grad). Vorzugsweise liegt der Winkel δ dieser Ausführungsform in einem Bereich von etwa 40 bis 70 Grad, insbesondere in einem Bereich von etwa 55 bis 65 Grad.

Die Längsachse ist vorliegend eine Symmetrieachse für die Kappe 85 und die Grundform des hinteren Abschnitts 86 des Gehäuses.

Der Masseschwerpunkt MA befindet sich vorzugsweise im hinteren Abschnitt 86 des Gehäuses 8.

Fig. 18 zeigt eine Ansicht des Gehäuses 8 der siebten Ausführungsform von vorne. So ist die Öffnung 51 im Inneren des Hohlraums in Querschnittsrichtung kreisförmig ausgestaltet. Weiter ist eine verbreiterte Auflagefläche 43, welche die Öffnungsebene 83 leicht winklig schneidet, vorgesehen. Die Öffnung 42 wiederum ist oval vorgesehen.

Bezugnehmend auf Fig. 19 wird eine Seitenansicht eines erfindungsgemäßen mittleren Abschnitts 88 bzw. eines Griffstücks mit einer Grifffläche 89 der siebten Ausführungsform und bezugnehmend auf Fig. 20 wird eine Schnittansicht in Querrichtung des Gehäuses des erfindungsgemäßen mittleren Abschnitts 88 bzw. eines Griffstücks mit einer Grifffläche 89 der siebten Ausführungsform näher erläutert. So ist der mittlere Abschnitt 88 vorzugsweise einstückig als eigenes Bauteil der Stimulationsvorrichtung 1 ausgeführt.

Der mittlere Abschnitt 88 weist eine Länge G auf, welche mindestens 30%, vorzugsweise mindestens 40% der Gesamtlänge A des Gehäuses 8 (welche ohne Kappe 85 gemessen wird) beträgt.

Die gezeigte gleichdicke Außenkontur (vgl. Fig. 20, Bezugszeichen 882 und 881) des mittleren Abschnitts 88 weist im Gegensatz zum Reuleaux-Dreieck keine scharfen Außenkanten bzw. harten Ecken in Längsrichtung auf, sondern ist durchgängig abgerundet (vgl. Bezugszeichen 881) ausgeführt. Der Gesamtaußendurchmesser des mittleren Abschnitts 88 beträgt an jeder Stelle r-min zuzüglich r-max.

Die Längsachse 80 des Gehäuses 8 stellt für den mittleren Abschnitt 88 eine Mittenachse dar.

Bezugnehmend auf Fig. 21 wird ein schematischer Querschnitt durch eine prinzipielle Druckfelderzeugungseinrichtung eines Aspekts der vorliegenden Erfindung näher erläutert.

Ein Hohlraum 10 bildet nach dem Aufsetzen der Stimulationsvorrichtung über das betreffende - zu stimulierende - Körperteil 11, vorzugsweise die Klitoris 12, eine zumindest weitgehend abgeschlossene Einheit (d.h., ein zumindest abgeschlossenes Volumen). In dem Hohlraum befindet sich ein Medium, vorzugsweise Luft.

Dieser Hohlraum kann funktionell in eine erste Kammer 3, eine zweite Kammer 4 und ein Verbindungselement 5 unterteilt werden.

Dabei bezeichnet der Begriff "erste Kammer 3" funktionell den Teil des Hohlraums, an dem die Antriebseinrichtung 6 auf den Hohlraum einwirken kann, beispielsweise durch eine regelmäßige Volumenänderung. So wird das Volumen der ersten Kammer 3 abwechselnd vergrößert und verkleinert.

Der Begriff "zweite Kammer 4" bezeichnet weiter funktionell den Teil des Hohlraums, welcher die Öffnung 42 zum Aufsetzen über die erogene Zone aufweist, und in welchem das erfindungsgemäße Druckfeld auf die erogene Zone bzw. auf die Klitoris(-eichel) 12 wirken kann. Die erfindungsgemäßen Kammern 3 und 4 sollen also nicht so verstanden werden, dass diese jeweils strukturell vollständig getrennte Räume bzw. Abteilungen des Hohlraums darstellen. Die beiden Kammern 3 und 4 werden über das Verbindungselement 5, beispielsweise in Form eines geraden (und vorzugsweise starren) Kanals, (strömungstechnisch) verbunden. Vorzugsweise kann das Verbindungselement 5 auch nur eine geringfügige Verjüngung bzw. Einengung in Form einer einzelnen Durchlassöffnung oder einen breite Kanal zwischen den beiden Kammern 3 und 4 mit zwei Öffnungen 33 und 51 darstellen. Die beiden Öffnungen weisen vorzugsweise eine übereinstimmende Mittenachse auf.

Die erste Kammer 3 weist eine flexible Wand 31 auf, welche mittels der Antriebseinrichtung 6 mit Kräften beaufschlagt und ausgelenkt werden kann. Die flexible Wand 31 ist in einer Halterung 32 befestigt. Diese Halterung 32 besteht vorzugsweise aus einem starren Kunststoff.

Aufgrund der regelmäßigen Volumenänderung durch die Antriebseinrichtung 6 wird in dem Hohlraum 10 ein Strömungssystem ausgebildet.

Im Detail weist die Druckfelderzeugungseinrichtung 2 eine Öffnung 42 zum Aufsetzen über die Klitoris 12 und eine flexible Wand 31 auf, wobei die Druckfelderzeugungseinrichtung 2 derart eingerichtet ist, dass, wenn die Öffnung 42 über die Klitoris 12 aufgesetzt ist, ein zumindest weitgehend abgeschlossenes Strömungssystem in der Druckfelderzeugungseinrichtung 2 ausgebildet wird, und die Antriebseinheit 6 bei Ansteuerung derart mit Kräften auf die flexible Wand 31 wirkt, dass diese zeitlich abwechselnd in eine erste Richtung von der Klitoris 12 weg und in eine zweite Richtung auf die Klitoris 12 hin ausgelenkt wird, wodurch in dem Strömungssystem des Hohlraums 10 Medienströmungen, die zeitlich abwechselnd auf die Klitoris 12 gerichtet und von der Klitoris 12 weggerichtet sind, erzeugt werden, und an der Klitoris 12 ein Druckfeld, bestehend aus einem Muster von Unter- und Oberdrücken, welche auf den Normaldruck aufmoduliert sind, erzeugt wird; und wobei das zumindest weitgehend abgeschlossene Strömungssystem einen Abtransport von Körperflüssigkeit aus der Druckfelderzeugungseinrichtung 2 weitgehend oder vollständig vermeidet, so dass das in dem Strömungssystem der Druckfelderzeugungseinrichtung 2 erzeugte Druckfeld die Klitoris 12 zur sexuellen Erregung stimuliert.

In Fig. 21 sind mit den Doppelpfeilen die Bewegungsrichtungen beispielhafter kleiner Volumenanteile des Mediums in dem erfindungsgemäßen Strömungssystem dargestellt, d.h., die erfindungsgemäßen Strömungen. So bewegen diese sich entsprechend der Auslenkung der flexiblen Wand parallel zur Achse der Ausrichtung 81 des Hohlraums 10 hin- und her. Insgesamt betrachtet wird also eine Art Mediensäule bzw. Luftsäule in dem Hohlraum zyklisch hin und her bewegt, wobei sich benachbart zur oder an der Klitoris(-eichel) das erfindungsgemäße Druckfeld ausbildet. Weiter werden mechanische Vibrationen ausgehend von der flexiblen Wand 31 (hervorgerufen von den wirkenden Kräften und ebenso von der Antriebseinrichtung 6 mit eingebracht) über die Halterung 32 und die Wand 41 der zweiten Kammer 4 in Richtung des zu stimulierenden Körperteils 41 übertragen, was unter Umständen als störend empfunden wird.

Bezugnehmend auf Fig. 22 wird ein schematischer Querschnitt durch eine Druckfelderzeugungseinrichtung eines weiteren Aspekts der vorliegenden Erfindung erläutert, die sich der vorstehend erläuterten Thematik der Vibrationen annimmt.

Das erfindungsgemäße Strömungssystem dieses Aspekts ist in abgewinkelter Form ausgebildet. So wird die flexible Wand 31 rechtwinklig (oder alternativ in einem anderen Winkel von mindestens 45 Grad) zur Ausrichtungsachse 81 des Hohlraums 10 ausgelenkt. Die entsprechenden Vibrationen breiten sich somit nicht mehr in Richtung des zu stimulierenden Körperteils, beispielsweise in Richtung der Klitoris aus, sondern winklig dazu, beispielsweise senkrecht, wie in Fig. 22 dargestellt. Bei Anwendung dieses Aspekts auf die erste bis siebte Ausführungsform würde die Vibration also eine (Kern) Richtung aufweisen, die in Querrichtung des länglichen Gehäuses 8 ausgerichtet ist. Folglich werden die störenden Vibrationen in Längsrichtung 80 der Stimulationsvorrichtung 1 in Richtung des vorderen Endes 90 reduziert.

Die Figuren 23 bis 25 legen das Prinzip der Druckfelderzeugungseinrichtung 2 im Detail dar.

Fig. 23 zeigt eine prinzipielle Druckfelderzeugungseinrichtung 2 in einem ersten Zustand, wobei die zweite Kammer 4 auf bzw. über dem zu stimulierenden Hautbereich bzw. das Körperteil 11 aufgesetzt ist. Vorzugsweise ist die zweite Kammer 4 über die erogene Zone aufgesetzt, die die weibliche Klitoriseichel aufweist.

Der erste Zustand der Druckfelderzeugungseinrichtung 2 ist durch eine neutrale Auslenkung der ersten Kammer 3 gekennzeichnet, d.h., es wirkt keine externe Kraft, beispielsweise von der Antriebseinheit, auf die erste Kammer 3. Hierbei ist das Volumen V1 der ersten Kammer das Standardvolumen dieser Kammer 3.

Der zu stimulierende Körperteil 11 ist ein Hautbereich des Körpers, wobei hier beispielhaft eine besonders empfindliche erogene Zone, die Klitoris 12, dargestellt ist. Somit ist die Anwendung der vorliegenden Erfindung jedoch grundsätzlich nicht auf die weibliche Klitoris 11 beschränkt, sondern die Stimulationsvorrichtung 1 kann auf alle Körperteile bzw. erogenen Zonen (beispielsweise die Innenseite der Oberschenkel, die Lenden, Nacken, Brustwarzen, etc.) angewandt werden, welche mittels Medien- bzw. Luftdruckmassage und/oder Unterdruck stimuliert werden können.

Die zweite Kammer 4 bildet durch das Aufsetzen auf das zu stimulierende Körperteil 11 bzw. aufgrund des Aufsetzens über die zu stimulierende Klitoris eine zum Äußeren der Druckfelderzeugungseinrichtung 2 weitgehend oder vollständig abgeschlossene Kammer, welche nur noch über das Verbindungselement 5 mit der zweiten Kammer in Verbindung steht, wobei die Ränder der Kammer 4 im Idealfall dicht mit der Oberfläche des Körperteils 11 abschließen. Auf diese Weise entsteht ein abgeschlossener Hohlraum mit zwei kommunizierenden funktionellen Einheiten, den Kammern 3 und 4, wobei bei Volumenänderung einer der Kammern 3 oder 4 ein entsprechender Druckausgleich zwischen den Kammern 3 und 4 über das Verbindungselement 5 erfolgt.

Eine Wand 31 der ersten Kammer 3 ist mittels einer Halterung 32 fixiert. Die Halterung 32 ist wiederum an dem Gehäuse 8 befestigt. An der Halterung 32 ist weiter die Wand 41 der zweiten Kammer angebracht. Zwei zueinander (vorzugsweise in Längsrichtung) ausgerichtete Öffnungen in der Wand 41 der zweiten Kammer und der Halterung 32 bilden gemeinsam das Verbindungselement 5, welches die erste Kammer 3 und die zweite Kammer 4 mittels eines Kanals verbindet. Dieser Kanal verläuft gerade zwischen der ersten Kammer 3 und der zweiten Kammer 4, wobei sich der Durchmesser des Kanals in Richtung der zweiten Kammer 4 aus- bzw. aufweitet. Dabei sind die Wand 31, die Halterung 32 und die Wand 41 vorzugsweise miteinander medien- bzw. luftdicht verklebt. Alternativ können diese auch miteinander (beispielweise mit Hilfe von dichtenden Bereichen zwischen dem Gehäuse 8 und dem jeweiligen Teil) press-gepasst oder verschraubt sein. Die Halterung 32 kann weiter beispielsweise mit dem Gehäuse 8 verklebt oder verschraubt sein.

Die Wand 31 der ersten Kammer 3 besteht vorzugsweise aus einem flexiblen, medien- bzw. luftundurchlässigen Material, beispielsweise Gummi oder Silikon. Die Halterung 32 besteht vorzugsweise aus einem starren Kunststoff, welcher ebenso medien- bzw. luftundurchlässig ist. Die Wand 41 der zweiten Kammer ist vorzugsweise aus einem flexiblen, hautfreundlichen Material hergestellt, beispielsweise aus Silikon oder Gummi.

Fig. 24 zeigt die Druckfelderzeugungseinrichtung 2 von Fig. 4 in einem zweiten Zustand, wobei wiederum die zweite Kammer 4 auf das zu stimulierende Körperteil 11 aufgesetzt ist. Der zweite Zustand ist dadurch gekennzeichnet, dass eine auf die erste Kammer 3 wirkende Kraft A eine Expansion der Kammer 3 bewirkt. Im Detail zieht bei diesem Ausführungsbeispiel die Kraft A die Wand 31 der ersten Kammer 3 in eine Richtung, die von der zweiten Kammer 4 weggerichtet ist.

Dadurch vergrößert sich das Volumen V2 der Kammer 3, d.h., V2 > V1. Um den entstandenen Druckunterschied zwischen den Kammern 3 und 4 auszugleichen, strömt nunmehr das Medium bzw. die Luft von der zweiten Kammer 4 in die erste Kammer 3.

Unter der Annahme, dass in dem ersten Zustand der in den Kammern 3 und 4 vorliegende Druck dem aktuell herrschenden, äußeren Referenzdruck (beispielsweise dem Luftdruck) entspricht, wird nun der vorliegende Gesamtdruck in dem zweiten Zustand geringer sein, als der äußere Referenzdruck. Dieser Unterdruck ist derart ausgelegt, dass dieser vorzugsweise geringer ist, als der übliche systolische Blutdruck in den Blutgefäßen des Körperteils 11. Damit erhöht sich die Durchblutung in diesem Bereich und die Klitoris 12 wird in dem zweiten Zustand besser durchblutet.

Fig. 25 zeigt die Druckfelderzeugungseinrichtung 2 in einem dritten Zustand, wobei wiederum die zweite Kammer 4 auf dem zu stimulierenden Körperteil 11 aufgesetzt ist. Der dritte Zustand ist dadurch gekennzeichnet, dass eine auf die erste Kammer 3 wirkende Kraft B eine Volumenverkleinerung bzw. Kompression der Kammer 3 bewirkt. Im Detail ist die Kraft B in seiner Richtung der Richtung der Kraft A entgegengesetzt und verformt die Wand 31 der ersten Kammer derart, dass das resultierende Volumen V3 der Kammer kleiner ist, als das Volumen V1. Die Kompression der Kammer 3 bewirkt einen Überdruck in der Kammer 3, welcher durch eine Medien- bzw. Luftströmung durch das Verbindungselement 5 in Richtung der zweiten Kammer 4 ausgeglichen wird.

Diese Medienströmung ist nun durch die Ausrichtung der Öffnung 51 und/oder des Verbindungselements 5 vorzugsweise auf das zu stimulierende Körperteil 11, insbesondere auf die Eichel der Klitoris 12, gerichtet. Die erfindungsgemäße indirekte (Druck-) Stimulation erfolgt durch das in Richtung der erogenen Zone strömende Medium. Dabei ist die Größe (bzw. die Querschnittsfläche) der Öffnung 51 vorzugsweise derart dimensioniert, dass diese im Verhältnis zu dem in der ersten Kammer 3 verdrängten Volumen klein genug ist, um das Medium für eine spürbare Massagewirkung ausreichend zu beschleunigen. Regelmäßig (insbesondere bei einer Klitoriseichel) genügt schon eine geringfügige Querschnittsverringerung bzw. Engstelle im Hohlraum, damit das erfindungsgemäße Druckfeld eine zielgerichtete Stimulationswirkung entfalten kann.

Weiter kann die Art der Strömung nicht nur durch die Größe und die Ausrichtung der Öffnung 51 vorteilhaft beeinflusst werden, sondern auch durch die innere Konfiguration des Verbindungselements. Beispielsweise können helixförmige Rillen in dem Verbindungselement 5 einen Drall der erfindungsgemäßen Strömung verursachen, wobei das Strömungsprofil der Strömung eine "weichere" bzw. turbulentere Wirkung auf das zu stimulierende Körperteil entfaltet. Alternativ kann das sich in der zweiten Kammer 4 ergebende Druckfeld mit Hilfe mehrerer Öffnungen 51 entsprechend der Anwendung angepasst werden. Als weitere Alternative kann eine Düse als Verbindungselement vorgesehen sein, welche dazu führt, dass das Druckfeld im Medium vorzugsweise benachbart zur Klitoris aufgebaut wird.

Bei der in den Figuren 23 bis 25 gezeigten Anordnung ist vorteilhaft, dass diese hygienisch unproblematisch (beispielsweise aufgrund der Vermeidung von Toträumen) und in der Herstellung einfach ist. Beispielsweise sind keine Ventile oder weitere Öffnungen in oder an der ersten Kammer 3 erforderlich. Es wird angemerkt, dass die Grundprinzipien der Druckfelderzeugung der Erfindung auch dann realisiert werden, wenn der Startpunkt der Kompressions- und Expansionstätigkeit der Antriebseinrichtung 6 bei dem Maximalvolumen V2 oder dem Minimalvolumen V3 liegt. So findet regelmäßig ein Druckausgleich, beispielsweise über einen Spalt zwischen Haut und Öffnung 42 statt, bei dem sich der durchschnittliche Druck im Hohlraum auf einen mittleren Druck einpegeln wird. Zudem wird die Vorrichtung 1 regelmäßig schon vor dem Aufsetzen über die erogene Zone eingeschaltet. Damit wird das erfindungsgemäße Druckfeld unabhängig vom den herrschenden Startbedingungen bezüglich der Auslenkung der flexiblen Wand 31 der ersten Kammer 3 erzeugt.

Die Figuren 26a bis 26f offenbaren weitere Aspekte bezüglich der Ausgestaltung, insbesondere bezüglich der (inneren) Formgebung, des Verbindungselements 5.

Die Formgebung des Verbindungselements 5 beeinflusst die strömungsmechanischen Verhältnisse in der erfindungsgemäßen Druckfelderzeugungseinrichtung 2. Bei der Durchströmung von Kanälen oder Hohlräumen treten, insbesondere bei Luft als Medium, Strömungsgeräusche auf, die abhängig sind von der Strömungsgeschwindigkeit, von dem Querschnitt des Kanals und dem Turbulenzgrad. Turbulenzen werden wiederum durch scharfe Kanten ausgelöst.

Fig. 26 a) zeigt das Verbindungselement 5 in Form eines geraden Kanals, wobei die Öffnung 33 und die Öffnung 51 jeweils scharfe Kanten an den Rändern dieser aufweisen. Dies führt zu Turbulenzen und störenden Strömungsgeräuschen.

So ist der Druckverlustbeiwert ζ (auch als Druckverlustkoeffizient bezeichnet) der Anordnung der Fig. 26 a) optimierungsfähig. Die Stimulationswirkung des Druckfeldes der Stimulationsvorrichtung 1 kann erfindungsgemäß mit einer verbesserten strömungstechnischen Konfiguration optimiert werden, wie nachstehend näher dargelegt.

Fig. 26 b) zeigt das Verbindungselement 5 in Form eines geraden Kanals, wobei die Kante der Öffnung 33 (in Richtung der ersten Kammer 3) abgerundete Ecken aufweist. Dies verringert den Druckverlustbeiwert ζ der erfindungsgemäßen kanalartigen Konfiguration, weshalb der Wirkungsgrad der erfindungsgemäßen Druckfelderzeugungseinrichtung größer wird und diese leiser wird. Zudem weist die zweite Kammer 4 im Vergleich zu der zweiten Kammer der Fig. 26 a) einen größeren Innendurchmesser auf, womit das Druckfeld näher zur der Öffnung 51 entsteht, und die zweite Kammer 4 somit vergleichsweise in Längsrichtung kürzer vorgesehen sein kann, was Platz und Gewicht spart.

Fig. 26 c) zeigt das Verbindungselement 5 in Form eines geraden Kanals mit einer kegelstumpfförmigen Öffnung 33 in Richtung der ersten Kammer 3. Dies verringert den Druckverlustbeiwert ζ im Vergleich zu den kanalartigen Konfigurationen der Fig. 26 a) und b) weiter.

Die Figur 26 d) zeigt eine weiter verbesserte strömungstechnische Konfiguration des Verbindungselements 5. So werden die erste Kammer 3 und die zweite Kammer 4 durch eine geringfügige (beispielsweise um ca. 15% des Durchmessers der ersten Kammer) Verengung bzw. Einengung eines kanalförmigen Verbindungselements 5 getrennt, wobei beiden Öffnungen 33 und 51 (auf beiden Seiten des Kanals) eine kegelstumpfförmige Innenform aufweisen. Dadurch, dass in dem erfindungsgemäßen Strömungssystem das Medium hin und her bewegt wird, ist es vorteilhaft beide Öffnungen bzw. Seiten des Kanals strömungstechnisch zu optimieren, da beide Strömungsrichtungen verlustbehaftet sind.

So ist es möglich, den Druckverlustbeiwert ζ gegenüber herkömmlichen Stimulationsvorrichtungen derart zu optimieren, dass man einen kleineren (bzw. leistungsschwächeren) Elektromotor verwenden kann, was Gewicht und Kosten spart. Zudem werden Strömungsgeräusche vermieden bzw. verringert, was die Ergonomie der Stimulationsvorrichtung 1 verbessert.

Fig. 26 f) zeigt eine Formgebung der zweiten Kammer 4. Um die Klitoris(-eichel) von der düsenartigen Öffnung 51 weiter von der Klitoris zu beabstanden (um eine Überstimulation zu vermeiden), kann es erforderlich sein, dass die Länge der zweiten Kammer in Richtung der Ausrichtungsachse 81 und/oder in Richtung der Längsachse 80 vergrößert wird. So kann die zweite Kammer 4 derart eingerichtet sein, dass sich deren Durchmesser (in Querschnittsrichtung) in einer Mehrzahl von (vorzugsweise zwei) Stufen in Richtung der Öffnung 42 schrittweise vergrößert. Entsprechend wird sich die Medienströmung (bei Kompression der ersten Kammer 3) schrittweise in Richtung der Öffnung 42 verlangsamen, während das Druckfeld zielgerichtet auf die zu stimulierende erogene Zone gerichtet wird, da sich der Mediendruck schrittweise erhöht.

Fig. 27 zeigt eine erste Kammer 3 mit einer zur Richtung der Auslenkung der flexiblen Wand 31 rechtwinklig angeordneten Öffnung 33 der ersten Kammer 3, sowie ein kanalförmiges Verbindungselement 5, welches einen S-förmigen Verlauf aufweist. So bildet der S-förmig verlaufende Kanal ein erfindungsgemäßes Dämpfungselement 5. So wird bei diesem Aspekt aufgrund des S-Förmigen Verlaufs dieses Aspekts eine unmittelbare geradlinige Ausbreitung von akustischen Effekten aus der ersten Kammer 3 nach außen (d.h., aus der Öffnung 42 hinaus) vermieden. Damit bewirkt der S-förmige Verlauf des Kanals des Verbindungselements 5 eine Dämpfung von Störgeräuschen aus der Öffnung 42.

Die vorstehend erläuterten Ausführungsformen werden mit Hilfe nachstehender Erläuterungen weiter ausgeführt.

Fig. 28 zeigt eine perspektivische Ansicht eines Teils eines beispielhaften Innenaufbaus der Stimulationsvorrichtung 1 der sechsten oder siebten Ausführungsform. Die nachstehend erläuterten Grundkonzepte der Erfindung können auf jeden vorliegenden Aspekt und auf jede vorliegende Ausführungsform Anwendung finden und entsprechend kombiniert werden. Auf der Achse 61 eines Elektromotors 6 ist ein Exzenter angebracht, der in einen Fortsatz einer flexiblen Wand 31 eingreift. Der (Gleichstrom-) Motor weist zwei Pole 67 und 68 auf. Weiter ist der Motor 6 auf einer Motorhalterung 65 befestigt, welche an den beiden Seiten einen geradlinigen Verlauf aufweist, so, dass die Motorhalterung 65 beispielweise in eine nutartige, innenliegende Führung des Gehäuses 8 (vorzugsweise von hinten her) eingeschoben werden kann. Ebenso ist an der Motorhalterung 65 die Halterung 32 der ersten Kammer 3 befestigt, beispielsweise ist diese verklebt oder verschraubt (diese ist in Fig. 26 schraffiert gekennzeichnet).

Die Fig. 29 zeigt einen Querschnitt des Aufbaus der Fig. 28 in Längsrichtung. Die erste Kammer 3 weist ein Volumen V auf. Eine seitliche bzw. radial angeordnete Öffnung 33 der ersten Kammer 3 führt zunächst in einen gerade verlaufenden Kanalabschnitt des Verbindungselements 5. Weiter verläuft der Kanal 53 S-förmig in Richtung der zweiten Kammer 4. Das Material des Dämpfungselements 54, in welchem der S-förmige Kanalabschnitt ausgebildet ist, ist vorzugsweise Silikon oder Gummi. Es stellt das Dämpfungselement 54 einen Abschnitt des Verbindungselements 5 dar. Danach öffnet sich der S-förmige Kanal 53 über die Öffnung 51 in die zweite Kammer 4. Die zweite Kammer 4 ist zunächst zylindrisch ausgestaltet, und öffnet sich gegen Ende der zweiten Kammer 4 kegelstumpfförmig zur Öffnung 4 hin. Weiter ist die Ausrichtungsachse 81 zumindest parallel, vorzugsweise koaxial, in Bezug auf die (vorzugsweise mittig angeordnete) Längsachse 80 der Stimulationsvorrichtung 1 angeordnet.

So dient das in Längsrichtung 80 zwischen der ersten Kammer 3 und der zweiten Kammer 4 bzw. der Öffnung 42 angeordnete Dämpfungselement 54 nicht nur der strömungstechnischen/akustischen Dämpfung von Geräuschen in dem Medium nach Art eines Schalldämpfers, sondern auch der Dämpfung von Vibrationen bzw. Schwingungen, die im Festkörper, beispielsweise in der Halterung 32 oder der Motorhalterung 65, vorhanden sind bzw. in diesem weitergeleitet werden. Dabei werden diese Vibrationen bzw. Schwingungen in Richtung der Öffnung 42 gedämpft. Damit erfüllt das Dämpfungselement vorliegend eine Doppelfunktion der Dämpfung von Schwingungen bzw. Vibrationen im fluiden als auch im soliden Medium in Richtung der Öffnung 42. Folglich wird die Ergonomie der erfindungsgemäßen Stimulationsvorrichtung 1 verbessert.

Das Dämpfungselement 54 weist weiter eine steckbare Halterung 55 zum einfachen Einbau in die Stimulationsvorrichtung 1 auf.

Der Aufsatzbereich 43 ist bei dieser Ausführungsform eine vergleichsweise schmale Fläche, die das spitz zulaufende (umlaufende) vordere Ende 90 der Stimulationsvorrichtung 1 abschließt.

Die Figuren 30 bis 32 zeigen in dieser Reihenfolge eine Querschnittsansicht in Längsrichtung 80, eine Ansicht von hinten und eine Ansicht von vorne des erfindungsgemäßen Dämpfungselements 54.

Dabei ist, um den Gehäuseaufbau in Querschnittsrichtung des Gehäuses 8 möglichst kompakt zu halten, der Querschnitt des gerade verlaufenden Kanalabschnitts und der zugehörigen (hinteren) Öffnung des Dämpfungselements 54 auf Seite II der ersten Kammer 3 oval ausgestaltet. Die (vordere) Öffnung des Dämpfungselements 54 auf Seite I der zweiten Kammer 4 ist rund ausgestaltet. Dabei sind die Durchmesser F und G der beiden Öffnungen so berechnet, dass die Querschnittsflächen beider Öffnungen (zumindest annähernd) gleich sind. Der Kanal des Dämpfungselements 54 verändert also seine Querschnittsform, ohne die Querschnittsfläche zu verändern. Damit werden Strömungsverluste so gering wie möglich gehalten, während die Stimulationsvorrichtung 1 in Querschnittsrichtung kompakt gehalten wird.

Die Fig. 33 zeigt eine perspektivische Ansicht der ersten Kammer 3 der sechsten und siebten Ausführungsform von außen mit der flexiblen Wand 31, mit der (schon vorstehend näher erläuterten) ovalen Öffnung 33 mit dem entsprechenden gerade verlaufenden Kanalabschnitt 52 und mit der Halterung 32. Die flexible Wand 31, die beispielsweise aus Silikon besteht, weist einen (in Fig. 33 nach oben wegstehenden) Fortsatz auf, welcher ein Loch zur Aufnahme des Exzenterfortsatzes aufweist. In dieses Loch ist ein Donut-förmiges oder ringförmiges Übergangselement 34 eingefügt, welches ein Innenloch aufweist, in dem der Fortsatz des Exzenters eingefügt ist (nicht näher dargestellt). Dieses Übergangselement 34 besteht vorzugsweise aus Gummi oder einem dämpfenden Silikon. So können Schwingungen bzw. Vibrationen, welche motorseitig entstehen, maßgeblich gedämpft werden, bevor diese über die flexible Wand 31 in das Medium in der ersten Kammer 3 übertragen werden und außerhalb der Stimulationsvorrichtung 1 als Störgeräusche wahrgenommen werden würden. So hat sich gezeigt, dass die flexible Wand 31 ähnlich einer Membran (unter anderem aufgrund ihrer flächigen Ausgestaltung) anfällig dafür ist, Vibrationen bzw. Schwingungen der Motorachse 61 bzw. des Exzenters auf das Medium der Kammer 3 zu übertragen. So ist es vorliegend vorteilhaft, das Übergangselement zwischen flexibler Wand 31 und Exzenter bzw. Motorwelle 61 einzufügen, um störende Vibrationen bzw. Schwingungen zu dämpfen, bevor diese in das Medium in der ersten Kammer 3 eingekoppelt werden.

Die Fig. 34 zeigt ein System mit einer der erfindungsgemäßen Ausführungsformen der Stimulationsvorrichtung 1. So weist eine Halterung 110 zumindest zwei gabelförmige Haltearme 111 auf, in welche die Stimulationsvorrichtung 1 gelegt wird. Die Haltearme 111 sind über Haltebeine 114 mit einem Halterungsfuß 115 verbunden, welcher vorzugsweise eben und flächig ausgestaltet ist. In zumindest einem der Haltebeine befindet sich eine halterungsseitige Ladespule bzw. Induktivität. Entsprechend weist die erfindungsgemäße Stimulationsvorrichtung 1 eine stimulationsvorrichtungsseitige Ladespule bzw. Induktivität auf. Wird die Stimulationsvorrichtung 1 in die Haltearme 111 gelegt, kann über die (vorzugsweise gepaarten) Spulen eine (bekannte) induktive Kopplung 1 zwischen der Stimulationsvorrichtung und einer (nicht näher dargestellten) elektronischen Leistungsvorrichtung stattfinden. Damit kann eine Batterie der Stimulationsvorrichtung 1 draht- bzw. kabellos aufgeladen werden, ohne dass eine Buchse bzw. ein Anschluss an oder in dem Gehäuse 8 erforderlich ist. Dies vereinfacht beispielsweise eine wasserfeste Ausgestaltung des Gehäuses 8.

Die Fig. 35 zeigt ein alternatives System mit einer Halterung 110 zum Laden der erfindungsgemäßen Stimulationsvorrichtung 1. Hier kann die stimulationsvorrichtungsseitige Ladespule bzw. Induktivität vorteilhaft im hinteren Ende 91 der Stimulationsvorrichtung 1 untergebracht sein. Dies erleichtert eine geeignete Gewichtsverteilung und Einstellung des Masseschwerpunktes MP der Stimulationsvorrichtung 1. Zudem sind (günstige) Spulen vorzugsweise kreisförmig geformt, womit sich diese vorteilhaft kompakt mit der Mittelachse der Spule in koaxialer (oder alternativ paralleler) Ausrichtung in Bezug auf die Längsachse 88 in dem Gehäuse 8 unterbringen lassen. Als Halterung 110 ist eine becherförmige Vorrichtung, beispielweise ein einfaches Wasserglas, vorgesehen, in der man die stiftförmige Stimulationsvorrichtung 1 einfach hineinstellt. Dies hat den Vorteil, dass sich die Halterung 110 ganz einfach reinigen lässt. In dem teller- oder plattenförmigen Halterungsfuß 115 ist die halterungsseitige Ladespule bzw. Induktivität untergebracht, auf die die Halterung 110 gestellt wird. Wird die Stimulationsvorrichtung 1 in die Halterung 110 hineingestellt, kann über die (vorzugsweise gepaarten) vorbezeichneten Spulen eine (bekannte) induktive Kopplung zwischen der Stimulationsvorrichtung 1 und einer (nicht näher dargestellten) elektronischen Leistungsvorrichtung stattfinden. Entsprechend kann auch mit dieser Halterung 110 die Batterie der Simulationsvorrichtung 1 kabel- bzw. drahtlos mit Energie versorgt und aufgeladen werden.

Fig. 36 zeigt einen vierten Aspekt der Erfindung mit einem alternativen Aufbau der Druckfelderzeugungseinrichtung 2. Dabei sind die zweite Kammer 4, mehrere Verbindungselemente 5, sowie Teilabschnitte der Wand 31 der ersten Kammer 3 einstückig ausgebildet. Alternativ kann die Druckfelderzeugungseinrichtung 2 unter Wahrung des geometrischen Vorbilds der Fig. 36 in ähnlicher Weise wie in Fig. 21, 22 oder 25 dargestellt auch zwei- oder mehrstückig aus Einzelteilen aufgebaut sein.

Die Volumenänderung der ersten Kammer 3 erfolgt hier in einer zur Kolbenpumpe ähnlichen Weise, jedoch fehlen hier etwaig vorhandene Ventile. So wird ein Kolben 63 durch die Antriebseinheit, beispielsweise einen Elektromotor oder einen Elektromagneten, in den Richtungen des Doppelpfeils D hin und her bewegt. Diese Art des Antriebs hat den Vorteil, dass das Volumen der ersten Kammer 3 in einfacher Weise auf Null bzw. auf annähernd Null verringert werden kann, und so die erste Kammer 3 fast vollständig entleert werden kann.

Die Ausgestaltung des Verbindungselements 5 mit mehreren Kanälen 52 und Öffnungen 51 führt zu einer Verteilung des Druckfeldes auf mehrere Konzentrationspunkte. Während die Ausgestaltung des Verbindungselements 5 mit nur einem Kanal, wie in Zusammenhang mit Fig. 25 beschrieben, zur Ausbildung eines stark konzentrierten Druckfelds auf einen Zielbereich hin führt, kann bei der in Fig. 36 gezeigten Ausgestaltung des Verbindungselements 5 der Medien- bzw. Luftstrom auf mehrere Zielbereiche verteilt werden. So kann beispielweise die Klitoris 11 nicht nur an seiner Eichel angeblasen werden, sondern gleichmäßig von mehreren Seiten. Diese Verteilung der Konzentration der Luftströmung auf mehrere Bereiche kann je nach Anwendung helfen, eine Überstimulation zu vermeiden, und/oder helfen, den Stimulationsbereich zu vergrößern.

Die Figuren 37 a) bis 37 c) zeigen einen fünften Aspekt der Erfindung mit (Teil-) Querschnitten eines Aufbaus der Druckfelderzeugungseinrichtung 2 mit einem Biegeelement 64 als Antrieb zur Volumenänderung der ersten Kammer 3. Das Biegelement 64 kann beispielsweise ein herkömmliches piezoelektrisches Biegelement sein, welches sich nach Anlegen einer Spannung verformt bzw. biegt. Bei diesem Aspekt der Erfindung ist die Wand 31 der ersten Kammer 3 starr bzw. steif aufgebaut, während das Biegeelement 64 in geeigneter Weise an den Seiten der ersten Kammer 3 eingepasst ist. Dabei sind die Übergangsstellen zwischen dem Biegeelement 64 und der Wand 31 abgedichtet (beispielsweise elastisch verklebt). Bei diesem Aufbau ist der Antrieb für die Druckfelderzeugungseinrichtung 2 schon in diese integriert und es entfällt ein externer Antrieb. Beispielsweise entfällt ein Elektromotor mit einem Exzenter. Dadurch können u.A. evtl. störende Eigenschwingungen aufgrund der Exzenterbewegung der Stimulationsvorrichtung verringert werden.

Im Detail zeigt Fig. 37 a) die Druckfelderzeugungseinrichtung 2 mit dem Biegeelement 64 in Neutralstellung. Somit ist das Volumen der ersten Kammer 3 mit dem Biegeelement 64 in Neutralstellung das Standardvolumen. Fig. 37b zeigt weiter die erste Kammer 3 mit einem erregten und in Folge nach außen gebogenen Biegelement, weshalb das Volumen der ersten Kammer 3 vergrößert ist; und in Folge herrscht in der Druckfelderzeugungseinrichtung 2 ein Unterdruck. Fig. 37c zeigt ein im Vergleich zu Fig. 10b entgegengesetzt erregtes Biegeelement der ersten Kammer 3, weshalb das Volumen der ersten Kammer 3 verkleinert ist; und in Folge herrscht in der Druckfelderzeugungseinrichtung 2 ein Überdruck.

Die Figuren 38 a) bis 38 f) zeigen verschiedene Unter- und Seitenansichten weiterer Aspekte der zweiten Kammer 4 der vorliegenden Erfindung. Im Detail zeigt Fig. 38 a) eine Unteransicht einer kreisförmigen zweiten Kammer 4 mit einer mittig angeordneten Öffnung 51; Fig. 38 b) eine Unteransicht einer dreiecksförmigen zweiten Kammer 4 mit einer mittig angeordneten Öffnung 51; Fig. 38 c) eine Unteransicht einer ovalen zweiten Kammer 4 mit einer mittig angeordneten Öffnung 51; und Fig. 38 d) eine Unteransicht einer annähernd acht-förmigen zweiten Kammer 4 mit zwei zur Mitte versetzt angeordneten Öffnungen 51. Fig. 38 e) zeigt weiter einen Seitenquerschnitt einer erfindungsgemäßen zweiten Kammer 4, wobei die zweite Kammer 4 zusätzlich eine erweiterte Kontaktfläche 43 zur Haut bzw. ein Auflageteil 43 bzw. Aufsatzbereich 43 aufweist, um die (Ab-) Dichtfunktion der zweiten Kammer 4 an der Haut zu verbessern. Die erweiterte Kontaktfläche 43 kann zudem Rillen oder Vorsprünge aufweisen, die die Dichtfunktion noch weiter verbessern. Fig. 38 f) zeigt einen Seitenquerschnitt einer zweiten Kammer 4 mit mehreren getrennten Verbindungselementen 5 und einer erweiterten Kontaktfläche aufgrund des Auflageteils 43 bzw. des Aufsatzbereichs 43.

So kann die Form der zweiten Kammer 4 grundsätzlich an die Anatomie der zu stimulierenden erogenen Zone angepasst sein. Dabei ist die Form der Kammer 4 von Fig. 38 a) beispielsweise an die runde Form der Brust angepasst, während die Form der Kammer 4 der Fig. 38 c) besser an die Form der weiblichen Vulva angepasst ist. Weiter bestimmt die Form der zweiten Kammer 4 zudem auch die Ausprägung des erfindungsgemäßen Druckfeldes. So bestimmt die Größe der zweiten Kammer 4 im Verhältnis zu dem von der ersten Kammer 3 verdrängten Volumen die Höhe des erreichbaren Unter- bzw. Überdrucks. Weiter kann über die Nähe der Öffnung 51 des Verbindungselements 5 zu dem zu stimulierenden Hautbereich die Intensität der erfindungsgemäßen Massagewirkung auf diese bestimmt werden. Mit mehreren Öffnungen 51, vgl. Fig. 38 d), kann die Massagewirkung auch auf mehrere Bereiche verteilt werden. So kann beispielsweise die Klitoris weniger direkt an der sehr empfindlichen Klitoriseichel stimuliert werden (vgl. Fig. 38 e) ), sondern verstärkt an den die Klitoriseichel umgebenden Bereichen, um eine Überreizung der Klitoris zu vermeiden.

Fig. 39 zeigt ein Blockdiagramm eines Beispiels eines funktionellen Aufbaus einer Ausführungsform der vorliegenden Erfindung mit einer Steuereinrichtung 7, einer Antriebseinheit 6, einer Beleuchtung 9, einem An/Aus- Schalter 74, Bedienelementen 71, einer Batterie 76 und einer externen Stromversorgung 73. Dieser Grundaufbau der Steuereinrichtung 7 kann grundsätzlich Anwendung auf alle offenbarten Aspekte und Ausführungsformen finden.

Die Steuereinrichtung 7, welche beispielsweise einen Mikrocontroller aufweist oder festverdrahtet ist, steuert zunächst die Stromversorgung aller Verbraucher der Stimulationsvorrichtung 1, sowie optional einen Lade- und Entladevorgang der Batterie 76 und/oder ein Batteriemanagement. Insbesondere steuert die Steuereinrichtung 7 die Erregung der Antriebseinheit 6, beispielsweise die Größe der Auslenkung, die Frequenz, die Modulation, etc.

Optional vorgesehene Bedienelemente 71 dienen der Einstellung der Betriebsart des Gerätes, d.h. der Einstellung des Modulationsmusters des Druckfeldes. Die Bedienelemente 71 können beispielsweise als zumindest ein Drucktaster, als zumindest ein Drehschalter, oder als zumindest ein berührungsempfindlicher Schalter ausgeführt sein. Weiter können die Bedienelemente 71 ein optisches Feedback zur Betätigung, beispielsweise mittels in den Schalter integrierter Leuchtdioden (LED), abgeben.

Eine optionale Anzeige 72 dient der Information des Benutzers über den Gerätezustand und/oder den Einstellzustand. Die Anzeige 72 kann beispielsweise aus einer Mehrzahl von Leuchtdioden oder als LCD-Anzeige ausgestaltet sein. Die angezeigten Informationen können beispielsweise der Ladezustand einer optionalen Batterie oder die aktuelle Einstellung des Modulationsmusters sein.

Weiter kann die Steuereinrichtung 7 einen Speicher aufweisen, in dem zumindest ein Modulations- bzw. Stimulationsmuster (diese werden nachstehend in Zusammenhang mit Fig. 40 a) bis c) näher erläutert) abgespeichert ist. Die Antriebseinheit 6 kann nun nach Wahl des Benutzers der Stimulationsvorrichtung 1 über die Bedienelemente 71 entsprechend dieser vorgespeicherten Stimulationsmuster in seiner Erregung angesteuert werden. Die Stimulationsmuster des Druckfeldes können optional auch durch den Benutzer über die Bedienelemente individuell erstellt und abgespeichert werden.

Eine (nicht näher dargestellte) Buchse kann der externen Stromversorgung der Stimulationsvorrichtung 1 über einen externen Stecker dienen, welcher beispielsweise an einen externen Netzadapter angeschlossen ist. Um die Spritzwasserfestigkeit der Stimulationsvorrichtung 1 sicherzustellen, kann auch anstelle der Buchse ein magnetischinduktiver Übertrager vorgesehen sein, welcher eine Leistungsübertragung in die Stimulationsvorrichtung 1 ohne einen elektrischen leitenden Kontakt ermöglicht. Vorzugsweise weist die Stimulationsvorrichtung 1 zudem eine Batterie, beispielsweise einen Nickel-Metalhydrid-Akku (NiMH) oder einen Lithium-Ionen-Akku, für einen kabellosen Betrieb auf. Alternativ kann auch ein (längeres) Stromversorgungskabel aus der Stimulationsvorrichtung herausgeführt sein.

Fig. 40 a) zeigt den zeitlichen Verlauf eines Gesamtdrucks p in der Druckfelderzeugungseinrichtung (2) bei Anwendung dieser zur Stimulation. Die gestrichelte Linie gibt den Referenzdruck, beispielsweise den aktuell herrschende atmosphärischen (Luft-) Druck, an, welcher außerhalb der Druckfelderzeugungseinrichtung (2) vorhanden ist. Wird die zweite Kammer 4 nun auf das zu stimulierende Körperteil 11 aufgesetzt, wird dieser anfangs herrschende Umgebungsdruck, der ebenso in dem Hohlraum 10 der Druckfelderzeugungseinrichtung (2) vorhanden ist, in etwa beibehalten. Nunmehr wird angenommen, dass die zweite Kammer 4 auf das zu stimulierende Körperteil weitgehend dicht aufgesetzt ist. Nach Aktivierung der Stimulationsvorrichtung wird die Antriebseinheit 6 von der Steuereinrichtung 7 gemäß einem vorgespeicherten Stimulationsmusters angesteuert bzw. erregt. Entsprechend werden sich das Volumen der ersten Kammer 3 und damit der Druck und die Strömungen in der Druckfelderzeugungseinrichtung 2 ändern, wobei die Druckänderungen folglich auf den anfangs herrschenden Referenzdruck oder den Normaldruck aufmoduliert werden. Das in Fig. 40 a) beispielhaft gezeigte Druck- bzw. Stimulationsmuster entwickelt ein gepulstes, regelmäßiges Druckfeld mit sich zeitlich abwechselnden Unter- und Überdrücken. In Phasen der Erhöhung des Drucks wird die zu stimulierende erogene Zone angeblasen bzw. massiert, während in den Zeiten, in denen ein Unterdruck herrscht, die Durchblutung des Körperteils 11, beispielsweise der Klitoris, gefördert wird. So existieren erfindungsgemäß Zeiträume (In Fig. 40 a) mit I) gekennzeichnet), in denen ein Unterdruck herrscht, während die Klitoris gleichzeitig indirekt stimuliert wird.

Fig. 40 b) zeigt drei Beispiele von alternativen Stimulationsmustern. So ist in dem mit II) gekennzeichneten Bereich ein gepulstes Stimulationsmuster mit hoher Amplitude dargestellt. In dem mit III) gekennzeichneten Bereich ist ein gepulstes Stimulationsmuster mit niedriger Amplitude dargestellt. Weiter ist in dem mit IV) gekennzeichneten Bereich ein in der zeitlichen Abfolge und in der Amplitude unregelmäßiges bzw. asymmetrisches Stimulationsmuster abgebildet. Die Muster können je nach körperlicher Wirkung / Anwendung und nach individuellen Wünschen variiert werden.

Fig. 40 c) zeigt ein weiteres Beispiel eines alternativen Stimulationsmusters. So kann die Stärke des Drucks mit der Zeit zunehmen, um sich an den Erregungszustand des Benutzers anzupassen.

Nachstehend werden zusätzliche Weiterbildungen der Stimulationsvorrichtung 1 dargelegt. Alle vorliegend offenbarten Merkmale, Ausführungsformen, Aspekte und Weiterbildungen der Stimulationsvorrichtung 1 können beliebig miteinander kombiniert werden, solange dies für den Fachmann technisch machbar ist.

Die Stimulationsvorrichtung 1 gemäß einem weiteren Aspekt der Erfindung kann beispielsweise derart vorgesehen sein, dass das Verbindungselement 5 ein Kanal ist, dessen Öffnung 33 in die erste Kammer 3 oval ist; und wobei die Öffnung 51 des Kanals in die zweite Kammer 4 rund ist.

Die Stimulationsvorrichtung 1 gemäß einem weiteren Aspekt der Erfindung kann beispielsweise derart vorgesehen sein, dass das Verbindungselement 5 zumindest abschnittsweise ein einzelner gerader verlaufender Kanal ist; und/oder der Kanal des Verbindungselements 5 starr ist; und/oder das zumindest eine Verbindungselement 5 strömungstechnisch derart ausgestaltet ist, dass bei Verringerung des Volumens der ersten Kammer 3 die resultierende Strömung des Mediums auf die erogene Zone, vorzugsweise auf die Klitoris 12, ausgerichtet ist.

Die Stimulationsvorrichtung 1 gemäß einem weiteren Aspekt der Erfindung kann beispielsweise derart vorgesehen sein, dass das Verbindungselement 5 das Dämpfungselement 54 aufweist.

Die Stimulationsvorrichtung 1 gemäß einem weiteren Aspekt der Erfindung kann beispielsweise derart vorgesehen sein, dass zumindest ein Bedienelement 71 vorgesehen ist, das an dem rückwärtigen bzw. hinteren Ende 91 des Gehäuses 8 vorgesehen ist.

Die Stimulationsvorrichtung 1 gemäß einem weiteren Aspekt der Erfindung kann beispielsweise derart vorgesehen sein, dass das in der zweiten Kammer 4 erzeugte Druckfeld aus einem Muster von Unter- und Überdrücken besteht, welche auf einen Referenzdruck, vorzugsweise auf den Normaldruck, aufmoduliert sind.

Die Stimulationsvorrichtung 1 gemäß einem weiteren Aspekt der Erfindung kann beispielsweise derart vorgesehen sein, dass die erste Kammer 3 strömungstechnisch ausschließlich mit der zweiten Kammer 4 verbunden ist.

Die Stimulationsvorrichtung 1 gemäß einem weiteren Aspekt der Erfindung kann beispielsweise derart vorgesehen sein, dass die zweite Kammer 4 aus einem flexiblen Material, vorzugsweise aus Silikon oder Kautschuk, hergestellt ist und/oder aus einem zumindest teilweise durchsichtigen Material hergestellt ist und/oder an die Form der vaginalen labia minora derart angepasst ist, dass diese von der Öffnung 41 der zweiten Kammer 4 vollständig abgedeckt wird, oder dass die Öffnung 41 der zweiten Kammer 4 zwischen die vaginalen labia minora eingefügt werden kann

Die Stimulationsvorrichtung 1 gemäß einem weiteren Aspekt der Erfindung kann beispielsweise derart vorgesehen sein, dass die zweite Kammer 4 mit dem Verbindungselement 5 und der ersten Kammer 3 einstückig ausgebildet ist. Ebenso kann die Wand des Hohlraums 10 einstückig vorgesehen sein.

Die Stimulationsvorrichtung 1 gemäß einem weiteren Aspekt der Erfindung kann beispielsweise derart vorgesehen sein, dass die zweite Kammer 4 von der Stimulationsvorrichtung 1 auswechselbar angeordnet ist.

Die Stimulationsvorrichtung 1 gemäß einem weiteren Aspekt der Erfindung kann beispielsweise derart vorgesehen sein, dass die zweite Kammer 4 einen Auflageteil 43 bzw. einen Aufsatzbereich 43 aufweist, welches/welcher die Kontaktfläche 43 der zweiten Kammer 4 auf der Haut vergrößert, um eine Abdichtwirkung der zweiten Kammer 4 zu verbessern.

Die Stimulationsvorrichtung 1 gemäß einem weiteren Aspekt der Erfindung kann beispielsweise derart vorgesehen sein, dass die Stimulationsvorrichtung 1 zumindest ein Bedienelement 71 aufweist, mit dem die Modulation des Druckfeldes eingestellt werden kann.

Die Stimulationsvorrichtung 1 gemäß einem weiteren Aspekt der Erfindung kann beispielsweise derart vorgesehen sein, dass die Stimulationsvorrichtung 1 eine Beleuchtung 9, vorzugsweise eine LED-Beleuchtung, zur Beleuchtung der zweiten Kammer 4 aufweist.

Die Stimulationsvorrichtung 1 gemäß einem weiteren Aspekt der Erfindung kann beispielsweise derart vorgesehen sein, dass das Verbindungselement 5 eine innere Formgebung und eine Öffnung zur zweiten Kammer 4 aufweist, welche derart ausgestaltet sind, dass das Druckfeld in Richtung und Ausprägung moduliert wird.

Es kann beispielsweise ein Verfahren zur Stimulation von Körperteilen, insbesondere der Klitoris (12) vorgesehen sein, welches die folgenden Schritte aufweist:
- Aufbauen eines auf das Körperteil (11) gerichteten Druckfeldes, wobei
- das Druckfeld aus einem Muster von Unter- und Überdrücken besteht, welche auf einen Referenzdruck, vorzugsweise auf den Normaldruck, aufmoduliert sind.

Das vorstehende Verfahren kann dadurch fortgebildet werden, dass die Stimulationswirkung durch eine Modulation des Druckfeldes individuell beeinflusst wird.

Weiter kann das Druckfeld gepulst sein.

Mit der erfindungsgemäßen Stimulationsvorrichtung kann weiter beispielsweise ein Verfahren durchgeführt werden, das die folgenden Schritte aufweist:
- Aufsetzen der zweiten Kammer (4) auf das Körperteil (11), vorzugsweise über der Klitoris (12); und
- Aufbauen eines sich zeitlich verändernden Druckfeldes, welches aus einem Muster von Unter- und Überdrücken besteht, welche auf einen Referenzdruck, vorzugsweise auf den Normaldruck, aufmoduliert sind; und
- Absetzen der zweiten Kammer (4) von dem Körperteil (11).

Sämtliche in dieser Beschreibung erläuterten Verfahren dienen nicht therapeutischen oder medizinischen Zwecken, sondern nur für nicht-medizinische und nicht-therapeutische Zwecke. So dienen die vorliegenden Verfahren dem sexuellen Vergnügen.

Ebenso ist eine Verwendung der Stimulationsvorrichtung 1 als Sexspielzeug zur Stimulation der weiblichen Klitoris vorgesehen.

Die Erfindung lässt neben den erläuterten Ausführungsformen weitere Gestaltungsgrundsätze zu. So können verschiedene Anordnungen bzw. Aufbauten der ersten Kammer 3 beliebig mit verschiedenen Ausführungen der zweiten Kammer 5 oder dem Verbindungselement 5 kombiniert werden.

Obschon bei allen Ausführungsformen nur eine erste Kammer 3 dargestellt ist, können auch zwei oder mehr erste Kammern 3 vorhanden sein, welche dann entsprechend simultan oder zeitversetzt derart angetrieben werden, dass diese Ihr Volumen ändern, um ein erfindungsgemäßes Druckfeld aufzubauen.

Obschon bei allen Ausführungsformen nur eine Öffnung aus der ersten Kammer 3 zu dem Verbindungselement 5 dargestellt ist, so können auch mehrere Öffnungen für ein Verbindungselement 5 oder auch mehrere Öffnungen für mehrere Verbindungselemente 5 in der ersten Kammer 3 vorhanden sein.

Obschon bei allen Ausführungsformen spezielle Winkel und Winkelbereiche angegeben sind, so können diese Winkel und Winkelbereiche auch jeweils bei anderen Ausführungsformen zur Anwendung kommen.

Die erfindungsgemäßen Stimulationsmuster können von dem in den Figuren 40 a), b) und c) gezeigten Mustern abweichen, solange diese eine zeitliche Abfolge von Unter- und Überdrücken aufweisen. Beispielsweise kann zu Beginn bzw. nach Aktivierung der Vorrichtung zunächst ein relativ lang anhaltender Unterdruck aufgebaut sein (beispielsweise 3 Minuten), um die Durchblutung der zu stimulierenden Zone effektiv zu erhöhen, worauf dann langsam in der Amplitude größer werdende Pulse von Unter- und Überdrücken folgen.

### Bezugszeichenliste:

- 1: Stimulationsvorrichtung
- 2: Druckfelderzeugungseinrichtung
- 3: erste Kammer
- 4: zweite Kammer
- 5: Verbindungselement
- 6: Antriebseinheit
- 7: Steuereinrichtung
- 8: Gehäuse
- 9: Beleuchtung
- 10: Hohlraum
- 11: Körperteil oder erogene Zone
- 12: Klitoris
- 31: Wand des Hohlraums und beispielsweise der ersten Kammer
- 32: Halterung
- 33: Öffnung des Hohlraums und beispielsweise der ersten Kammer
- 34: Übergangselement
- 41: Wand des Hohlraums und beispielsweise der zweiten Kammer
- 42: Öffnung des Gehäuses und vorzugsweise des Hohlraums und beispielsweise der zweiten Kammer
- 43: Kontaktfläche bzw. Aufsatzbereich
- 51: Öffnung des Verbindungselements zur zweiten Kammer
- 52: gerade verlaufender Kanalabschnitt
- 53: S-förmig verlaufender Kanal
- 54: Dämpfungselement
- 55: Befestigungsabschnitt des Dämpfungselements
- 61: Antriebswelle
- 62: Exzenter
- 63: Kolben
- 64: Biegeelement
- 65: Motorhalterung
- 66/67: Motoranschlüsse bzw. Motorpole (Plus/Minus)
- 71: Bedienelement
- 72: Anzeige
- 73: Stromversorgung
- 74: An/Aus- Schalter
- 75: Buchse für Stromversorgung
- 751: Buchsenverschluss
- 76: Batterie
- 77: Steuerplatine
- 80: Längsachse
- 81: Ausrichtungsachse
- 82: Mittenachse der Motorachse
- 83: Öffnungsebene
- 85: Kappe
- 851: Anschlagkante der Kappe
- 852: Logofläche
- 86: hinterer Abschnitt
- 861: Anschlagkante des Gehäuses
- 862: Rastverschluss
- 863: versenkte bzw. zurückgesetzte Endfläche
- 88: mittlerer Abschnitt
- 89: Griffflächen
- 90: vorderes Ende
- 91: hinteres Ende
- 110: Halterung
- 111: Haltearme
- 112: halterungsseitige Ladespule
- 113: stimulationsvorrichtungsseitige Ladespule
- 114: Haltebeine
- 115: Halterungsfuß
- 116: Stromversorgungskabel
- 117: Halterungsbecher
- 140: Fortsatz
- 141: Gelenk
- 142: Vibrationsvorrichtung
- MA: Masseschwerpunkt

## Patentansprüche

1. Stimulationsvorrichtung (1) für die Klitoris (12), umfassend:
ein Gehäuse (8) mit einem Hohlraum (10), der ein Volumen definiert, und der wenigstens eine Wand aufweist, die wenigstens teilweise aus einem flexiblen Material besteht, und
eine Druckfelderzeugungseinrichtung (2) mit einer Antriebseinheit (6), die in dem Hohlraum (10) ein Druckfeld aus sich zeitlich abwechselnden Unter- und Überdrücken erzeugt, die auf den Normaldruck aufmoduliert sind,
eine Steuereinrichtung (7), die die Antriebseinheit (6) ansteuert; wobei das Gehäuse (8) eine Längsachse (80) aufweist, die sich von einem vorderen Ende (90) des Gehäuses (8) bis zu einem hinteren Ende (91) des Gehäuses (8) erstreckt, und
in dem vorderen Ende (90) des Gehäuses (8) eine Öffnung (42) zum Aufsetzen über die Klitoris (12) vorgesehen ist, und wobei
der Hohlraum (10) mit der Öffnung (42) des Gehäuses (8) verbunden ist.

2. Stimulationsvorrichtung (1) gemäß Anspruch 1, wobei die Öffnung (42) des Gehäuses (8) eine Öffnungsebene definiert, die mit der Längsachse (80) des Gehäuses (8) einen Winkel größer etwa 30 Grad, vorzugsweise zwischen etwa 35 Grad und etwa 65 Grad, insbesondere zwischen etwa 40 Grad und etwa 50 Grad, oder größer etwa 80 Grad, insbesondere etwa 90 Grad, einschließt.

3. Stimulationsvorrichtung (1) gemäß Anspruch 1 oder 2, wobei
die Öffnung (42) des Gehäuses (8) derart angeordnet ist, dass die Längsachse (80) des Gehäuses (8) durch die Öffnung (42) des Gehäuses (8) durchtritt.

4. Stimulationsvorrichtung (1) gemäß einem der vorhergehenden Ansprüche, wobei
der Hohlraum (10) durch die Antriebseinheit (6) derart mit Kräften beaufschlagbar ist, dass in dem Hohlraum (10) ein in Richtung der Längsachse (80) des Gehäuses (8) wirkendes Druckfeld erzeugt wird, das in dem Hohlraum (10) auf die Klitoris (12) zu deren Stimulation ausgerichtet ist, wenn die Öffnung (42) des Gehäuses (8) über die Klitoris (12) aufgesetzt ist.

5. Stimulationsvorrichtung (1) gemäß einem der vorhergehenden Ansprüche, wobei
das Gehäuse (8) in Längsrichtung benachbart zu dem vorderen Ende (90) einen zum Halten der Stimulationsvorrichtung (1) mit einer Hand ausgebildeten mittleren Abschnitt (88) aufweist, der entlang der Längsachse sowie in Umfangsrichtung um die Längsachse (80), insbesondere nur über einen Umfangsabschnitt, erstreckend ausgebildet und angeordnet ist.

6. Stimulationsvorrichtung (1) gemäß einem der vorhergehenden Ansprüche, wobei sich
der mittlere Abschnitt (88) über mindestens 30%, vorzugsweise über mindestens 40%, noch weiter bevorzugt mindestens 50% der Axialerstreckung der Längsachse (80) und optional bis maximal 70% der Axialerstreckung der Längsachse (80) erstreckt.

7. Stimulationsvorrichtung (1) gemäß einem der vorhergehenden Ansprüche, wobei die Stimulationsvorrichtung (1) einen Masseschwerpunkt (MA) aufweist, der in Längsrichtung betrachtet näher an dem hinteren Ende (91) als an dem vorderen Ende (90) angeordnet ist.

8. Stimulationsvorrichtung (1) gemäß einem der vorhergehenden Ansprüche, wobei die Längsachse (80) im Wesentlichen eine Symmetrieachse des Gehäuses (8) darstellt.

9. Stimulationsvorrichtung (1) gemäß einem der vorhergehenden Ansprüche, wobei
die Wand (41) die Öffnung (42) des Gehäuses (8) und des Hohlraums (10) ausbildet, und/oder
die Wand (41) an dem vorderen Ende (90) einen Teil der Außenwand des Gehäuses (8) ausbildet.

10. Stimulationsvorrichtung (1) gemäß einem der vorhergehenden Ansprüche, wobei der Hohlraum eine Ausrichtungsachse (81) aufweist, die durch die Ausrichtung der Strömungen eines Mediums des Druckfelds im vorderen Ende des Gehäuses (8) definiert ist; und
die Ausrichtungsachse (81) mit der Längsachse (80) einen Winkel einschließt, welcher kleiner oder gleich 50 Grad, vorzugsweise kleiner oder gleich 35 Grad ist; oder
die Ausrichtungsachse (81) im Wesentlichen parallel zur Längsachse (80) angeordnet ist.

11. Stimulationsvorrichtung (1) gemäß einem der vorhergehenden Ansprüche, wobei die Antriebseinheit (6) ein Elektromotor mit einer Antriebswelle (61) ist; und
die Mittelachse (82) der Antriebwelle (61) des Elektromotors im Wesentlichen parallel oder koaxial zur Ausrichtungsachse (81) angeordnet ist.

12. Stimulationsvorrichtung (1) gemäß einem der vorhergehenden Ansprüche, wobei
die Druckfelderzeugungseinrichtung (2) eine flexible Wand (31) aufweist, welche durch die Antriebseinrichtung (6) ausgelenkt werden kann; und
die Richtung der Auslenkung der flexiblen Wand (31) durch die Antriebseinheit (6) unter einem Winkel, vorzugsweise > 45 Grad ≤ 90 Grad, insbesondere 90 Grad, zur Ausrichtungsachse (81) vorgesehen ist.

13. Stimulationsvorrichtung (1) gemäß einem der vorhergehenden Ansprüche, wobei
das Gehäuse (8) stiftförmig ausgebildet ist und das stiftförmige Gehäuse (8) benachbart zu dem vorderen Ende (90) einen mittleren Abschnitt (88) aufweist, der zumindest zwei Griffflächen (89) aufweist.

14. Stimulationsvorrichtung (1) gemäß einem der vorhergehenden Ansprüche, wobei das Gehäuse (8) benachbart zu dem vorderen Ende (90) den mittleren Abschnitt (88) aufweist, der vollständig als Griffabschnitt ausgebildet ist.

15. Stimulationsvorrichtung (1) gemäß einem der vorhergehenden Ansprüche, wobei
das vordere Ende (90) des Gehäuses (8) aus Silikon oder Gummi besteht, und als Kopf der Stimulationsvorrichtung (1) vorzugsweise auswechselbar ausgestaltet ist.
